(19) **Europäisches Patentamt**
**European Patent Office**
**Office européen des brevets**

(11) **EP 2 143 773 B1**

(12) **EUROPÄISCHE PATENTSCHRIFT**

(45) Veröffentlichungstag und Bekanntmachung des Hinweises auf die Patenterteilung:
**27.04.2011 Patentblatt 2011/17**

(51) Int Cl.:
***C09J 133/00*** *(2006.01)*

(21) Anmeldenummer: **09164741.2**

(22) Anmeldetag: **07.07.2009**

(54) **Haftklebemassen und Verfahren zu deren Herstellung**

Adhesive masses and method for their manufacture

Masses adhésives et procédé destiné à leur fabrication

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **11.07.2008 DE 102008032571**

(43) Veröffentlichungstag der Anmeldung:
**13.01.2010 Patentblatt 2010/02**

(73) Patentinhaber: **TESA SE**
**20253 Hamburg (DE)**

(72) Erfinder:
• **Prenzel, Alexander, Dr.**
**20259 Hamburg (DE)**
• **Beschmann, Jennifer**
**20259 Hamburg (DE)**

(56) Entgegenhaltungen:
**EP-A- 1 300 455**

## Beschreibung

Die vorliegende Erfindung betrifft Haftklebemassen, die bevorzugt als wässriges System (Dispersions- oder Emulsionsklebemassen) vorliegen und/oder Haftklebemassen, die lösungsmittelfrei prozessiert werden können (Hotmelt-Haftklebemassen). Die erfindungsgemäßen Haftklebemassen zeichnen sich neben guter Verarbeitbarkeit und insbesondere Beschichtbarkeit durch gute Produkteigenschaften aus. Die Erfindung umfasst die Zusammensetzung neuartiger Haftklebemassenformulierungen, deren Herstellung, Verarbeitung und Verwendung in selbstklebenden Produkten. Ferner ist ein neuartiges Konzept Teil dieser Erfindung, über das die Kombination aus guter Verarbeitbarkeit und guten Produkteigenschaften für solche Haftklebemassenformulierungen realisiert werden kann.

## Stand der Technik

Im Bereich der Klebstoffe zeichnen sich Haftklebstoffe insbesondere durch ihre permanente Klebrigkeit aus. Ein Material, das permanente Klebrigkeit aufweist, muss zu jedem Zeitpunkt eine geeignete Kombination aus adhäsiven und kohäsiven Eigenschaften aufweisen. Dies unterscheidet es beispielsweise von reaktiven Klebstoffen, die im nicht ausreagierten Zustand kaum Kohäsion bieten. Für gute Produkteigenschaften gilt es, Haftklebemassen so einzustellen, dass die Balance aus adhäsiven und kohäsiven Eigenschaften optimal austariert ist. Diese Balance wird typischerweise dadurch erreicht, dass Polymerketten, die in Haftklebemasseformulierungen enthalten sind, in weitmaschige Netzwerke umgewandelt werden. Die Natur des Netzwerks hat dabei einen entscheidenden Einfluss auf die adhäsiven und kohäsiven Eigenschaften der Haftklebemasse. Ein Material mit ausgeprägter Vernetzung zeigt zwar gute Kohäsion, doch ist die Nachgiebigkeit reduziert, so dass sich das Material nur unzureichend an die Rauhigkeit einer Substratoberfläche anpassen kann. Zudem kann ein Material mit ausgeprägter Vernetzung nur in geringerem Maße Verformungsenergie, wie sie unter Belastung auftritt, dissipieren. Durch beide Phänomene wird die Klebkraft reduziert. Ein geringfügig vernetztes Material dagegen kann zwar gut auf raue Oberflächen auffließen und Verformungsenergie dissipieren, so dass die Anforderungen an die Adhäsion erfüllt sein können, jedoch widersteht das Material auf Grund einer reduzierten Kohäsion auf nur unzureichende Weise einer Belastung.

Eine Vernetzungsart, die einen Einfluss auf die Adhäsions/Kohäsions-Balance hat, sind temporäre Polymerkettenverschlaufungen. Diese reichen jedoch nur dann für eine genügende Kohäsion der Haftklebemasse aus, wenn die Molmasse der Polymere hinreichend hoch ist. Haftklebemassen basierend auf Naturkautschuken können alleinig auf diesem Vernetzungsprinzip beruhen. Weitere Möglichkeiten, die Vernetzung der Haftklebemasse einzustellen, sind chemische und damit irreversible Vernetzungen. Eine chemische Vernetzung kann ferner durch strahlenchemische Behandlung der Haftklebemassen erreicht werden. Weiterhin ist es möglich, physikalische Vernetzungsprinzipien zu nutzen. Beispiele für solche, typischerweise thermoreversiblen Vernetzungen in Haftklebemassen liegen in thermoplastischen Elastomeren wie in einigen Blockcopolymeren oder semikristallinen Polymeren vor.

Neben den angesprochenen Vernetzungsprinzipien können auch Füllstoffe zur Steigerung der Kohäsion eingesetzt werden. Dabei führt häufig eine Kombination aus Füllstoff/Füllstoff-Wechselwirkungen und Füllstoff/Polymer-Wechselwirkungen zu der gewünschten Verstärkung der Polymermatrix. Eine hierauf basierende Kohäsionssteigerung stellt eine weitere physikalische Vernetzungsart dar.

Für Füllstoffe, die im Hinblick auf einen verstärkenden Effekt in Haftklebemassen genannt werden, ist insbesondere die Klasse der pyrogenen Kieselsäuren zu nennen. Sie werden u. a. als Verdickungsmittel, Gelierungsmittel oder Thixotropiermittel in Fluiden unterschiedlichster Art eingesetzt, wobei man ihren Einfluss auf die rheologischen Eigenschaften der Fluide nutzt. Dabei wird der Einsatz von hydrophiler und hydrophober Kieselsäure beschrieben. Beispiele für die Verwendung von pyrogener Kieselsäure auf dem Gebiet der Haftklebemassen sind in US 20060205835 durch tesa AG, US 4,710,536 durch 3M und in EP 108 32 04 B1 durch Dow Corning beschrieben.

Als weitere Beispiele für wasserbasierende Klebemassen wurden in US 20070267133 A1 durch Lintec Corp. und in DE 10015981 A1 durch tesa AG die Verwendung von organischen, in Wasser dispergierten Füllstoffen zur Verbesserung der Produkteigenschaften beschrieben. Jedoch muss darauf geachtet werden, dass die Stabilität der Dispersionsklebemasse nicht durch den Zusatz an Füllstoffen beeinflusst wird und eine Agglomeration oder eine Flokkulierung der Latexpartikel auftritt, wodurch die Verarbeitbarkeit nicht mehr gegeben wäre.

In allen diesen Fällen resultiert die Verstärkung durch einen Einfluss der Partikel auf den Elastizitätsmodul des Elastomerkomposits. Die Wechselwirkung wird dabei durch physikalische Wechselwirkungen zwischen einzelnen Partikeln einerseits und Partikeln und Polymeren andererseits hervorgerufen. Oftmals reichen diese physikalischen Wechselwirkungen jedoch nicht aus, um bereits geringen mechanischen Deformationen, wie sie beispielsweise bei der Belastung einer Haftklebemassenfuge durch Scherung oder Schälung auftreten können, zu widerstehen. Dieses nichtlineare Phänomen ist als Payne-Effekt bekannt und äußert sich als Elastizitätsmodulverlust unter Deformation. Eine Übersicht zur Beschreibung dieses Effekts und zu verschiedenen mechanistischen Erklärungsansätzen geben Heinrich und Klüppel [G. Heinrich, M. Klüppel, Adv. Polym. Sci. 2002, 160, 1 - 44].

Im vorangegangenen Teil wurden verschiedene Beispiele für Vernetzungsarten gegeben, wie sie in Haftklebemassen zur Verbesserung der Produkteigenschaften, insbesondere der Kohäsion, angewendet werden können. Für jede dieser Vernetzungsarten stellt sich die Frage, inwieweit sie einen Einfluss auf die Verarbeitungseigenschaften und hier insbesondere das Beschichtungsverhalten haben. Eine diesbezügliche Diskussion wird im Folgenden vorgenommen.

Neben den Produkteigenschaften und damit der optimalen Balance aus adhäsiven und kohäsiven Eigenschaften einer Haftklebemasse ist auch ihre Verarbeitbarkeit von zentraler Bedeutung. Im Allgemeinen verringert sich die Verarbeitbarkeit durch die Vernetzung einer Formulierung. Meistens wird die Verarbeitbarkeit sogar unmöglich. Daher ist es vorteilhaft, die Vernetzung erst während oder nach der Verarbeitung insbesondere während oder nach der Beschichtung durchzuführen oder zu initiieren. Resultiert der Vernetzungszustand jedoch aus der bloßen Existenz eines Bestandteils in der Formulierung, wie es bei den oben genannten Füllstoffen der Fall ist, dann wird bereits eben dadurch das Verarbeitungsverhalten beeinträchtigt. Polymere mit hohen Molmassen zählen ebenso zu Formulierungsbestandteilen, die aufgrund ihres Verschlaufungszustands vorteilhafte Produkteigenschaften aufweisen, aber in der Verarbeitbarkeit - ebenfalls aufgrund ihres Verschlaufungszustands - Nachteile zeigen können. In beiden Fällen, also bei Verschlaufungen und Füllstoffen, wirken sich die physikalischen Prinzipien, die zur Vernetzung des Haftklebemassensystems und damit vorteilhaften Produkteigenschaften führen, negativ auf das Verarbeitungsverhalten, insbesondere die Beschichtbarkeit, aus.

Klassische Ansätze, dieses Dilemma zu umgehen, beruhen auf der Verwendung von Lösungsmitteln als Prozesshilfsmitteln. Ein gesteigertes Umweltbewusstsein und der Wunsch nach immer effizienteren Produktionsverfahren begründen jedoch den Trend zu lösungsmittelfreien Prozessen (wässrige oder Hotmelt-Systeme). Im Vergleich zu lösungsmittelhaltigen Verarbeitungsverfahren weisen die polymerbasierenden Haftklebstoffrohmassen bei den sogenannten Hotmelt-Verfahren (Heißschmelz-Verfahren) in ihrer Schmelze durch die Verschlaufungen und/oder Füllstoffpartikel einen Vernetzungszustand auf, der mit deutlich höheren Viskositäten und Elastizitäten verbunden ist. Bei Polymerdispersionen führen Füllstoffe eher zu einer Instabilität der Dispersion, dennoch können die zuvor beschriebenen Effekte beim Trocknen auftreten und somit ebenfalls die Prozessierbarkeit beeinflussen bzw. zu einem mangelhaften Beschichtungsbild aufgrund beeinträchtigter Mobilität der Polymere, welche bei der Emulsionspolymerisation besonders hohe Molmassen aufweisen, führen.

Im Gegensatz zu physikalischen Vernetzungsarten bieten chemische Vernetzungsmethoden den Vorteil, dass die Netzwerkbildung durch geeignete Prozessführung erst während der Verarbeitung initiiert werden kann. Jedoch ist die Verwendung chemischer Vernetzer durch ihre Reaktivität über die Topfzeit limitiert. Bildet sich das Netzwerk in einer zu ausgeprägten Weise, bevor das Material beschichtet ist, dann führt die bereits gestiegene Elastizität zu einer Verschlechterung der Verarbeitungseigenschaften, und es können Beschichtungsbilder verminderter Qualität resultieren.

Bei den Dispersionsklebemassen ergibt sich die Schwierigkeit, dass der chemische Vernetzer nicht mit der kontinuierlichen Phase, dem Wasser, reagieren darf, da er sonst nicht mehr zur Vernetzung des Polymers befähigt ist. Dies kann zum einen durch den Einsatz spezieller Monomere und darauf abgestimmter Vernetzungssysteme, die sehr selektiv reagieren, geschehen, wie in US 6,417,267 B1 von Eastman Chemical Company beschrieben, umgangen werden. Eine andere Möglichkeit, wie in JP 8053596 A von Soken Kagaku, ist die Verwendung von Molekülen mit blockierten Funktionalitäten. Weiterhin wurde in WO 2006029407 A2 von Corium International Inc. die Verwendung reaktiver Polymerblends mit niedrigen Glasübergangstemperaturen beschrieben, die erst beim Entfernen des Wassers und während der Filmbildungsphase miteinander reagieren. Doch ist davon auszugehen, dass solche Systeme eine nur begrenzte Topfzeit aufweisen, da der Kontakt zweier komplementärer Latexpartikel zu einer Reaktion führen kann und somit die Dispersion aufgrund der Agglomerate instabil wird.

Eine besondere Schwierigkeit ergibt sich auch bei lösungsmittelfreien Systemen, da hier erhöhte Temperaturen für die Verarbeitung notwendig sind, was gleichzeitig zu einer Beschleunigung der chemischen Vernetzungsreaktion führt. Ein Beispiel für ein solches System wird in US 20050129936 A1 durch tesa AG beschrieben. Strahlenchemische Vernetzungsmethoden erscheinen in diesem Sinne vorteilhaft, da erst nach der Beschichtung die Netzwerkbildung gezielt initiiert wird, wie es beispielsweise in EP 153 21 82 A1 durch tesa AG und EP 167 68 70 A1 durch National Starch vorgeschlagen wird. Um jedoch Netzwerke mit einer Struktur zu erhalten, die den späteren Produktanforderungen im Hinblick auf Scherfestigkeit genügen, sind abermals Polymere mit recht hoher Molmasse erforderlich, die wiederum durch ihren Verschlaufungszustand Nachteile im Verarbeitungsverhalten aufweisen können.

Typischerweise verschlechtert sich die Verarbeitbarkeit eines Materials mit der Erhöhung seiner Elastizität. Netzwerkbildung führt dabei immer zu einer Steigerung des Speichermoduls und damit höherer Elastizität. In Folge dessen verschlechtert sich die Fließfähigkeit, die zur Verarbeitung und zum Beschichten benötigt wird, oder geht sogar gänzlich verloren. Bei der Beschichtung können dann Inhomogenitäten im Beschichtungsbild bis hin zum Schmelzebruch auftreten. Verschiedene Autoren beschreiben dieses Phänomen insbesondere für Kapillar- und Extrusionsdüsen. Literatur hierzu ist bei Pahl et al. [M. Pahl, W. Gleißle, H.-M. Laun, Praktische Rheologie der Kunststoffe und Elastomere, 4. Aufl., 1995, VDI Verlag, Düsseldorf, S. 191f] und Tanner [R. I. Tanner, Engineering Rheology, 2. Aufl., 2000, Oxford University Press, Oxford, S. 523f] zu finden.

Es werden daher Systeme gesucht, die bevorzugt aus Dispersion und/oder lösungsmittelfrei beschichtbar sind und die eine Kombination aus guten Produkteigenschaften einerseits - und zwar hier insbesondere im Bezug auf Kohäsion - aufweisen und andererseits verbesserte Verarbeitungseigenschaften, insbesondere Beschichtbarkeit zeigen.

Ein besonders vorteilhaftes Beispiel für Systeme, die dieser Anforderungskombination zumindest zum Teil genügen, stellen Blockcopolymere dar, die Segmente enthalten, die bei hohen Temperaturen erweichen (die so genannte Hartphase), und andere, die bei Anwendungstemperatur geschmolzen vorliegen. Die Erweichungstemperatur der Hartphase ist durch die Verwendung spezieller Monomere typischerweise so eingestellt, dass bei Raumtemperatur gute Produkteigenschaften vorherrschen, das Material aber bei prozesstechnisch sinnvollen Temperaturen auf einfache Weise aus der Schmelze beschichtet werden kann. Da diese Materialien typischerweise keine hohen Molmassen aufweisen, liegt ihre Schmelzviskosität und die Elastizität, sobald die Hartphase erweicht vorliegt, vergleichsweise niedrig.

Nachteilig an den angesprochenen Haftklebemassen basierend auf Blockcopolymeren ist jedoch ihre Wärmescherfestigkeit, die durch die bei erhöhter Temperatur einsetzende Erweichung der Hartdomänen limitiert ist. Als ein weiterer Nachteil sind die aufwendigen Herstellungsbedingungen für Blockcopolymere zu nennen. Um Polymere mit der geforderten blockartigen Struktur in ausreichender Qualität herstellen zu können, sind kontrollierte oder lebende Polymerisationsverfahren erforderlich, die zum Teil aufwendig sind. Zudem sind nicht immer alle Monomerkombinationen auf einfache Weise realisierbar. Damit ist der Blockcopolymeransatz einerseits nicht als universell also flexibel für viele Polymersysteme anzusehen. Andererseits besteht der Bedarf an Haftklebemassen mit einer besseren Wärmescherfestigkeit.

Ein ähnlicher Ansatz wurde von S. Kirsch et al. mit dem Einsatz von Latexpartikeln mit spezieller Morphologie verfolgt [S. Kirsch, M. Kutschera, N.-Y. Choi, T. Frechen, J. Appl. Pol. Sci. 2006, 101, 1444-1455]. Als Saat wurde ein Polymer mit einer niedrigen Glasübergangstemperatur gewählt, welches nach der Filmbildung maßgeblich die adhäsiven Eigenschaften bestimmt. Anschließend wurde eine nächste Stufe auf die Saatpartikel polymerisiert, wobei dieses Polymer zum einen eine hohe Glasübergangstemperatur aufweist und durch Ausbildung kristalliner Domänen wie im Falle der Blockcopolymere zur Kohäsion beiträgt und zum anderen aufgrund von Phaseninkompatibilitäten die Saat nicht komplett als Schale umhüllt sondern sich kleine Domänen ausbilden. Es hat sich gezeigt, dass keine signifikante Steigerung der Kohäsion gerade auch bei höheren Temperaturen erzielt werden konnte.

Oberflächenfunktionalisierte Füllstoffe, insbesondere die Klassen der pyrogenen und gefällten Kieselsäuren, werden ebenfalls in US 2006/0035087 A1 von NanoProducts Corp., US 2006/0204528 A1 von Byk-Chemie GmbH und WO 2007/024838 von E. I. du Pont de Nemours and Co. beschrieben, um ein chemisches Netzwerk aufzubauen. Die Vernetzung erfolgt dabei durch Ausbildung kovalenter Bindungen, wobei die Vernetzungsreaktionen thermisch initiiert werden. Dies wiederum kann problematisch bei der Einarbeitung der Füllstoffe als auch bei der Verarbeitung der Komposite sein, da die Vernetzung aufgrund erhöhter Temperaturen schon im Prozess beginnen kann. In der DE 10 2005 022 782 A1 von tesa AG werden funktionalisierte Partikel beschrieben, die unter Einwirkung von elektromagnetischer Strahlung und/oder Partikelstrahlung zu einer Vernetzung der Haftklebemasse führen, jedoch besteht weiterhin Bedarf an thermisch initiierbaren Vernetzungsmethoden für Haftklebemassen, die dennoch in einem Hotmelt-Verfahren (Heißschmelz-Verfahren) verarbeitbar sind.

Funktionalisierte organische Partikel werden dagegen in der kombinatorischen Chemie und der Biochemie eingesetzt; exemplarisch seien hier nur die Patente US 6,168,913 und die dort zitierten Literaturstellen und Patente sowie die Patente US 6,147,159 und 6,114,493 genannt. In der DE 10148731 A1 wurden funktionalisierte Latexpartikel als reaktive Füllstoffe für Haftklebemassen, die unter Ausbildung von kovalenten Bindungen mit der Polymermatrix zur Vernetzung beitragen, in lösungsmittelbasierenden Haftklebemassen verwendet. Diese können aber aufgrund der reaktiven Gruppen nicht in Dispersionsklebemassen und schwierig in lösungsmittelfreien Systemen eingesetzt werden, da entweder die Stabilität der Dispersion durch Agglomeration beeinträchtigt wird oder es zu einer Vergelung der Massen während des Hotmelt-Prozesses kommt.

Es ist nun für den Fachmann überraschend entdeckt worden, dass solche für die kombinatorische Chemie speziell entwickelten Partikeln hervorragend zur thermischen Vernetzung von Dispersionsklebemassen und/oder Acrylathotmelts geeignet sind, wenn die Funktionalitäten, die zur Ausbildung der kovalenten Bindung benötigt werden, blockiert oder geschützt sind sowie die Partikel aufgrund der geringen Größe eine geeignete spezifische Oberfläche (Verhältnis von Oberfläche zum Volumen) aufweisen. Weiterhin wurde überraschen entdeckt, dass zusätzlich die Glasübergangstemperatur der organischen Partikel eine große Rolle spielt, da neben der thermischen Vernetzung auch gerade die Partikelstruktur eine Steigerung der kohäsiven Eigenschaften bewirkt.

## Aufgabenstellung

Ziel der vorliegenden Erfindung ist es daher, ein flexibles Konzept zur Verfügung zu stellen, das eine geeignete Kombination von Material und Verfahren umfasst, so dass bevorzugt Dispersions- und/oder lösungsmittelfrei prozessierbare Haftklebemassen mit guten Verarbeitungseigenschaften, wie z. B. einer erhöhten Topfzeit der Vernetzungsreaktion, und guten Produkteigenschaften hergestellt werden können.

Wie jetzt gefunden wurde, lässt sich diese Anforderungskombination bestehend aus guter Verarbeitbarkeit und guten Produkteigenschaften dadurch lösen, dass ein Verfahren zur Herstellung von vernetzten Haftklebemassen eingesetzt wird, bei welchem eine spezielle Haftklebemassenformulierung derartig funktionalisierte organische Partikel (Latexpartikel) mit blockierten und/oder desaktivierten Funktionalitäten enthält, dass die Partikel während oder nach der Beschichtung durch Einwirken von insbesondere thermischer Energie und/oder Strahlungsenergie, insbesondere von elektromagnetischer Strahlung oder Partikelstrahlung und/oder Schallenergie mit zumindest einer Sorte polymerer Bestandteile der Haftklebemassenformulierung verknüpft werden können.

**Beschreibung**

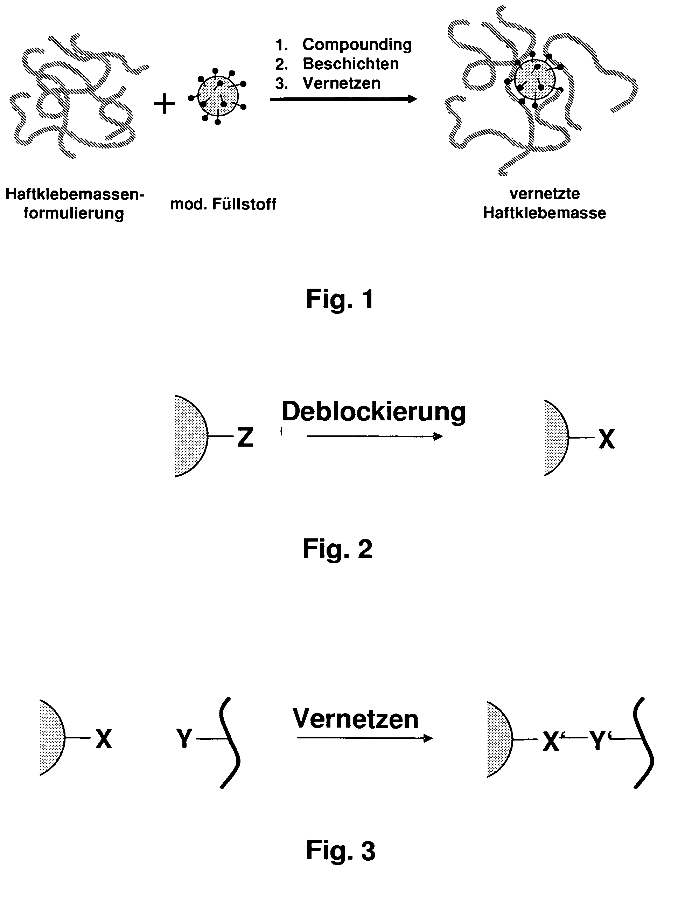

Die vorliegende Erfindung betrifft ein Verfahren zur Herstellung einer vernetzten Haftklebemasse, vernetzte Haftklebemassen, welche nach einem derartigen Verfahren erhältlich sind, sowie die Verwendung derartiger Haftklebemassen. Weiterhin umfasst die Erfindung Zwischenprodukte aus einem derartigen Verfahren, insbesondere die Zusammensetzung neuartiger Formulierungen für Haftklebemassen. Die Kombination der erfindungsgemäßen neuartigen Haftklebemassenformulierungen mit dem erfindungsgemäßen Herstellungsverfahren ist ebenfalls erfindungsgemäß und ein zentraler Bestandteil dieser Anmeldung (vgl. hierzu auch Fig. 1). Fig, 1 zeigt das grundsätzliche Prinzip, wie eine Haftklebemassenformulierung mittels eines modifizierten Füllstoffes über einen Prozess, der insbesondere eine Compoundierung, das Beschichten der Masse auf einen Träger und das anschließende Vernetzen der Masse umfasst, zu einer vernetzten Haftklebemasse umgesetzt wird.

Gegenstand der Erfindung ist ein Verfahren zur Herstellung einer Dispersions- oder Hotmelt-Haftklebemasse umfassend das Vernetzungsprodukt aus zumindest einem Polymer und zumindest einer Sorte funktionalisierter Partikeln,

- wobei das Polymer reaktive Zentren aufweist,
- wobei die funktionalisierten Partikeln zumindest eine polymere Basiseinheit aufweisen, die polymere Basiseinheit basierend auf Monomeren umfassend zumindest eine Monomersorte, deren Monomere zumindest eine Sorte funktioneller Gruppen Z aufweisen, die unter den Bedingungen bei der Herstellung und Verarbeitung des Polymers und/oder der unvernetzten Haftklebemasse keine Reaktion mit den reaktiven Zentren des Polymers eingehen, dadurch gekennzeichnet, dass das Verfahren die folgenden Verfahrensschritte umfasst:
- Umwandlung zumindest eines Teils der funktionellen Gruppen Z der Partikeln durch Energiezufuhr in funktionelle Gruppen X, die in der Lage sind, unter geeigneten Verfahrensbedingungen eine Reaktion mit den reaktiven Zentren des Polymers einzugehen,
- Bildung des Vernetzungsproduktes, umfassend die Reaktion der funktionellen Gruppen X der Partikeln mit den reaktiven Zentren des Polymers unter den geeigneten Verfahrensbedingungen.

In besonders bevorzugter Vorgehensweise ist die zugeführte Energie thermische Energie, elektromagnetische Strahlung, Partikelstrahlung und/oder Schallenergie.

Eine sehr vorteilhafte Ausgestaltung des Verfahrens zeichnet sich dadurch aus, dass die reaktiven Zentren funktionelle Gruppen Y sind.

Die Erfindung betrifft dementsprechend ein Verfahren zur Herstellung einer Haftklebemasse auf Basis zumindest eines Polymers A, bei welchem eine Vernetzung des zumindest einen Polymers A durchgeführt wird, wobei das Polymer funktionelle Gruppen Y aufweisen kann, wobei weiterhin das Polymer mit zumindest einer Sorte funktionalisierter Partikel B (im weiteren auch "Füllstoffpartikel" genannt) versetzt ist. Die Partikel weisen zumindest eine polymere Basiseinheit mit zumindest einer Sorte funktioneller Gruppen Z, bei denen es sich um geschützte oder blockierte Gruppen X handelt und die erst durch äußere Stimuli (z. B. Temperatur, aktinische Strahlung, Ultraschall) durch Zerfall, Dissoziation (homolytisch oder heterolytisch) oder andere chemische Reaktionen in die Gruppe X umgewandelt werden (siehe Fig. 2: Entschützung oder Deblockierung der Gruppe Z unter Bildung der Gruppe X). Die Vernetzung des Polymers wird erfindungsgemäß zumindest zum Teil durch eine Reaktion der funktionellen Gruppen X der Partikel und dem Polymer bewirkt, wobei dieses funktionelle Gruppen Y aufweisen kann. Die Gruppe Z trägt an sich nicht an der Vernetzung mit dem Polymer A bei und muss daher erst in die Gruppe X umgewandelt werden. Die Vernetzung kann im erfindungsgemäßen Sinne auch vollständig mittels der funktionalisierten Partikel bewirkt werden.

Die Unteransprüche betreffen vorteilhafte Varianten des erfindungsgemäßen Verfahrens.

Die Erfindung betrifft weiterhin eine Haftklebemasse, basierend auf zumindest einer vernetzten Polymerkomponente A, wobei die Vernetzung der Polymerkomponente A zumindest zum Teil durch Einbau von funktionalisierten Partikeln B bewirkt wird, wobei die Partikel B zumindest eine polymere Basiseinheit aufweisen, wobei das Polymer zumindest eine Sorte eines Monomers mit einer blockierten oder geschützten funktionellen Gruppe X aufweist, welche nach Aktivierung in der Lage ist, mit der Polymerkomponente A zu reagieren, wobei funktionellen Gruppen Y in der Polymerkomponente A vorhanden sein können.

Die funktionalisierten organischen Partikeln mit einer polymeren Basiseinheit, insbesondere von solchen wie im Rahmen dieser Schrift beschriebenen Partikeln, können als Vernetzungsreagenzien von Polymeren zur Herstellung von Haftklebemassen verwendet werden.

Weiterhin als erfindungsgemäß gelten die noch nicht vernetzten, mit den funktionalisierten Partikeln B versetzten Polymere A. Dabei können in der zu vernetzenden Haftklebemasse weitere Komponenten anwesend sein.

Die erfindungsgemäßen Haftklebemassenformulierungen enthalten zumindest eine Sorte eines Polymers A, das zumindest eine Sorte an Gruppen vom Typ Y enthalten kann, sowie zumindest eine Sorte an Füllstoffpartikeln B, die an der Partikeloberfläche zumindest eine Sorte an Gruppen vom Typ X enthalten, welche durch Aktivierung aus einer nicht zur Vernetzung befähigten Gruppe vom Typ Z hervorgehen. Die Gruppe vom Typ Z ist im Sinne der Erfindung so gewählt, dass sich aus ihr durch Einwirken von thermischer Energie, elektromagnetischer Strahlung, Partikelstrahlung und/oder Schallenergie die Gruppe vom Typ X ergibt, welche wiederum unabhängig oder in Kombination mit der Entschützung bzw. Umwandlung der Gruppe Z ebenfalls durch Einwirken thermischer Energie, elektromagnetischer Strahlung, Partikelstrahlung und/oder Schallenergie eine Bindung zwischen dem Polymer und zumindest einer funktionellen Gruppe vom Typ X und/oder zumindest einer Gruppe im Polymer vom Typ Y und zumindest einer funktionellen Gruppe vom Typ X gebildet wird, so dass ein Addukt vom Typ B-X'-A (Reaktion mit reaktiven Zentrum) und/oder B-X'-Y'-A (Reaktion mit funktioneller Gruppe Y) entsteht (siehe hierzu Fig. 3). Dabei deutet die Bezeichnung X' an, dass sich die Struktur der funktionellen Gruppe X nach abgelaufener Reaktion geändert haben kann. In gleicher Weise zeigt die Bezeichnung Y' an, dass sich die Struktur der funktionellen Gruppe Y nach abgelaufener Reaktion geändert haben kann. Es ist ebenfalls erfindungsgemäß, wenn sich die funktionellen Gruppen X und Y nicht in ihrer Struktur geändert haben, aber trotzdem eine Verknüpfung eingegangen sind.

In dieser Beschreibung sind unter den Begriffen "Elektromagnetische Strahlung" und "Partikelstrahlung" alle Strahlungsformen zu verstehen, die bei V. D. McGinniss zusammengefasst sind [V. D. McGinniss in Encyclopedia of Polymer Science and Engineering, H. F. Mark, N. M. Bikales, C. G. Overberger, G. Menges (Hrsg.), 2. Aufl., 1986, Wiley, New York, Bd. 4, S. 418ff]. Dem Fachmann sind weitere Arten der Strahlung bekannt, die ebenfalls erfinderisch anwendbar sind. Die Verwendung von Schallenergie, insbesondere Ultraschall, in chemischen Reaktionen wird ebenfalls immer bedeutender und findet in der Praxis Anwendung [E. B. Flint, K. S. Suslick; Science 1991, 253, 1397ff]. Die Verwendung von thermischer Energie ist bevorzugt erfindungsgemäß einsetzbar.

Durch die erfindungsgemäße Verwendung der hier beschriebenen neuartigen Formulierungen in Kombination mit dem hier beschriebenen Verfahren werden vorteilhaft vernetzte Haftklebemassen gewonnen. Die funktionalisierten Füllstoffpartikel B wirken dabei als multifunktionelle Vernetzer [vgl. DE 10 2005 022 782 A]. Durch ihr Vermögen, mehrere Polymerketten in einem Vernetzungspunkt zu verknüpfen, ist es möglich, die Molmasse der zu vernetzenden polymeren Bestandteile der Haftklebemasse zu reduzieren (von polymeren Bestandteilen für die Haftklebemasse auszugehen, die - bezogen auf übliche Verfahren nach dem Stand der Technik - eine reduzierte Molmasse aufweisen). Es folgt eine Verbesserung des Verarbeitungsverhaltens. Umgekehrt ist es im Sinne dieser Erfindung auch möglich, Haftklebemassen, die vernetzbare Polymere geringer Molmasse enthalten, mit den erfindungsgemäßen Füllstoffpartikeln zu versetzen. Nach Einwirken thermischer Energie, elektromagnetischer Strahlung, von Partikelstrahlung und/oder Schallenergie werden andere Netzwerkstrukturen erhalten, als wenn die erfindungsgemäßen Füllstoffpartikel nicht zugegen wären. Dieser neuartige Vernetzungszustand zeichnet sich dadurch aus, dass mit ihm verbesserte Produkteigenschaften, insbesondere eine gesteigerte Kohäsion der Haftklebemasse korreliert sind. Typischerweise ist es charakteristisch für den neuartigen Vernetzungszustand, dass die adhäsiven Eigenschaften der erfindungsgemäßen Haftklebemassen zumindest auf dem Niveau liegen, auf dem auch eine vernetzte Haftklebemasse liegt, die keine erfindungsgemäßen Füllstoffpartikel enthält, aber vergleichbar prozessiert wurde und einen vergleichbaren Gelanteil aufweist.

Vorteilhaft geht man vor, indem die erfindungsgemäßen Haftklebemassenformulierungen, die zumindest eine Sorte eines erfindungsgemäßen Polymers A und zumindest eine Sorte eines funktionalisierten Füllstoffpartikels B enthalten, im Rohzustand, also vor Beginn des Prozessierens, gute Verarbeitungseigenschaften aufweisen. Als Verarbeitungseigenschaften seien im Sinne dieser Erfindung insbesondere die Viskosität der Haftklebemassenformulierung sowie ihre Elastizität gemeint. Die Viskosität wird als Nullviskosität $\eta_0$ für verschiedene Temperaturen angegeben. Sie kann aus kapillarviskosimetrisch bestimmten Viskositätskurven erhalten werden. Die Elastizität wird in Form der ersten Normalspannungsdifferenz $N_1$ angegeben, ebenfalls bei verschiedenen Temperaturen. Auch die Daten zur ersten Normalspannungsdifferenz können aus kapillarviskosimetrischen Experimenten erhalten werden. Beide Größen, die Viskosität und die erste Normalspannungsdifferenz, sind im Allgemeinen für Haftklebemassenformulierungen scherratenabhängig. Je nach Prozess und den darin auftretenden Scherraten können sie also für eine gegebene Haftklebemasseformulierung variieren. Es ist für die Beschreibung dieser Erfindung sinnvoll, sich auf eine Scherrate zu beschränken, ohne jedoch damit die erfindungsgemäß einsetzbaren Verfahren diesbezüglich einzuschränken. Als eine solche Scherrate wird die Scherrate von 1000 $s^{-1}$ als repräsentativer vorteilhafter Wert ausgewählt. Für die Verarbeitbarkeit und insbesondere die Beschichtbarkeit ist es sehr von Vorteil, wenn ein bestimmtes Verhältnis aus Elastizität und Viskosität bei der durch den Prozess vorgegebenen Scherrate nicht überschritten wird. Ist dieses Verhältnis zu hoch, überwiegt der elastische Charakter des zu beschichtenden Materials. In Folge dessen kann Schmelzebruch auftreten, was sich in einem inhomogenen Strichbild äußert [M. Pahl, W. Gleißle, H.-M. Laun, Praktische Rheologie der Kunststoffe und Elastomere, 4. Aufl., 1995, VDI Verlag, Düsseldorf, S. 191f].

Erkenntnissen der kapillarviskosimetrischen Rheologie entsprechend bestimmt das Verhältnis $R = N_1/\tau$ aus erster Normalspannungsdifferenz $N_1$ und der Schubspannung $\tau$ das Verarbeitungsverhalten einer Polymerschmelze [W. Gleißle, Rheol. Acta 1982, 21, 484-487; M. Pahl, W. Gleißle, H.-M. Laun, Praktische Rheologie der Kunststoffe und Elastomere, 4. Aufl., 1995, VDI Verlag, Düsseldorf, S. 320ff]. Die Schubspannung $\tau$ ist dabei als Produkt aus Viskosität und Scherrate gegeben. Der Zähler des Quotienten $N_1/\tau$ beschreibt also die elastischen Eigenschaften des Materials, der Nenner die viskosen. Letzterer führt zudem die Abhängigkeit von der Prozessgeschwindigkeit in Form der Scherrate vor Augen. Oberhalb eines kritischen Wertes für R treten Fließanomalien auf. Gelingt es also, bei den Scherraten, die während der Verarbeitung vorherrschen, $N_1$ durch ein Materialkonzept zu reduzieren oder zumindest nicht weiter durch zusätzliche Vernetzungseinflüsse anwachsen zu lassen, dann wird erwartet, dass sich das Material ohne Schmelzeinhomogenitäten beschichten lässt. Dies kann beispielsweise derart erfolgen, dass eine Vernetzung erst nach der Beschichtung initiiert wird, wie es beispielsweise bei einer strahlenchemischen Behandlung möglich ist. Das bestrahlte und damit vernetzte Material weist eine erhöhte Elastizität und damit verbunden eine höhere erste Normalspannungsdifferenz auf und könnte in diesem Zustand nicht mit gutem Beschichtungsbild verarbeitet werden. Die nichtvernetzte Schmelze jedoch ist weniger elastisch, zeigt eine geringere erste Normalspannungsdifferenz und lässt sich erfolgreich beschichten. Für Haftklebemassen mit guter Kohäsion werden häufig Polymere mit hohen Molmassen benötigt. Diese können allerdings durch intermolekulare Wechselwirkungen, wie Verschlaufungen, bereits im chemisch unvernetzten Zustand hohe Elastizitäten aufweisen, was zu Nachteilen im Beschichtungsverhalten führen kann.

Die neuartige Erfindung folgt dem Konzept, dass die Kohäsion der erfindungsgemäßen Haftklebemasse im Wesentlichen durch einen verbesserten Vernetzungszustand über chemische Verknüpfung von Polymeren an Füllstoffoberflächen erfolgt. Daher ist eine hohe Molmasse der Polymere nicht mehr zwingend erforderlich und das Beschichtungsverhalten in Folge dessen in nicht mehr so ausgeprägtem Maße durch Kettenverschlaufungen eingeschränkt. Die Partikel selbst liegen während des Prozessierens als disperse Phase in der Haftklebemassenformulierung vor. Da sie zu diesem Zeitpunkt noch nicht chemisch mit polymeren Bestandteilen der Formulierung verknüpft sind, tragen sie zu diesem Zeitpunkt nur unvollständig zur Elastizität der Formulierung bei. Erst bei Initiierung der Vernetzungsreaktion während und/oder nach der Beschichtung wird die gewünschte Kohäsion erzeugt. Die Anforderungen an die erfindungsgemäßen Haftklebemasseformulierungen lauten damit, dass sich die Formulierung im nichtvernetzten Zustand durch eine gute Verarbeitbarkeit, gegeben beispielsweise durch eine niedrige erste Normalspannungsdifferenz, und insbesondere das Verhältnis R, sowie im vernetzten Zustand eine gute Kohäsion, gegeben beispielsweise durch die Scherstandzeit oder den Gelanteil eines Selbstklebebandprüfkörpers, auszeichnen muss. Das neuartige erfindungsgemäße Konzept umschließt ebenfalls die Verwendung und Beschichtung von Haftklebemasseformulierungen in Lösung, bei denen aber die zuvor beschriebenen Probleme eher unwesentlich sind. Der Stand der Technik weist aber noch Verbesserungspotenzial in Hinblick auf die Vernetzungsreaktion zwischen Partikeln und Polymer auf. Die vorliegende Erfindung schlägt hierfür neuartige Lösungen vor.

Vorteilhafte erfindungsgemäße Haftklebemassen, die über den erfindungsgemäßen Beschichtungs- und Vernetzungsprozess gewonnen werden, weisen im Vergleich zu einer Formulierung, die genauso beschichtet und vernetzt wurde, jedoch keine erfindungsgemäßen Füllstoffpartikel enthält, aber einen vergleichbaren Gelanteil aufweist (Messmethode A), typischerweise eine um mindestens 50 %, bevorzugt um mindestens 100 % gesteigerte Scherstandzeit nach Messmethode C auf. Die Adhäsion, gegeben durch die Klebkraft nach Messmethode B, ist für das erfindungsgemäße Haftklebemassensystem typischerweise mindestens auf dem gleichen Niveau, auf dem auch die Adhäsion des zuvor genannten Referenzsystems liegt, oder liegt bevorzugt sogar um mindestens 25 % höher. Die Viskosität der erfindungsgemäßen Haftklebemassen liegt bei derselben Temperatur nicht oder nur wenig, und zwar bis bevorzugt höchstens 25 %, höher als die einer Formulierung, die keine erfindungsgemäßen Füllstoffpartikel enthält und auch unvernetzt ist.

### Zusammensetzung erfindungsgemäßer Haftklebemassenformulierungen

Die erfindungsgemäßen Haftklebemassenformulierungen enthalten zumindest eine Polymersorte A und zumindest eine Füllstoffpartikelsorte B, wobei sich die zumindest eine Polymersorte A mit Gruppen X, die sich auf der Oberfläche der zumindest einen Füllstoffpartikelsorte B befinden, durch Einwirken thermischer Energie, elektromagnetischer Strahlung, von Partikelstrahlung und/oder Schallenergie während und/oder nach einer Beschichtung verbinden kann. Das Polymer kann Gruppen vom Typ Y tragen, welche zur Reaktion mit der funktionellen Gruppe X befähigt sind. Die auf der Oberfläche der zumindest einen Füllstoffsorte B gebundene Gruppe X geht aus einer ebenfalls auf der Oberfläche der gleichen Partikel gebundenen Gruppe Z mittels thermischer Aktivierung oder durch elektromagnetische Strahlung, Partikelstrahlung und/oder Schallenergie - im Weiteren nur noch Aktivierung genannt - hervor, wobei die Gruppe vom Typ Z an sich nicht für Vernetzungsreaktionen geeignet ist. Die erfindungsgemäße Haftklebemasse kann optional weitere Bestandteile außer Polymeren A und Füllstoffpartikeln B enthalten. In diesem Abschnitt soll auf die erfindungsgemäßen Polymere A, die erfindungsgemäßen Füllstoffe B und weitere in den erfindungsgemäßen Haftklebemasseformulierungen optional einsetzbare Bestandteile eingegangen werden sowie die Art der Gruppen X, Y und Z beschrieben werden.

Die erfindungsgemäßen Haftklebemassen enthalten vorteilhaft bis zu 50 Gew.-% zumindest einer Füllstoffpartikelsorte B, bevorzugt bis zu 20 Gew.-%, sehr bevorzugt bis zu 10 Gew.-%. Über die Menge der zugesetzten Polymerpartikeln lässt sich der gewünschte Vernetzungsgrad und somit die Härte und die Klebrigkeit der resultierenden vernetzten Haftklebemasse einstellen.

*Polymere A*

Die zumindest eine Polymersorte A ist dann bevorzugt erfindungsgemäß, wenn sie eine Molmasse von nicht mehr als 10.000.000 g/mol, bevorzugt nicht mehr als 500.000 g/mol aufweist. Ferner weist die zumindest eine Polymersorte A bevorzugt eine Erweichungstemperatur von kleiner als 100 °C auf, besonders bevorzugt kleiner als 20 °C. Die zumindest eine Polymersorte A kann von linearer, verzweigter, sternförmiger oder gepfropfter Struktur sein, um nur einige Beispiele zu geben, und als Homopolymer oder Copolymer aufgebaut sein. Die Bezeichnung "Copolymer" beinhaltet im Sinne dieser Erfindung nicht nur solche Copolymere, in denen die bei der Polymerisation eingesetzten Comonomere rein statistisch eingebaut sind, sondern auch solche, bei denen Gradienten in der Comonomerzusammensetzung und/oder lokale Anreicherungen einzelner Comonomersorten sowie ganze Blöcke eines Monomers in den Polymerketten vorkommen.

Als Molmasse ist in diesem Zusammenhang das Gewichtsmittel der Molmassenverteilung, wie sie beispielsweise über gelpermeationschromatographische Untersuchungen zugänglich ist, zu verstehen. Unter Erweichungstemperatur sei in diesem Zusammenhang die Glasübergangstemperatur für amorphe Systeme und die Schmelztemperatur für semikristalline Systeme verstanden, die beispielsweise durch die dynamische Differentialkalorimetrie (DSC) bestimmt werden können. Sind Zahlenwerte für Erweichungstemperaturen angegeben, dann beziehen sich diese bei amorphen Systemen auf die Mittelpunktstemperatur der Glasstufe und bei semikristallinen Systemen auf die Temperatur bei maximaler Wärmetönung während des Phasenübergangs.

Es ist zudem im Sinne dieser Erfindung möglich, dass es sich bei der zumindest einen Polymersorte A um ein Blockcopolymer handelt. Vorteilhaft sind insbesondere solche Blockcopolymere, bei denen bevorzugt jeder der vorkommenden Blöcke (unabhängig voneinander) eine Molmasse von kleiner als 1.000.000 g/mol, bevorzugt kleiner als 250.000 g/mol aufweist, von linearer, verzweigter, sternförmiger oder gepfropfter Struktur ist und/oder als Homopolymer oder statistisches Copolymer aufgebaut ist. Ferner vorteilhaft weist zumindest eine Blocksorte eine Erweichungstemperatur von kleiner als 100 °C auf, bevorzugt kleiner als 20 °C. Die einzelnen im Blockcopolymer vorkommenden Blocksorten können sich im Hinblick auf die Comonomerzusammensetzung und optional in ihrer Molmasse und/oder Erweichungstemperatur und/oder Struktur (z. B. linearer oder verzweigter Art) unterscheiden. Die verschiedenen Polymerarme in sternförmigen und gepfropften Systemen können von verschiedener chemischer Natur sein, also aus unterschiedlichen Monomeren bestehen oder/und unterschiedliche Comonomerzusammensetzung aufweisen.

Polymere der Sorte A sind weiterhin dann erfindungsgemäß bevorzugt, wenn sie ohne reaktive Gruppen oder mit zumindest einer im Polymer enthaltenen Sorte an Gruppen Y mit Gruppen vom Typ X, die sich auf der Oberfläche der zumindest einen Füllstoffpartikelsorte B befinden, unter Einwirkung von thermischer Energie, elektromagnetischer Strahlung, von Partikelstrahlung und/oder Schallenergie während oder nach einer Beschichtung eine Verbindung eingehen können. Die Gruppen X gehen mittels Aktivierung durch thermische Energie, elektromagnetische Strahlung, Partikelstrahlung und/oder Schallenergie aus den Gruppen Z hervor, die wiederum ohne Aktivierung und Umwandlung zu den funktionellen Gruppen X keine Vernetzungsreaktionen eingehen können und es somit ermöglichen, den Prozess kontrolliert zu steuern. Die Gruppen der zumindest einen Sorte Y können auf vielfältige Weise in der zumindest einen Polymersorte A vorhanden sein. Die zumindest eine Polymersorte A kann beispielsweise als Homopolymer aus Monomeren, die die zumindest eine Sorte an Gruppen Y enthalten, aufgebaut sein. Ferner kann die zumindest eine Polymersorte A auch als statistisches Copolymer aufgebaut sein, das zumindest aus einer Sorte an Monomeren, die die zumindest eine Sorte an Gruppen Y enthalten, und optional einer oder mehrerer Sorten an Monomeren, die keine derartigen Gruppen enthält, erhalten wird. Es ist weiterhin möglich, dass die zumindest eine Polymersorte A die zumindest eine Sorte an Gruppen Y lediglich an einzelnen Punkten entlang des Polymergerüsts enthält. Beispiele für solche Ausführungsformen beinhalten Gruppen, die sich an Kettenenden, im Bereich von Ketten- oder Blockmittelpunkten, im Bereich von Verzweigungspunkten oder im Bereich von Blockverbindungspunkten befinden. Polymere der zumindest einen Sorte A sind dann erfindungsgemäß besonders bevorzugt, wenn das Polymermolekül im Mittel wenigstens zwei solcher Gruppen enthält. Es ist außerdem möglich, dass die zumindest zwei Gruppen Y über eine Pfropfreaktion in das zumindest eine Polymer A eingebracht werden. Es ist ebenfalls erfindungsgemäß, die zumindest zwei Gruppen Y in die zumindest eine Polymersorte A einzubringen, indem eine polymeranaloge Reaktion durchgeführt wird. Es sind zudem beliebige Kombinationen aus den genannten Funktionalisierungsarten erfindungsgemäß.

Als Beispiele für Polymere A, aber ohne eine Einschränkung vornehmen zu wollen, seien als vorteilhaft im Sinne dieser Erfindung die folgenden Homopolymere und statistische Copolymere genannt: Polyether, wie z. B. Polyethylenglykol, Polypropylenglykol oder Polytetrahydrofuran, Polydiene, wie z. B. Polybutadien oder Polyisopren, hydrierte Polydiene, wie z. B. Polyethylenbutylen oder Polyethylenpropylen, Kautschuke, wie z. B. Naturkautschuk, Nitril-Kautschuk oder Chloropren-Kautschuk, butadienhaltiger Kautschuk, isoprenhaltiger Kautschuk, Polyisobutylen, Polyolefine, wie z. B. Ethylenhomopolymere oder -copolymere, Propylenhomopolymere oder -copolymere, metallocenkatalysierte Polyolefine, Polysiloxane, Polyalkylvinylether, Polymere unfunktionalisierter α,β-ungesättigter Ester, Copolymere auf Basis α,β- ungesättigter Ester, Copolymere auf Basis von Alkylvinylethern sowie Ethylenvinylacetat-Copolymere, EPDM-Kautschuke und Styrol-Butadien-Kautschuke genannt. Weitere vorteilhaft einsetzbare statistische Copolymere werden durch Copolymerisation von Isopren und/oder Butadien erhalten, weisen 1,4-, 1,2- und/oder 3,4- bzw. 1,4- und/oder 1,2-Einbau der Monomere in die Polymerkette auf und können vollständig oder partiell hydriert vorliegen.

Besonders vorteilhaft im Sinne dieser Erfindung sind statistische Copolymere auf Basis von unfunktionalisierten α,β-ungesättigten Estern einsetzbar. Werden diese für die zumindest eine Polymersorte A mit Copolymercharakter verwendet, dann können als Monomere bei ihrer Herstellung vorteilhaft prinzipiell alle dem Fachmann geläufigen Verbindungen, die sich zur Synthese von Polymeren eignen, eingesetzt werden. Bevorzugt werden α,β-ungesättigte Alkylester der allgemeinen Struktur

$$CH_2=C(R^1)(COOR^2) \qquad (I)$$

verwendet, wobei $R^1$ = H oder $CH_3$ und $R^2$ = H oder lineare, verzweigte oder ringförmige, gesättigte oder ungesättigte Alkylreste mit 1 bis 30, insbesondere mit 4 bis 18 Kohlenstoffatomen darstellt.

Monomere, die sehr bevorzugt im Sinne der allgemeinen Struktur I für Polymere A mit Copolymercharakter eingesetzt werden, umfassen Acryl- und Methacrylsäureester mit Alkylgruppen bestehend aus 4 bis 18 C-Atomen. Spezifische Beispiele für entsprechende Verbindungen sind, ohne sich durch diese Aufzählung einschränken zu wollen, n-Butylacrylat, n-Butylmethacrylat, n-Pentylacrylat, n-Pentylmethacrylat, n-Hexylacrylat, n-Hexylmethacrylat, n-Heptylacrylat, n-Heptylmethacrylat, n-Octylacrylat, n-Octylmethacrylat, n-Nonylacrylat, n-Nonylmethacrylat, n-Decylacrylat, n-Decylmethacrylat, Dodecylacrylat, Dodecylmethacrylat, Hexadecylacrylat, Hexadecylmethacrylat, Octadecylacrylat, Octadecylmethacrylat, deren verzweigte Isomere, wie z. B. *sec*-Butylacrylat, *sec*-Butylmethacrylat, *tert*-Butylacrylat, *tert*-Butylmethacrylat, 2-Ethylhexylacrylat, 2-Ethylhexyl-methacrylat und *iso*-Octylacrylat sowie cyclische Monomere wie z. B. Cyclohexylacrylat, Cyclohexylmethacrylat, Norbornylacrylat, Norbornylmethacrylat, Isobornylacrylat und Isobornylmethacrylat.

Ebenfalls einsetzbar als Monomere für Polymere A mit Copolymercharakter sind Acryl- und Methacrylsäureester, die aromatische Reste enthalten, wie z. B. Phenylacrylat, Benzylacrylat, Benzoinacrylat, Benzophenonacrylat, Phenylmethacrylat, Benzylmethacrylat, Benzoinmethacrylat oder Benzophenonmethacrylat.

Ferner können ethoxylierte und propoxylierte Acrylate und Methacrylate erfindungsgemäß eingesetzt werden. In solchen Systemen besteht die Acrylat- oder Methacrylatseitenkette formal aus einem Oligomer oder Polymer des Ethylenoxids oder Propylenoxids.

Weiterhin können optional Vinylmonomere aus den folgenden Gruppen eingesetzt werden: Vinylester, Vinylether, Vinylhalogenide, Vinylidenhalogenide, sowie Vinylverbindungen, die aromatische Zyklen und Heterozyklen in α-Stellung enthalten. Für die optional einsetzbaren Vinylmonomere seien beispielhaft ausgewählte erfindungsgemäß einsetzbare Monomere genannt: Vinylacetat, Vinylformamid, Vinylpyridin, Ethylvinylether, 2-Ethylhexylvinylether, Butylvinylether, Vinylchlorid, Vinylidenchlorid, Acrylnitril, Styrol, α-Methylstyrol.

In einer bevorzugten Auslegungsform dieser Erfindung enthält die zumindest eine Polymersorte A ihre zumindest zwei Gruppen Y in Form zumindest eines speziellen Comonomers, das während der Polymerisation des Polymers statistisch copolymerisiert wurde. Dabei liegt der Stoffmengenanteil dieses zumindest einen speziellen Comonomers in Bezug auf die Zusammensetzung des Gesamtmonomergemischs bei der Herstellung des Gesamtpolymers bei bis zu 50 Gew.-%, bevorzugt bei bis zu 20 Gew.-%, sehr bevorzugt bei bis zu 5 Gew.-%. Der spezielle Charakter dieses zumindest einen Comonomers zeigt sich darin, dass es zumindest eine Gruppe Y trägt, die mit zumindest einer aus einer Schutzgruppe Z hervorgegangenen Gruppe X, die sich auf der Oberfläche der zumindest einen Füllstoffpartikelsorte B befindet, unter Einwirken thermischer Energie, elektromagnetischer Strahlung, von Partikelstrahlung und/oder Schallenergie während oder nach einer Beschichtung eine Verbindung eingehen kann. Beispiele für Gruppen X, Y und Z sind im Abschnitt "Kombinationen von Gruppen X und Y" beschrieben. Besonders bevorzugt werden Monomere auf Basis von α,β-ungesättigten Estern, die diese Gruppen enthalten, eingesetzt. Es ist auch möglich, dass Gruppen Y über eine polymeranaloge Reaktion mit dem Polymer A an den Stellen, an denen diese speziellen Comonomere eingebaut sind, verbunden werden. Es ist ferner möglich, dass diese speziellen Comonomere vor der Polymerisation mit Gruppen Y derivatisiert werden, d. h. dass Comonomere mit nicht notwendigerweise erfindungsgemäßer Funktionalisierung vor der Polymerisation und damit Herstellung einer Polymersorte vom Typ A mit einer chemischen Baueinheit modifiziert wird, über die zumindest eine erfindungsgemäße Gruppe Y in das Comonomer eingebaut wird und nach dieser Modifikationsreaktion und anschließenden Polymerisation für die Ausbildung einer Verknüpfung auf erfindungsgemäße Weise mit zumindest einer Gruppe X zur Verfügung steht.

Als Beispiele für Comonomere, die funktionelle Gruppen tragen, seien - ohne sich einschränken zu wollen - Allylacrylat, Allylmethacrylat, Tetrahydrofurfurylacrylat, Tetrahydrofurfurylmethacrylat, 2-Hydroxyethylacrylat, 2-Hydroxyethylmethacrylat, 3-Hydroxy-propylacrylat, 3-Hydroxypropylmethacrylat, 4-Hydroxybutylacrylat, 4-Hydroxybutylmethacrylat, Glycidylacrylat, Glycidylmethacrylat, acryliertes Benzophenon, methacryliertes Benzophenon, Crotonsäure, Maleinsäure, Maleinsäureanhydrid, Itaconsäure, Itaconsäureanhydrid, 2-Dimethylaminoethylacrylat, 2-Dimethylaminoethylmethacrylat, 3-Dimethylaminopropylacrylat, 3-Dimethylaminopropylmethacrylat, *N-tert*-Butylacrylamid, *N-tert*-Butylmethacrylamid, *N-iso*-Propytacrylamid, *N-iso*-Propylmethacrylamid, Acrylamid, Methacrylamid, *N*-Methylolacrylamid, *N*-Methylolmethacrylamid, Acrylsäure, Methacrylsäure, Vinylalkohol, 2-Hydroxyethylvinylether, 3-Hydroxypropylvinylether, 4-Hydroxybutylvinylether und Allylglycidylether genannt.

Stellt die zumindest eine Polymersorte A ein <u>Blockcopolymer</u> dar, dann liegen im einfachsten Fall Diblockcopolymere der Form PA-PA' bestehend aus einem Block PA und einem Block PA', die sich in Bezug auf die ausgewählten Ausgangsmonomere unterscheiden und optional in ihrer Erweichungstemperatur und/oder Molmasse und/oder Struktur (z. B. linearer oder verzweigter Art) verschieden sein können, vor. Weitere Ausführungsformen für Polymere A mit Blockcopolymercharakter sind, ohne sich einschränken zu wollen, Triblockcopolymere der Art PA-PA'-PA'', Blockcopolymere der Art PA-PA'-PA''-PA''' sowie höhere Blockcopolymere, deren Strukturen diese Reihe fortführen. Triblockcopolymere und höhere Blockcopolymere sind dann erfindungsgemäß im Sinne der Polymere A mit Blockcopolymercharakter, wenn sich alle direkt miteinander verknüpften Blöcke in Bezug auf die ausgewählten Ausgangsmonomere sowie optional in ihrer Molmasse und/oder Erweichungstemperatur und/oder Struktur (z. B. linearer oder verzweigter Art) unterscheiden. Ferner sind Triblockcopolymere und höhere Blockcopolymere erfindungsgemäß im Sinne der Polymere A, wenn sich mehrere der nicht direkt miteinander verknüpften Blöcke in Bezug auf die ausgewählten Ausgangsmonomere sowie optional in ihrer Molmasse und/oder Erweichungstemperatur und/oder Struktur (z. B. linearer oder verzweigter Art) nicht voneinander unterscheiden. Eine bevorzugte Auslegung eines Polymers A mit Blockcopolymercharakter ist ein Triblockcopolymer der Art PA-PA'-PA'', wobei PA und PA'' in Bezug auf die ausgewählten Ausgangsmonomere, Molmasse, Erweichungstemperatur und Struktur gleich sind. Die Blockverknüpfung in Polymeren A mit Blockcopolymercharakter kann in einer linearen Form vorliegen, aber auch in einer sternförmigen Ausführung oder als Pfropfcopolymervariante. Jeder einzelne Block kann als Homopolymerblock oder Copolymerblock aufgebaut sein. Damit gelten für die Blöcke die Definitionen, wie sie im Abschnitt "Homopolymere" und "statistische Copolymere" ausgeführt sind.

Kommt als Polymer A ein Blockcopolymer zur Anwendung, dann enthält bevorzugt zumindest eine Blocksorte Funktionalisierungen vom Typ Y. Besonders bevorzugt sind Diblockcopolymere, die in nur einer Blocksorte Funktionalisierungen vom Typ Y enthalten, symmetrische Triblockcopolymere, die nur in beiden Endblöcken Funktionalisierungen vom Typ Y enthalten und Triblockcopolymere, die nur im Mittelblock Funktionalitäten vom Typ Y enthalten.

*Organische Füllstoffpartikel B*

Als die zumindest eine Füllstoffpartikelsorte B kommen im Sinne dieser Erfindung bevorzugt solche Füllstoffpartikel zur Anwendung, bei denen die Basiseinheiten ohne Oberflächenmodifikationen Erweichungstemperaturen von größer als 20 °C aufweisen, bevorzugt von größer als 100 °C. Es sind außerdem solche Systeme, deren Erweichungstemperatur (bezogen auf die nicht modifizierten Basiseinheiten) oberhalb der Zersetzungstemperatur liegt, dann erfindungsgemäß, wenn die Zersetzungstemperatur oberhalb 200 °C liegt.

Die Materialien, auf denen die Basiseinheit der zumindest einen Füllstoffpartikelsorte B basiert, können organischer Natur oder ein anorganisch/organisches Hybridmaterial sein und einen amorphen, teilkristallinen oder kristallinen Charakter aufweisen.

Die Füllstoffpartikel können in ihrer Struktur bevorzugt kugelförmig, stäbchenförmig oder plättchenförmig vorliegen. Eine weitere erfindungsgemäße Ausführung sind Füllstoftpartikel mit besonderen Morphologien, wie z. B. Hohlkugeln, zelluläre, Raspberry-, Champignon- oder Konfetti-Struktur [P. A. Lovell, M. S. El-Aasser, Emulsion Polymerization and Emulsion Polymers, 1997, John Wiley & Sons, Chichester]. Separierte Partikel, oftmals auch Primärpartikel genannt, sind dabei ebenso erfindungsgemäß wie aus mehreren Primärpartikeln gebildete Aggregate. Solche Systeme zeigen oft eine fraktale Überstruktur. Werden die Partikel aus Kristalliten gebildet, dann hängt die Primärpartikelform von der Art des Kristallgitters ab. Plättchenförmige Systeme können auch in Form von Schichtstapeln vorliegen.

In einer vorteilhaften Ausführungsform dieser Erfindung liegt die zumindest eine funktionalisierte Füllstoffsorte in der Haftklebemasse im Wesentlichen in Form von singulären kugelförmigen Partikeln vor. Die Partikeldurchmesser weisen dann Werte von kleiner als 2 μm, bevorzugt von kleiner als 250 nm, sehr bevorzugt von kleiner 100 nm auf, da in diesem Fall die spezifische Oberfläche besonders groß ist und die Wahrscheinlichkeit, dass eine Funktionalität zur Vernetzung beiträgt, höher ist. In einer weiteren vorteilhaften Auslegung dieser Erfindung liegt die zumindest eine funktionalisierte Füllstoffsorte in der Haftklebemasse im Wesentlichen in Form von singulären plättchenförmigen Partikeln vor. Die Schichtdicke solcher Plättchen weist dann Werte von bevorzugt kleiner als 10 nm und einen größten Durchmesser von bevorzugt kleiner als 1000 nm auf. In einer weiteren vorteilhaften Auslegung dieser Erfindung liegt die zumindest eine Füllstoffsorte in der Haftklebemasse im Wesentlichen in Form von singulären stäbchenförmigen Partikeln vor. In diesem Fall weisen diese Stäbchen einen Durchmesser von kleiner als 100 nm und eine Länge von kleiner als 15 μm auf. Die Stäbchen können auch gekrümmt vorliegen und/oder flexibel sein. Weiterhin ist es im Sinne dieser Erfindung vorteilhaft möglich, dass die zumindest eine Füllstoffsorte in der Haftklebemasse in Form von Primärpartikelaggregaten vorliegt. Diese Aggregate weisen einen Gyrationsradius (zu verstehen analog dem von Polymeren bekannten Terminus "Gyrationsradius") von kleiner als 1000 nm, bevorzugt von kleiner als 250 nm auf. Besonders bevorzugt werden solche Füllstoffpartikel im Sinne dieser Erfindung eingesetzt, deren räumliche Ausdehnung in zumindest einer Richtung kleiner als 250 nm ist, bevorzugt kleiner als 100 nm, sehr bevorzugt kleiner als 50 nm. Es ist außerdem im Sinne dieser Erfindung möglich, Kombinationen aus den zuvor genannten Füllstoffarten einzusetzen, wobei immer darauf zu achten ist, dass die Größe der Füllstoffpartikel die Schichtdicke der Haftklebemasse zumindest in einer Dimension nicht überschreitet.

In einer besonders vorteilhaften Ausführung dieser Erfindung liegen die zuvor beschriebenen Partikel oder Partikelaggregate als stabile Dispersion vor, wodurch sich die Verarbeitung bedeutend vereinfacht. Das Dispersionsmedium können dabei sein - ohne sich einschränken zu wollen - Wasser, organische Lösungsmittel wie z. B. Ethanol, Isopropanol, Aceton, Methylethylketon, Methylisobutylketon, Toluol, Xylol, Reaktivsysteme wie die zuvor beschriebenen Monomere zur Herstellung der Haftklebemassen oder ein polymeres Bindemittel.

Typische und erfindungsgemäß vorteilhafte Verbindungsklassen, aus denen die Basiseinheit der zumindest einen Füllstoffpartikelsorte B besteht, sind Polymere, die mittels Emulsions-, Miniemulsions-, Mikroemulsions-, inverse Emulsions-, Dispersions-, Suspension, Präzipitationspolymerisation oder weiterer dem Fachmann zur Herstellung organischer Partikel geläufige Polymerisationstechniken hergestellt werden. Ebenfalls erfinderisch sind Dendrimere der ersten Generation oder höher, deren Vorteil darin liegt, dass sie monodispers sind und sich die Form mit jeder Generation der einer Kugel anpasst. Die Polymere können aus allen, dem Fachmann bekannten Monomeren bestehen, die sich radikalisch (z. B. Methylmethacrylat), anionisch (z. B: Styrol), kationisch (z. B. Vinylether oder mittels Metallocen oder Ziegler-Natta-Katalysatoren polymerisieren lassen beziehungsweise die zu Polyadditionen (z. B. Epichlorhydrinether des Bisphenol A), Polykondensation (z. B. Adipinsäure) oder Ringöffnungs Metathese-Polymerisationen (ROMP, z. B. Norbornen) befähigt sind, wobei sie so zu wählen sind, dass die Glasübergangstemperatur der organischen Polymerpartikel bevorzugt höher als die der Klebmasse und besonders bevorzugt höher als die Trocknungs- und Prozesstemperatur liegt. Weiter ist erfindungsgemäß, mehrfachfunktionelle Monomere zu verwenden, um die Partikel zu vernetzen und so zu gewährleisten, dass die partikuläre Form auch bei Prozesstemperaturen gewährleistet wird, die über der Erweichungstemperatur des Polymers der Partikel liegt. Die Monomerzusammensetzung der polymeren Partikel besteht zu 60 bis 100 Gew.-% aus einem unfunktionalisierten Basismonomer und zu 0 bis 40 Gew.-% aus einem funktionellen Monomer für die Vernetzung sowie zu 0 bis 40 Gew.-% aus einem Monomer, welches zur Vernetzung der Partikel beitragen kann.

Die Partikel können aufgrund der oben genannten Polymerisationsprozesse Oberflächenmodifikationsreagenzien (Emulgatoren, Stabilisatoren) aufweisen, deren Funktion vor allem darin besteht, Kompatibilität der Partikeloberfläche mit der Matrix, in der sie dispergiert werden sollen, zu schaffen. Als weitere Aufgabe werden Oberflächenmodifikationsreagenzien eingesetzt, um Zusammenlagerungen kleinerer Partikel zu größeren Objekten zu verhindern. Dazu können beispielhaft ionische (z. B. Natriumdodecylsulfat, Tetradecytrimethylammoniumbromid), zwitterionische (z. B. Lecithine) oder Blockcopolymere (z. B. PEO-b-PPO-b-PEO) als Oberflächenmodifikationsreagenzien verwendet werden. Im Falle der radikalischen Polymerisation zur Herstellung der organischen Füllstoffpartikel ist die Verwendung mindestens eines nicht homopolymerisierbaren, oberflächenaktiven Vinylmonomers besonders vorteilhaft, da die Verwendung von zu großen Mengen frei migrierbarer Emulgatoren in Dispersionsklebemassen zu einer verminderten Bewitterungsstabilität (Feuchtigkeit) führen und der grenzflächenaktive Emulgator sich an der Substratoberfläche anreichern kann, wodurch auch die Klebkräfte negativ beeinflusst werden. Ein nicht homopolymerisierbares oberflächenaktives Monomer ist erforderlich, um die Ausbildung einer separaten polymeren Emulgatorspezies durch Homopolymerisation zu verhindern. Auf diese Weise wird der Stabilisator ein Teil des Polymers und somit des Füllstoffpartikels. Nicht homopolymerisierbare Emulgatoren mit Propenylphenyl- oder Allylgruppen sind bevorzugt, wofür die anionischen Sulfate und Sulfonate Mazon® SAM 181, 183, 184, 211 von PPG INDUSTRIES und die nichtionischen Emulgatoren Mazon® SAM 185-187 als Beispiele zu nennen wären. Weiterhin können die Makromonomere, die von DAIICHI KOGYO SEIYAKU unter den Namen Niogen RN, Aquaron und Hitenol verkauft werden, verwendet werden, bei denen es sich um Polyoxyethylenpropylenphenylether handelt.

Die zumindest eine Füllstoffpartikelsorte B liegt besonders bevorzugt funktionalisiert vor. Typische und erfindungsgemäß vorteilhafte Funktionalitäten sind Benzophenon-, Acetophenon-, Benzoin-, Benzil-, Thioxanthonderivate, Hydrazine, Amine, Phenole, Tosylchloride, Isocyanate, Carbamate, Harnstoffderivate, Aldehyde, Carbonate, Phosphine, Carbodiimide, N-Methylmorpholine, N-Hydroxysuccinimidester, Imidazol-, Oxazolidin-, Oxazolin- oder Sulfonsäuregruppen enthalten, ohne sich durch diese Aufzählung einschränken zu wollen. Sehr vorteilhaft im erfindungsgemäßen Sinne wird zumindest eine Sorte an Funktionalität eingesetzt, die die Möglichkeit bietet, über zumindest eine Gruppe X, die in der zumindest einen Sorte des Oberflächenmodifikationsreagenzes eingebaut ist, eine Verbindung mit dem Polymer A und/oder zumindest einer Gruppe Y, die in zumindest einer Polymersorte A enthalten ist, unter Einwirkung thermischer Energie, elektromagnetischer Strahlung, von Partikelstrahlung und/oder Schallenergie während oder nach einer Beschichtung einzugehen. Die Gruppe X liegt zunächst in blockierter oder desaktivierter Form als Gruppe vom Typ Z vor, welche an sich nicht zu einer Vernetzungsreaktion mit der zumindest einen Polymersorte A und/oder einer im Polymer A enthaltenden Gruppe Y befähigt ist und erst durch äußere Aktivierung durch Zerfall oder andere chemische Reaktionen in die Gruppe X umgewandelt wird. Bei den äußeren Einflüssen zur Aktivierung dieser Umwandlung kann es sich ebenfalls um thermische Energie, elektromagnetische Strahlung, Partikelstrahlung und/oder Schallenergie handeln. Vorteilhaft ist hierbei die thermische Aktivierung, wobei in einer besonders vorteilhaften Form der Gruppe Z die Aktivierungstemperatur oberhalb oder gleich der Prozesstemperatur liegt, so dass die Vernetzung erst nach der Beschichtung losgeht. In US 5,510,443 werden einige Varianten zur Blockierung von Isocyanaten beschrieben. Unter blockierten Isocyanaten sind funktionelle Gruppen zu verstehen, die unter Temperatureinfluss Isocyanatgruppen bilden und somit eine Reaktion initiieren. Dem Fachmann bekannte weitere blockierte bzw. geschützte Gruppen Z können ebenfalls erfindungsgemäß eingesetzt werden [siehe: T.W. Greene, P.G.M. Wuts; Protective Groups in Organic Synthesis, 3rd Edition, John Wiley & Sons, Inc.; New York, 1999]. Ein Füllstoffpartikel trägt an seiner Oberfläche bevorzugt mindestens 10 Gruppen der zumindest einen Sorte Z, mehr bevorzugt mindestens 50. Als Beispiele für bevorzugte Ausführungen der organischen Füllstoffpartikel sind die Epocros-Systeme der Firma NIPPON SHOKUBAI, die APR-Serie der Firma ADVANCED POLYMER, INC. und die Resins der Firma ARGONAUT TECHNOLOGIES zu nennen.

Eine weitere vorteilhafte Ausführung der organischen Füllstoffpartikel besteht aus einer Kern-Schale-, Raspberry- oder zellulären Struktur, wobei nur die Schale bzw. die zuletzt polymerisierte Stufe die funktionellen Monomere enthält, wodurch die Anzahl der Funktionalitäten auf der Oberfläche erhöht und die benötigte Menge zum Erreichen der selben Oberflächenkonzentration der meist teuren funktionellen Monomeren gesenkt werden kann.

In einer vorteilhaften Ausführungsform des erfindungsgemäßen Verfahrens weisen die funktionalisierten Partikeln weiterhin funktionelle Gruppen $X_a$ auf, wobei die Gruppen $X_a$ in der Lage sind, unter geeigneten Verfahrensbedingungen eine Reaktion mit den reaktiven Zentren, insbesondere den funktionellen Gruppen Y des Polymers einzugehen, und wobei in dem Verfahren bereits vor der Umwandlung der Gruppen Z in die Gruppen X ein Vernetzungsschritt stattfindet, der die Reaktion der funktionellen Gruppen $X_a$ mit den reaktiven Zentren, insbesondere den funktionellen Gruppen Y des Polymers umfasst.

Eine weitere erfindungsgemäß vorteilhafte Ausführung der oberflächenmodifizierten Füllstoffsorte B ergibt sich durch eine Kombination der Oberflächenmodifikationsreagenzien, wobei die eine Sorte mindestens eine funktionelle Gruppe Z beinhaltet, die nach Aktivierung durch thermische Energie, elektromagnetische Strahlung, Partikelstrahlung und/oder Schallenergie zu der Gruppe X zerfällt oder chemisch umgewandelt wird, und die andere Sorte mindestens eine Sorte $X_a$ enthält, die sich von der funktionellen Gruppe vom Typ X sowohl chemisch unterscheidet als auch nach einem anderen Reaktionsmechanismus zur Vernetzung mit dem Polymer der Sorte A beiträgt. Die Vernetzungsreaktion kann dabei durch thermische Energie, elektromagnetische Strahlung, Partikelstrahlung und/oder Schallenergie initiiert werden, wobei die funktionellen Gruppen X und $X_a$ nicht durch dieselben äußeren Stimuli aktiviert werden, wodurch sich die Möglichkeit zur Formulierung einer Haftklebemasse mit einem dual-cure-System ergibt. So ist es z. B. möglich mit zwei Sorten Gruppen X und $X_a$ mit unterschiedlichen Reaktivitäten und/oder Aktivierungsmechanismus zunächst Oligomere oder Polymere anzuvernetzen, so dass eine spezieller Viskositätsbereich erlangt wird, der die Verarbeitung vereinfacht, und nach der Beschichtung eine Nachhärtungsreaktion zu starten.

*Weitere Bestandteile*

Es ist außerdem erfindungsgemäß, optional Polymere C, die zumindest eine Gruppe vom Typ Z enthalten, und/oder Polymere C, die zumindest eine Gruppe Z und zumindest eine Gruppe vom Typ X enthalten, und/oder Polymere C, die zumindest eine Gruppe Z und zumindest eine Gruppe vom Typ X und Typ Y enthalten und/oder Polymere C, die weder Gruppen vom Typ Z oder X noch vom Typ Y tragen, einzusetzen, wobei diese aufgrund der niedrigen Glasübergangstemperatur keine Partikel-, Stäbchen- oder Plättchenform aufweisen. Für die Zusammensetzung jener optional einsetzbaren Polymere, die keine Gruppen vom Typ X, Y oder Z enthalten, gelten die gleichen Angaben hinsichtlich Aufbau, Zusammensetzung, Wahl der Monomere, Erweichungstemperatur und Struktur, wie sie in der Definition für die Polymere A zu finden sind, abgesehen von den Angaben, die dort im Hinblick auf die Gruppen Y gemacht sind. Für optional einsetzbare Polymere, die zumindest eine Gruppe Z und/oder X enthalten, gelten die Angaben, die für Polymere A gemacht wurden, jedoch enthalten solche Polymere C Gruppen der Sorte Z und/oder X und nicht Gruppen der Sorte Y und können daher direkt oder durch Aktivierung mit dem Polymer der Sorte A und/oder zumindest einer Gruppe Y des zumindest einen Polymers der Sorte A durch Einwirken thermischer Energie, elektromagnetischer Strahlung, von Partikelstrahlung und/oder Schallenergie während oder nach einer Beschichtung eine Verbindung eingehen. Für den Einbau der Gruppen Z und/oder X in Polymeren C gelten die gleichen Angaben, die für die Gruppen Y in den Polymeren A gemacht wurden. Kommen Polymere zum Einsatz, die Gruppen Z und/oder X und Y tragen, dann gelten die gleichen Angaben hinsichtlich Aufbau, Zusammensetzung, Wahl der Monomere, Erweichungstemperatur und Struktur, wie sie in der Definition für die Polymere A zu finden sind, jedoch um den Zusatz erweitert, dass zusätzlich auch zumindest eine Gruppe Z und/oder X im Polymer enthalten ist. Für den Einbau der Gruppen Z und/oder X und Y in Polymeren C, die beide Sorten an Gruppen tragen, gelten die gleichen Angaben, die für die Gruppen Y in den Polymeren A gemacht wurden.

Als weitere Bestandteile können die erfindungsgemäßen Haftklebemassenformulierungen Klebharze, Weichmacher, rheologisch wirksame Additive, Katalysatoren, Initiatoren, Stabilisatoren, Kompatibilisatoren, Kopplungsreagenzien, Vernetzer, Antioxidantien, weitere Alterungsschutzmittel, Lichtschutzmittel, Flammschutzmittel, Pigmente, Farbstoffe, weitere Füllstoffe, insbesondere solche, die nicht zu der zumindest einen Füllstoffpartikelsorte B zählen, und/oder Blähmittel enthalten.

### Kombinationen von Gruppen X und Y

Die erfindungsgemäßen Haftklebemassen enthalten zumindest eine Polymersorte A und zumindest eine Füllstoffpartikelsorte B. Polymere A enthalten zumindest zwei Gruppen Y, Füllstoffpartikel B enthalten zumindest eine Sorte an Gruppen Z, die durch thermische Energie, elektromagnetische Strahlung, Partikelstrahlung und/oder Schallenergie in die Gruppe X zerfällt oder chemisch umgewandelt wird. Die Gruppen X, Y und Z sind im Sinne dieser Erfindung so gewählt, dass zwischen diesen Gruppen X und Y oder über diese Gruppen X und Y eine Kopplung zwischen Polymeren A und Füllstoffpartikeln B erzeugt werden kann, aber zwischen den Gruppen Z und Y oder über die Gruppen Z und Y wiederum keine Kopplung zwischen Polymeren A und Füllstoffpartikeln B erzeugt wird. Die Kopplung wird während oder nach der Beschichtung durch Einwirken thermischer Energie, elektromagnetischer Strahlung, von Partikelstrahlung und/oder Schallenergie initiiert. Bei der Kopplung ist zumindest eine Gruppe X und zumindest eine Gruppe Y beteiligt. Unter Kopplung von zumindest einer Gruppe X und zumindest einer Gruppe Y werden im Sinne dieser Erfindung insbesondere

- eine chemische Reaktion, bei der die zumindest eine Gruppe X mit der zumindest einen Gruppe Y reagiert und zur Bildung einer kovalenten Bindung führt,
- die Bildung von Wasserstoffbrückenbindungen zwischen der zumindest einen Gruppe X und der zumindest einen Gruppe Y und/oder
- die Bildung einer koordinativen Bindung beispielsweise durch Komplexbildung, an der die zumindest eine Gruppe X und die zumindest eine Gruppe Y beteiligt sind, so dass zumindest eine Donor/Akzeptor-Bindung entsteht,

verstanden.

Die Kopplung kann dabei zwischen den Gruppen X und Y direkt oder auch durch Vermittlung durch eine oder mehrere weitere Substanzen, wie z. B. Kopplungsreagenzien oder Vernetzer, erfolgen. Für die Position und Anzahl der Gruppen X und Y in den erfindungsgemäß einsetzbaren Polymeren A und Füllstoffpartikeln B gelten die Definitionen, die für die Polymere A und die Füllstoffpartikel B gemacht worden sind.

Soll die erfindungsgemäße Kopplung der zumindest einen Polymersorte A mit der zumindest einen Füllstoffpartikelsorte B über die Gruppen Y und X als eine *chemische Reaktion* ablaufen, dann sind die beteiligten Gruppen X und Y insbesondere entsprechend der folgenden Ausführungen definiert.

Die erfindungsgemäßen Haftklebemassen enthalten zumindest einen Bestandteil, der zumindest eine Sorte an erfindungsgemäßen Segmenten, die die allgemeine Struktur (R°R°°R°°°C)-Z aufweisen, enthält. R°, R°° und R°°° können unabhängig voneinander gesättigte oder ungesättigte, aliphatische oder aromatische Kohlenwasserstoffreste, die auch untereinander verknüpft sein können, gleicher oder unterschiedlicher Art sein. Es ist im Sinne dieser Erfindung auch möglich, dass das in (R°R°°R°°°C)-Z aufgeführte Kohlenstoffatom selbst ungesättigt ist. In diesem Fall ist dieses Kohlenstoffatom nur mit Z und einem oder zwei der Reste R°, R°° oder R°°° verknüpft. Die Gruppe Z an sich ist nicht zur Kopplung mit der zumindest einen Polymersorte A befähigt und muss erst durch die Einwirkung durch thermische Energie, elektromagnetische Strahlung, Partikelstrahlung und/oder Schallenergie in die Gruppe X umgewandelt werden oder zerfallen, wodurch die Struktur (R°R°°R°°°C)-X resultiert. Die Reste R°, R°° und R°°° können unabhängig voneinander eine beliebige Anzahl an Heteroatomen beinhalten. Die Reste R°, R°° und R°°° können niedermolekularer oder polymerer Natur sein. Bis zu zwei der Reste R°, R°° und R°°° können außerdem auch Wasserstoffatome sein. Zumindest einer der Reste R°, R°° und R°°° ist durch eine chemische Bindung mit einem Füllstoffpartikel der Sorte B verknüpft. Die für die Kopplungsreaktion notwendige Gruppe ist mit X bezeichnet.

Das zumindest eine erfindungsgemäße Segment der Struktur (R°R°°R°°°C)-X kann mit zumindest einem Segment, das in zumindest einem weiteren Bestandteil der erfindungsgemäßen Haftklebemasse enthalten ist und das die allgemeine Struktur (R*R**R***C)-Y aufweist, zur Reaktion gebracht werden. R*, R** und R*** können unabhängig voneinander gesättigte oder ungesättigte, aliphatische oder aromatische Kohlenwasserstoffreste, die auch untereinander verknüpft sein können, gleicher oder unterschiedlicher Art sein. Es ist im Sinne dieser Erfindung auch möglich, dass das in (R*R**R***C)-Y aufgeführte Kohlenstoffatom selbst ungesättigt ist. In diesem Fall ist dieses Kohlenstoffatom nur mit Y und einem oder zwei der Reste R*, R** oder R*** verknüpft. Die Reste R*, R** und R*** können unabhängig voneinander eine beliebige Anzahl an Heteroatomen beinhalten. Die Reste R*, R** und R*** können niedermolekularer oder polymerer Natur sein. Bis zu zwei der Reste R*, R** und R*** können außerdem auch Wasserstoffatome sein. Zumindest einer der Reste R*, R** und R*** ist durch eine chemische Bindung mit einer Polymerkette der Sorte A verknüpft. Die für die Kopplungsreaktion notwendige Gruppe ist mit Y bezeichnet. In speziellen Ausführungen dieser Erfindung können einzelne oder mehrere Reste R*, R**, R*** von gleicher Art sein wie R°, R°° oder R°°°. Ebenso ist es erfindungsgemäß, wenn die Gruppe X und die Gruppe Y gleicher Art sind. In diesem speziellen Fall erfolgt die Kopplung vorteilhaft mittels eines Kopplungsreagenzes oder durch Einwirken eines Katalysators oder Initiators. Es ist im Sinne dieser Erfindung besonders vorteilhaft, wenn die Kopplungsreaktion durch Einwirken thermischer Energie initiiert wird, kann aber ebenfalls ausschließlich oder durch Kombination mit elektromagnetischer Strahlung, Partikelstrahlung und/oder Schallenergie initiiert werden.

Im Sinne dieser Erfindung sind beliebig viele weitere Gruppen einsetzbar, die mit einer Gruppe X und/oder einer Gruppe Y reagieren können.

Eine Kopplungsreaktion kann durch chemische Reaktion direkt zwischen den Gruppen X und Y ablaufen, so dass eine Spezies (R°R°°R°°°C)-X'-Y'-(CR*R**R***) gebildet wird (siehe Abb. 2). X' und Y' sind dabei im Falle einer chemischen Reaktion die Umsetzungsprodukte der Gruppen X beziehungsweise Y. In speziellen Fällen ist für die Kopplung der Gruppen X und Y ein Kopplungsreagenz $X^a$-$Y^a$ oder $X^a$-$R^a$-$Y^a$ erforderlich. $X^a$ und $Y^a$ sind Gruppen, die zu einer Reaktion mit Gruppen X bzw. Y befähigt sind und gleicher oder verschiedener Art sein können. Ferner ist es auch möglich, zwei Gruppen X über ein Kopplungsreagenz Y-$R^b$-Y zu verknüpfen sowie zwei Gruppen Y über ein Kopplungsreagenz X-$R^b$-X. $R^a$ und $R^b$ können gesättigte oder ungesättigte, aliphatische oder aromatische Kohlenwasserstoffreste sein und eine beliebige Anzahl an Heteroatomen beinhalten. Die Reste $R^a$ und $R^b$ können niedermolekularer oder polymerer Natur sein.

In Tabelle 1 sind einige Beispiele für die Gruppen Z sowie die aus ihr mittels thermischer Energie, elektromagnetischer Strahlung, Partikelstrahlung und/oder Schallenergie hervorgehenden Gruppen X aufgeführt. Die Tabelle erhebt nicht den Anspruch auf Vollständigkeit, sondern soll lediglich Beispiele für im Sinne dieser Erfindung einsetzbare Schutzgruppen Z für die Gruppen X führen. Dem Fachmann bekannte weitere Gruppen können ebenfalls erfindungsgemäß eingesetzt werden [siehe: T.W. Greene, P.G.M. Wuts; Protective Groups in Organic Synthesis, 3rd Edition, John Wiley & Sons, Inc.; New York, 1999].

In Tabelle 2 sind einige Beispiele für X und Y zusammengestellt, die erfindungsgemäß einsetzbar sind. Vorteilhaft verwendbare Kombinationen von Gruppen sind mit einem Kreuz gekennzeichnet. Unter Umständen werden für die Reaktion zwischen den angegebenen Gruppen zusätzliche Reagenzien und/oder spezielle Bedingungen benötigt. Solche Reagenzien werden dann der Haftklebemassenformulierung zugesetzt (siehe Abschnitt "Weitere Bestandteile"). Spezielle Bedingungen wie Temperatur oder Strahlung fallen ebenso in die Intention dieser Erfindung. Die Tabelle erhebt nicht den Anspruch auf Vollständigkeit, sondern soll lediglich Beispiele für im Sinne dieser Erfindung einsetzbare Gruppen und Kombinationen einsetzbarer Gruppen vor Augen führen. Dem Fachmann bekannte weitere Gruppen und Kombinationen für entsprechende Reaktionen können ebenfalls erfindungsgemäß eingesetzt werden. Die in Tabelle 1 enthaltenen Reste $R^1$, $R^2$, $R^3$, $R^4$, $R^5$, $R^6$ sowie $R^a$, $R^b$, $R^c$, $R^d$, $R^e$, $R^f$ können unabhängig voneinander gesättigte oder ungesättigte, aliphatische oder aromatische Kohlenwasserstoffreste sein, die eine beliebige Anzahl an Heteroatomen enthalten und niedermolekularer oder polymerer Natur und oder wahlweise Wasserstoffatome sein können. Die Reste können entsprechend der vorstehenden Definition gleichen oder verschiedenen Aufbaus sein. Die Reste $R^1$, $R^2$ und $R^3$ können untereinander verknüpft sein, die Reste $R^5$ und $R^6$ können untereinander verknüpft sein, die Reste $R^a$, $R^b$ und $R^c$ können untereinander verknüpft sein und die Reste $R^e$ und R' können untereinander verknüpft sein. Zyklische Säureanhydride wie Maleinsäureanhydrid oder Bernsteinsäureanhydrid können als chemische Gruppe in beliebiger Weise an Polymere A oder Füllstoffpartikel B angebaut sein. Maleinsäureanhydrid bietet zudem die Möglichkeit, als Comonomer in Polymeren A eingebaut zu sein.

Unter dem Eintrag "-PI" in Tabelle 1 ist eine Gruppe zu verstehen, die eine Photoinitiatorfunktion innehat. Durch Bestrahlung mit UV-Licht geeigneter Wellenlänge wird die Gruppe aktiviert und, je nach Art des Photoinitiators, eine radikalische Reaktion oder eine kationische Reaktion initiiert. Geeignete Vertreter solcher Gruppen sind Typ-I-Photoinitiatoren, also sogenannte α-Spalter wie Benzoin- und Acetophenon-Derivate, Benzilketale oder Acylphosphinoxide, Typ-II-Photoinitiatoren, also sogenannte Wasserstoffabstraktoren wie Benzophenon-Derivate und einige Chinone, Diketone und Thioxanthone, und kationische Photoinitiatoren, wie zum Beispiel "Photoacid Generators" wie arylierte Sulphonium oder Iodonium Salze und dimerisierte arylierte ImidazolDerivate. Ferner können Triazin-Derivate zur Initiierung radikalischer und kationischer Reaktionen verwendet werden.

Photoinitiierende Gruppen Z bzw. X und/oder Y vom Typ I umfassen im Sinne dieser Erfindung bevorzugt Benzoin, Benzoinether wie beispielsweise Benzoinmethylether, Benzoin-isopropylether, Benzoinbutylether, Benzoin-isobutylether, Methylolbenzoin-Derivate wie Methylolbenzoinpropylether, 4-Benzoyl-1,3-dioxolan und seine Derivate, Benzilketal-Derivate wie 2,2-Dimethoxy-2-phenylacetophenon oder 2-Benzoyl-2-phenyl-1,3-dioxolan, α,α-Dialkoxyacetophenone wie α,α-Dimethoxyacetophenon und α,α-Diethoxyacetophenon, α-Hydroxyalkylphenone wie 1-Hydroxycyclohexylphenylketon, 2-Hydroxy-2-methyl-1-phenylpropanon und 2-Hydroxy-2-methyl-1-(4-isopropylphenyl)-propanon, 4-(2-Hydroxyethoxy)-phenyl-2-hydroxy-2-methyl-2-propanon und seine Derivate, α-Aminoalkylphenone wie 2-Methyl-1-[4-(methylthio)-phenyl]-2-morpholinopropan-2-on und 2-Benzyl-2-dimethylamino-1-(4-morpholinophenyl)-butan-1-on, Acylphosphinoxide wie 2,4,6-Trimethylbenzoyldiphenylphosphinoxid und Ethyl-2,4,6-trimethylbenzoylphenylphosphinat und O-Acyl-α-oximinoketone.

Erfindungsgemäß bevorzugt einsetzbare photoinitiierende Gruppen vom Typ II basieren beispielsweise auf Benzophenon und seinen Derivaten wie 2,4,6-Trimethylbenzophenon oder 4,4'-Bis-(dimethylamino)-benzophenon, Thioxanthon und seinen Derivaten wie 2-iso-Propylthioxanthon und 2,4-Diethylthioxanthon, Xanthon und seinen Derivaten und Anthrachinon und seinen Derivaten.

Typ-II-Photoinitiatoren werden besonders vorteilhaft in Kombination mit stickstoffhaltigen Coinitiatoren, den sogenannten Amin-Synergisten eingesetzt. Bevorzugt werden im Sinne dieser Erfindung tertiäre Amine verwendet. Ferner kommen in Kombination mit Typ-II-Photoinitiatoren vorteilhaft Wasserstoffatomdonoren zur Anwendung. Beispiele hierfür sind Substrate, die Aminogruppen enthalten. Beispiele für Amin-Synergisten sind Methyldiethanolamin, Triethanolamin, Ethyl-4-(dimethylamino)-benzoat, 2-n-Butoxyethyl-4-(dimethylamino)-benzoat, *iso*-Acryl-4-(dimethylamino)-benzoat, 2-(Dimethylaminophenyl)-ethanon sowie ungesättigte und damit copolymerisierbare tertiäre Amine, (meth)acrylierte Amine, ungesättigte Amin-modifizierte Oligomere und Polymere auf Polyester- oder Polyetherbasis und Amin-modifizierte (Meth)acrylate. Es ist im Sinne dieser Erfindung möglich, wenn solche chemischen Baugruppen mit Polymeren und/oder Füllstoffen verknüpft sind.

Im Sinne dieser Erfindungen können auch beliebige Kombinationen verschiedener Arten von Typ-I und/oder Typ-II photoinitiierender Gruppen eingesetzt werden.

In einer besonders bevorzugten Variante dieser Erfindung sind Gruppen mit photoinitiierendem Charakter als Gruppen Y in zumindest einer Sorte an Polymeren A enthalten.

In einer weiteren besonders bevorzugten Variante dieser Erfindung sind Gruppen mit photoinitiierendem Charakter als Gruppen Z bzw. X in zumindest einer Sorte an funktionalisierten Füllstoffpartikeln B enthalten.

Läuft die erfindungsgemäße Kopplung der zumindest einen Polymersorte A mit der zumindest einen Füllstoffpartikelsorte B über die Gruppen Y und X über die Bildung von *Wasserstoffbrückenbindungen* ab, dann sind die beteiligten Gruppen X und Y entsprechend der folgenden Ausführungen definiert. Siehe hierzu beispielsweise D. Philp, J. F. Stoddard, Angew. Chem. 1996, 108, 1242 - 1286 oder C. Schmuck, W. Wienand, Angew. Chem. 2001, 113, 4493 - 4499.

Die erfindungsgemäßen Haftklebemassen enthalten in diesem Fall zumindest einen Bestandteil, der eine Sorte an Segmenten, die die allgemeine Struktur $(R^{\#}R^{\#\#}R^{\#\#\#}C)$-$X^{\#}$ aufweist, enthält. $R^{\#}$, $R^{\#\#}$ und $R^{\#\#\#}$ können unabhängig voneinander gesättigte oder ungesättigte, aliphatische oder aromatische Kohlenwasserstoffreste, die auch untereinander verknüpft sein können, gleicher oder unterschiedlicher Art sein. Es ist im Sinne dieser Erfindung auch möglich, dass das in $(R^{\#}R^{\#\#}R^{\#\#\#}C)$-$X^{\#}$ aufgeführte Kohlenstoffatom selbst ungesättigt ist. In diesem Fall ist dieses Kohlenstoffatom nur mit $X^{\#}$ und einem oder zwei der Reste $R^{\#}$, $R^{\#\#}$ oder $R^{\#\#\#}$ verknüpft. Die Reste $R^{\#}$, $R^{\#}$ und $R^{\#\#\#}$ können unabhängig voneinander eine beliebige Anzahl an Heteroatomen beinhalten. Die Reste $R^{\#}$, $R^{\#\#}$ und $R^{\#\#\#}$ können niedermolekularer oder polymerer Natur sein. Bis zu zwei der Reste $R^{\#}$, $R^{\#\#}$ und $R^{\#\#\#}$ können außerdem auch Wasserstoffatome sein. Zumindest einer der Reste $R^{\#}$, $R^{\#\#}$ und $R^{\#\#\#}$ ist durch eine chemische mit einem Füllstoffpartikel B verknüpft. Die für die Kopplungsreaktion notwendige Gruppe ist mit $X^{\#}$ bezeichnet, die wiederum mittels thermischer Energie, elektromagnetischer Strahlung, Partikelstrahlung und/oder Schallenergie aus einer Gruppe Z hervorgeht. Die Gruppe Z wiederum ist entweder nicht zur Kopplung der zumindest einen Polymersorte A mit dem zumindest einen Füllstoffpartikel B durch Ausbildung von Wasserstoffbrückenbindungen befähigt oder kann ebenfalls solche Wechselwirkungen aufweisen, die jedoch aufgrund von z. B. Polyvalenzeffekten oder Chelatbildung nicht so stark ausgeprägt sind wie bei der Gruppe $X^{\#}$.

Das zumindest eine erfindungsgemäße Segment der Struktur $(R^{\#}R^{\#\#}R^{\#\#\#}C)$-$X^{\#}$ ist in der Lage, Wasserstoffbrückenbindungen mit zumindest einem funktionellen Segment, das in zumindest einem weiteren Bestandteil enthalten ist und das die allgemeine Struktur $(R^{\sim}R^{\sim\sim}R^{\sim\sim\sim}C)$-$Y^{\sim}$ aufweist, zu bilden. $R^{\sim}$, $R^{\sim\sim}$ und $R^{\sim\sim\sim}$ können unabhängig voneinander gesättigte oder ungesättigte, aliphatische oder aromatische Kohlenwasserstoffreste, die auch untereinander verknüpft sein können, gleicher oder unterschiedlicher Art sein. Es ist im Sinne dieser Erfindung auch möglich, dass das in $(R^{\sim}R^{\sim\sim}R^{\sim\sim\sim}C)$-$Y^{\sim}$ aufgeführte Kohlenstoffatom selbst ungesättigt ist. In diesem Fall ist dieses Kohlenstoffatom nur mit $Y^{\sim}$ und einem oder zwei der Reste $R^{\sim}$, $R^{\sim\sim}$ oder $R^{\sim\sim\sim}$ verknüpft. Die Reste $R^{\sim}$, $R^{\sim\sim}$ und $R^{\sim\sim\sim}$ können unabhängig voneinander eine beliebige Anzahl an Heteroatomen beinhalten. Die Reste $R^{\sim}$, $R^{\sim\sim}$ und $R^{\sim\sim\sim}$ können niedermolekularer oder polymerer Natur sein. Bis zu zwei der Reste $R^{\sim}$, $R^{\sim\sim}$ und $R^{\sim\sim\sim}$ können außerdem auch Wasserstoffatome sein. Zumindest einer der Reste $R^{\sim}$, $R^{\sim\sim}$ und $R^{\sim\sim\sim}$ ist durch eine chemische Bindung mit einer Polymerkette der Sorte A verknüpft. Die für die Kopplungsreaktion notwendige Gruppe ist mit $Y^{\sim}$ bezeichnet. In speziellen Ausführungen dieser Erfindung können einzelne oder mehrere Reste $R^{\sim}$, $R^{\sim\sim}$, $R^{\sim\sim\sim}$ von gleicher Art sein wie $R^{\#}$, $R^{\#\#}$ oder $R^{\#\#\#}$. Ebenso ist es erfindungsgemäß, wenn die Gruppe $X^{\#}$ und die Gruppe $Y^{\sim}$ gleicher Art sind. In diesem speziellen Fall erfolgt die Kopplung mittels eines Kopplungsreagenzes.

Im Sinne dieser Erfindung sind beliebig viele weitere Gruppen einsetzbar, die mit zumindest einer Gruppe X und/oder zumindest einer Gruppe Y eine Verbindung eingehen können.

Eine Kopplungsreaktion kann durch Ausbildung von Wasserstoffbrückenbindungen direkt zwischen den Gruppen $X^{\#}$ und $Y^{\sim}$ ablaufen, so dass eine Spezies $(R^{\#}R^{\#\#}R^{\#\#\#}C)$-$X^{\#}$-$Y^{\sim}$-$(CR^{\sim}R^{\sim\sim}R^{\sim\sim\sim})$ gebildet wird (siehe Abb. 2). In speziellen Fällen ist für die Kopplung der Gruppen $X^{\#}$ und $Y^{\sim}$ ein Kopplungsreagenz $X^{\#a}$-$Y^{\sim a}$ oder $X^{\#a}$-$R^{a}$-$Y^{\sim a}$ erforderlich. $X^{\#a}$ und $Y^{\sim a}$ sind Gruppen, die zu einer Ausbildung von Wasserstoffbrücken mit $Y^{\sim}$ bzw. $X^{\#}$ befähigt sind und gleicher oder verschiedener Art sein können. Ferner ist es auch möglich, zwei Gruppen X$^\#$ über ein Kopplungsreagenz Y$^\sim$-R$^{b}$-Y$^\sim$ zu verknüpfen sowie zwei Gruppen Y$^\sim$ über ein Kopplungsreagenz X$^\sim$-R$^{b'}$-X$^\sim$-. R$^{a'}$ und R$^{b'}$ können gesättigte oder ungesättigte, aliphatische oder aromatische Kohlenwasserstoffreste sein und eine beliebige Anzahl an Heteroatomen beinhalten. Die Reste R$^{a'}$ und R$^{b'}$ können niedermolekularer oder polymerer Natur sein.

Die koppelbaren Gruppen können einzähnig oder vorzugsweise mehrzähnig sein. Zähnigkeit bezieht sich dabei auf die Möglichkeit einer Gruppe, eine bestimmte Anzahl von Wasserstoffbrückenbindungen auszubilden. Wasserstoffbrückenbindungen zwischen einzähnigen oder vorzugsweise mehrzähnigen funktionellen Segmenten sind als strukturbildende Elemente aus verschiedenen Beispielen bekannt. In der Natur dienen Wasserstoffbrückenbindungen zwischen komplementären funktionellen Segmenten zum Aufbau von Desoxyribonukleinsäure (DNS) und Ribonukleinsäure (RNS). Eine spezielle Kombination aus Donor- und Akzeptorstellen macht es möglich, dass Kopplungen nur nach dem Schlüssel-Schloss-Prinzip erfolgen können. Handelt es sich beispielsweise bei den funktionellen Segmenten $\alpha$ (Typ "Schlüssel") und $\beta$ (Typ "Schloss") um komplementäre Segmente, die Wasserstoffbrückenbindungen ausbilden können, dann ist eine Verbindung zwischen $\alpha$ und $\beta$ möglich, zwischen $\alpha$ und $\alpha$ sowie $\beta$ und $\beta$ jedoch nicht. Die Natur beschränkt sich bei der Auswahl der funktionellen Segmente beim Aufbau der DNS auf die zwei organischen Basenpaare Adenin/ Thymin (bzw. statt Thymin Uracil in RNS) als zweizähnige Segmente und Cytosin/Guanin als dreizähnige Segmente.

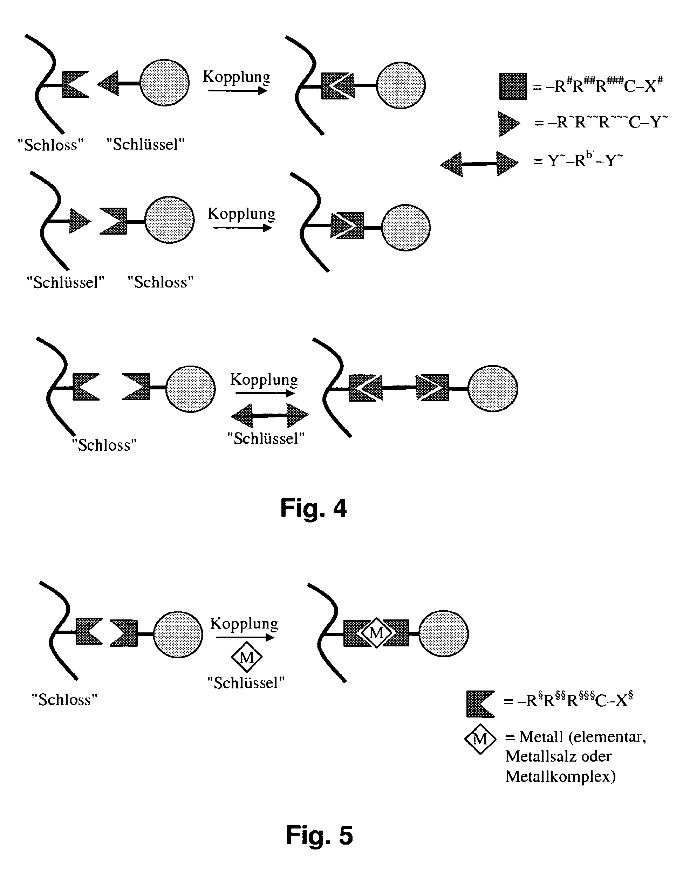

Im Sinne dieser Erfindung können Polymere A und Füllstoffpartikel B mit Gruppen auf Basis von Adenin, Thymin, Uracil, Cytosin, Guanin, deren Derivaten sowie weiteren Verbindungen, die zur Ausbildung von Wasserstoffbindungen nach dem Schlüssel-Schloss-Prinzip in der Lage sind, wie beispielsweise 2-Ureido-4-pyrimidon und dessen Derivate, 2,6-Diacetylaminopyridin und dessen Derivate, Diacetylpyrimidin und dessen Derivate sowie Ureidoacylpyrimidin und dessen Derivate, eingesetzt werden. Diese Aufzählung erhebt nicht den Anspruch auf Vollständigkeit. Dem Fachmann sind vielmehr weitere Systeme bekannt, die erfindungsgemäß eingesetzt werden können. Wird diese Art der Funktionalisierung gewählt, dann trägt im Sinne dieser Erfindung entweder die zumindest eine Polymersorte A Gruppen vom Typ "Schlüssel" und die zumindest eine Füllstoffpartikelsorte B Gruppen vom Typ "Schloss" oder umgekehrt. Fig. 4 zeigt zwei Beispiele für die Kopplung reaktiver Bestandteile über Ausbildung von Wasserstoffbrückenbindungen durch Verwendung von zwei komplementären Gruppen, zum einen die direkte Kopplung von Polymer A und Füllstoffpartikel B und zum anderen die Kopplung von Polymer A und Füllstoffpartikel B unter Verwendung eines Kopplungsreagenzes ("Schlüssel-Schloss-Prinzip").

Erfindungsgemäß ist ebenfalls die Kopplung von Gruppen über ***koordinative Bindungen*** möglich. Beispiele für koordinative Bindungen sind Ligand-Zentralatom-Bindungen in Komplexen, also die Bildung einer koordinativen Bindung mit Metallatomen, die elementar, in Form von Metallsalzen und/oder in Form von Metallkomplexen vorliegen können, sowie alle weiteren Donor-Akzeptor-Bindungen (siehe hierzu beispielsweise D. Philp, J. F. Stoddard, Angew. Chem. 1996, 108, 1242 - 1286; M. Rehahn, Acta Polym. 1998, 49, 201 - 224 oder B. G. G. Lohmeijer, U. S. Schubert, J. Polym. Sci. A Polym. Chem. 2003, 41, 1413 - 1427).

Wird dieses Kopplungsprinzip im Sinne dieser Erfindung gewählt, dann enthält die Haftklebemasse Füllstoffpartikel der Sorte B, die Gruppen mit der allgemeinen Struktur (R$^\S$R$^{\S\S}$R$^{\S\S\S}$C)-X$^\S$ enthalten. R$^\S$, R$^{\S\S}$ und R$^{\S\S\S}$ können unabhängig voneinander gesättigte oder ungesättigte, aliphatische oder aromatische Kohlenwasserstoffreste, die auch untereinander verknüpft sein können, gleicher oder unterschiedlicher Art sein. Es ist im Sinne dieser Erfindung auch möglich, dass das in (R$^\S$R$^{\S\S}$R$^\S$C)-X$^\S$ aufgeführte Kohlenstoffatom selbst ungesättigt ist. In diesem Fall ist dieses Koh-lenstoffatom nur mit X$^\S$ und einem oder zwei der Reste R$^\S$, R$^{\S\S}$ oder R$^{\S\S\S}$ verknüpft. Die Reste R$^\S$, R$^{\S\S}$ und R$^{\S\S\S}$ können unabhängig voneinander eine beliebige Anzahl an Heteroatomen beinhalten. Die Reste R$^\S$, R$^{\S\S}$ und R$^{\S\S\S}$ können nie-dermolekularer oder polymerer Natur sein. Bis zu zwei der Reste R$^\S$, R$^{\S\S}$ und R$^{\S\S\S}$ können außerdem auch Wasser-stoffatome sein. Zumindest einer der Reste R$^\S$, R$^{\S\S}$ und R$^{\S\S\S}$ ist durch eine chemische mit einem Füllstoffpartikel der Sorte B verknüpft. Die für die Kopplungsreaktion notwendige Gruppe ist mit X$^\S$ bezeichnet, die wiederum mittels thermischer Energie, elektromagnetischer Strahlung, Partikelstrahlung und/oder Schallenergie aus einer Gruppe Z hervorgeht. Die Gruppe Z wiederum ist entweder nicht zur Kopplung der zumindest einen Polymersorte A mit dem zumindest einen Füllstoffpartikel B durch Ausbildung einer koordinativen Bindung befähigt oder kann ebenfalls solche Bindungen aufweisen, die jedoch aufgrund von z. B. Polyvalenzeffekten oder Chelatbildung nicht so stark sind wie die der Gruppe X$^\S$, sodass das Polymer bis zum Zeitpunkt der Umwandlung der Gruppe Z in die Gruppe X$^\S$ auch weiterhin gut verarbeitbar und in einer bevorzugten Ausführung aus der Schmelze verarbeitbar ist. Gleichzeitig enthält die Haftklebemasse Polymere der Sorte A, die Gruppen mit der allgemeinen Struktur (R$^=$R$^{==}$R$^{===}$C)-Y$^=$ enthalten. R$^=$, R$^{==}$ und R$^{===}$ können unabhängig voneinander gesättigte oder ungesättigte, aliphatische oder aromatische Kohlenwasserstoffreste, die auch untereinander verknüpft sein können, gleicher oder unterschiedlicher Art sein. Es ist im Sinne dieser Erfindung auch möglich, dass das in (R$^=$R$^{==}$R$^{===}$C)-Y$^=$ aufgeführte Kohlenstoffatom selbst ungesättigt ist. In diesem Fall ist dieses Kohlenstoffatom nur mit Y$^=$ und einem oder zwei der Reste R$^=$, R$^{==}$ oder R$^{===}$ verknüpft. Die Reste R$^=$, R$^{==}$ und R$^{===}$ können unabhängig voneinander eine beliebige Anzahl an Heteroatomen beinhalten. Die Reste R$^=$, R$^{==}$ und R$^{===}$ können niedermolekularer oder polymerer Natur sein. Bis zu zwei der Reste R$^=$, R$^{==}$ und R$^{===}$ können außerdem auch Wasserstoffatome sein. Zumindest einer der Reste R$^=$, R$^{==}$ und R$^{===}$ ist durch eine chemische Bindung mit einer Polymerkette der Sorte A verknüpft. Die für die Kopplungsreaktion notwendige Gruppe ist mit $Y^=$ bezeichnet. Die Gruppen $X^§$ und $Y^=$ können gleicher oder verschiedener Art sein. Sind sie verschieden, dann übernimmt eine der Gruppenarten die Donorfunktion und die andere die Akzeptorfunktion, die für die Ausbildung von koordinativen Bindungen erforderlich sind. Sind beide Gruppen von gleicher Art, dann erfolgt die Bildung der koordinativen Bindung über ein Kopplungsreagenz.

Die Gruppen in den Polymeren A und den Füllstoffpartikeln B sind vorteilhaft so aufgebaut, dass sie in der Lage sind, koordinative Bindungen mit Metallen vom Typ M, die elementar, in Form von Metallsalzen oder in Form von Metallkomplexen vorliegen können, ausbilden zu können. Metallkomplexe können auch mehrkernig vorliegen. Einzähnige oder mehrzähnige Segmente können zur Anwendung kommen. Das Kopplungsprinzip ist in Fig. 5 schematisch dargestellt. Zumindest zwei Gruppen vom Typ "Schlüssel" koppeln durch Koordination von M, das die Funktion "Schloss" übernimmt. Bei der Bildung der koordinativen Bindung ("Kopplung") kann sich die Struktur von M zu M' ändern. Dies kann sich in veränderten Oxidationsstufen aber auch in einer veränderten Ligandenstruktur und/oder -zusammensetzung äußern. Beim Einsatz von Metallatomen ist es im Sinne dieser Erfindung insbesondere vorteilhaft, spezielle Vorkehrungen zur Dispersion von M in der Haftklebemasse zu treffen. Dies geschieht bevorzugt durch Wahl besonders geeigneter Gegenionen, wenn es sich um Metallsalze handelt, oder besonders geeignete Komplexliganden, wenn es sich um Metallkomplexe handelt. Geeignete Gegenionen und Komplexliganden übernehmen daher die Funktion von Kompatibilisatoren und Dispergierhilfsmitteln. Es ist besonders vorteilhaft, das Metallatom M in einer schmelzbaren Matrix zu dispergieren, die keine Bestandteile enthält, die mit M koordinative Bindungen eingehen können. Dieses Gemisch wird erst unmittelbar vor der Beschichtung der übrigen Haftklebemassenformulierung, die zumindest eine Polymersorte A und zumindest eine Füllstoffpartikelsorte B enthält, zudosiert.

Besonders bevorzugt ist eine Kopplung unter Verwendung von chelatisierenden Segmenten. Beispiele für Liganden, die als Gruppen zum Einsatz kommen können, sind Bipyridin und Terpyridin sowie deren Derivate, Acetylacetonat und dessen Derivate, Ethylendiamintetraessigsäure und dessen Derivate, Nitrilotriessigsäure und dessen Derivate, Hydroxyethylethylendiamintriessigsäure und dessen Derivate, Diethylentriaminpentaessigsäure und dessen Derivate sowie Carbonsäuren. Diese Aufzählung erhebt nicht den Anspruch auf Vollständigkeit. Dem Fachmann sind vielmehr weitere Systeme bekannt, die erfindungsgemäß eingesetzt werden können. Diese Gruppen sind untereinander nicht reaktiv. Alle diese Gruppen enthaltenen Bestandteile können daher in einem Massestrom verwendet werden. Die Kopplung der Gruppen erfolgt, sobald das Metallatom M enthaltende Gemisch dem Massestrom zugemischt wird, was im Sinne dieser Erfindung unmittelbar vor der Beschichtung geschieht.

Als Metallatome eignen sich im Sinne dieser Erfindung alle diejenigen chemischen Elemente, die in der Lage sind, als Akzeptor für koordinative Bindungen zu wirken. Dies sind Erdalkalimetalle, bevorzugt Ca und/oder Mg, Übergangsmetalle, bevorzugt Ti, Mn, Fe, Co, Ni, Cu, Zn, Mo, Ru, Rh, Pd, W, Re, Os, Ir und/oder Pt sowie Al und Lanthanoide. Geeignete Kompatibilisatoren und Dispergierhilfsmittel für diese erfindungsgemäß einsetzbaren Metallatome sind beispielsweise Alkoholate aliphatischer oder aromatischer, gesättigter oder ungesättigter, eine beliebige Anzahl von Heteroatomen enthaltener Moleküle, die niedermolekularer oder polymerer Natur sein können. Es eignen sich ferner offenkettige oder ringförmige ungesättigte Kohlenwasserstoffe, die eine beliebige Anzahl von Heteroatomen enthalten und die niedermolekularer oder polymerer Natur sein können. Weitere erfindungsgemäß einsetzbare Dispergierhilfsmittel und Kompatibilisatoren für M sind niedermolekulare chelatisierende Verbindungen organischer Art.

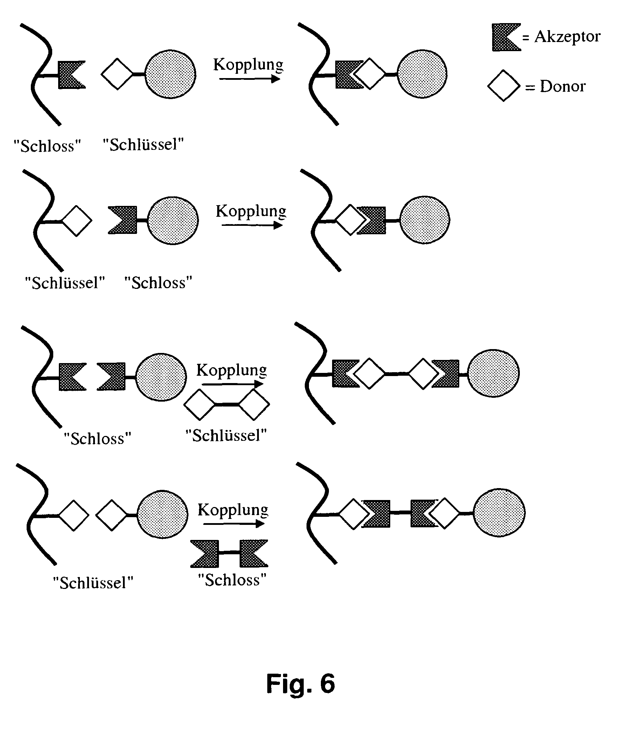

Im Allgemeinen kann M eine Akzeptor-Gruppe ("Schlüssel") sein, die in Verbindung mit einer Donor-Gruppe vom Typ "Schloss" eine koordinative Bindung ausbilden kann. Die Akzeptorgruppe kann in diesem Fall an Polymer A und Füllstoffpartikel B gebunden sein oder auch als Kopplungsreagenzien eingesetzt werden. Dieser allgemeine Fall ist in Fig. 6 schematisch dargestellt. Es ist ferner erfindungsgemäß, mit Akzeptor-Gruppen ausgestattete Polymere A und Füllstoffpartikel B in Kombination mit Donor-Gruppen tragenden Kopplungsreagenzien zu verwenden.

Im Sinne dieser Erfindung können beliebige Kombinationen verschiedener Arten von Kopplungsreaktionen zur Anwendung kommen. Erfindungsgemäß kommt zumindest eine Art von Kopplungsreaktion zum Einsatz.

### *Verfahren zur Herstellung von selbstklebenden Produkten*

Die Herstellung erfindungsgemäßer selbstklebender Produkte umfasst die Prozessschritte des Formulierens/ Compoundierens, der Beschichtung und der Vernetzung.

### *Compoundierverfahren*

Die erfindungsgemäßen Formulierungen können im Falle der Dispersionsklebemassen in Rührkesseln hergestellt werden. Andere Klebemassen können ebenfalls unter Verwendung von Lösungsmitteln in Rührkesseln oder z. B. in Lösungsmittelknetern oder auch durch Einsatz von Hochgeschwindigkeitsdispensern hergestellt werden. Bevorzugt werden solche Formulierungen aber lösungsmittelfrei hergestellt. Dazu bieten sich im diskontinuierlichen Betrieb Kneter an und im kontinuierlichen Betrieb Extruder, wie beispielsweise Doppelschneckenextruder. Als Compoundieraggregate sind im Sinne dieser Erfindung solche geeignet, die dispersive und optional distributive Mischelemente enthalten. Dispersive Mischelemente sorgen dabei für eine möglichst feine Verteilung der Füllstoffpartikel in der Formulierung, während die distributiven Elemente geschmolzene Bestandteile wie Harze oder Polymere im Gemisch der Haftklebemassenformulierung homogenisieren. Im lösungsmittelfreien diskontinuierlichen Betrieb bieten sich insbesondere Banbury-Mischer, Buss-Kneter oder Baker-Perkins Ko-Kneter an. Im kontinuierlichen Betrieb können Doppelschneckenextruder in co-rotierender Fahrweise bevorzugt eingesetzt werden.

*Beschichtungsverfahren*

Als Beschichtungsverfahren können im Sinne dieser Erfindung Rakelverfahren, Düsenrakelverfahren, Rollstabdüsenverfahren, Extrusionsdüsenverfahren, Gießdüsen- und Gießerverfahren zur Anwendung kommen. Ebenfalls erfindungsgemäß sind Auftragsverfahren wie Walzenauftragsverfahren, Druckverfahren, Siebdruckverfahren, Rasterwalzenverfahren, Inkjetverfahren und Sprühverfahren. Zur Speisung des erfindungsgemäßen Beschichtungsaggregats kann zwischen Dosier- und Mischanlage und Beschichtungsaggregat optional ein Förder- und/oder Mischaggregat, z. B. ein Einschnecken- oder Doppelschneckenextruder, zwischengeschaltet sein. Der wahlweise einsetzbare Extruder ist separat beheizbar. An die Beschichtung schließt zumindest im Falle lösungsmittelhaltiger Massesysteme noch ein Trocknungsschritt an.

*Vernetzungsverfahren*

Besonders bevorzugt ist die Initiierung der Vernetzung der Haftklebemasse nach ihrer Beschichtung. Hierzu bietet sich vorteilhaft ein strahlenchemischer Prozess an. Als eine sehr bevorzugte Variante, die im Sinne dieser Erfindung eingesetzt werden kann, sei die Vernetzung mit ultravioletter Strahlung genannt. Mittels kurzzeitiger Einwirkung von Licht in einem Wellenlängenbereich zwischen 200 bis 400 nm wird das beschichtete Material, das in dieser Auslegung der Erfindung die Photoinitiatorfunktionen bevorzugt als Gruppen X und/oder Gruppen Y enthält, bestrahlt und damit vernetzt. Hierzu kommen insbesondere Quecksilber-Hochdruck- oder -Mitteldruck-Lampen bei einer Leistung von 80 bis 240 W/cm zum Einsatz. Weitere Strahlungsquellen, die im Sinne dieser Erfindung einsetzbar sind, sind die dem Fachmann geläufigen Strahlungsquellen. Wahlweise wird das Emissionsspektrum der Lampe auf den eingesetzten Photoinitiator abgestimmt oder die Art des Photoinitiators an das Lampenspektrum angepasst. Die Bestrahlungsintensität wird der jeweiligen Quantenausbeute des UV-Photoinitiators, dem einzustellenden Vernetzungsgrad und der Bahngeschwindigkeit angepasst.

Weiterhin ist es bevorzugt möglich, die erfindungsgemäßen Haftklebemassenformulierungen nach ihrer Beschichtung mit Elektronenstrahlen zu vernetzen. Dies kann auch in Kombination mit einer UV-Vernetzung geschehen. Typische Bestrahlungsvorrichtungen, die zum Einsatz kommen können, sind Linear-Kathodensysteme, Scannersysteme bzw. Segmentkathodensysteme, sofern es sich um Elektronenstrahlbeschleuniger handelt. Typische Beschleunigungsspannungen liegen im Bereich zwischen 50 kV und 1 MV, vorzugsweise 80 kV und 300 kV. Die angewandten Bestrahlungsdosen liegen zwischen 5 bis 250 kGy, insbesondere zwischen 20 und 100 kGy.

Eine weitere vorteilhafte Ausführung ist die Initiierung der Vernetzungsreaktion mittels Schallenergie, wie z. B. Ultraschall, wobei die Gruppe Z in die Gruppe X zerfällt, die erst zur Reaktion mit dem zumindest einen Polymer der Sorte A oder der Gruppe Y, die an das zumindest eine Polymer der Sorte A gebunden ist. In eine besonders vorteilhafte Ausführung dieser Variante erfolgt die Initiierung sowohl bei der diskontinuierlichen als auch bei der kontinuierlichen Prozessführung entweder zwischen der Compoundierung und dem Beschichtungsprozess oder nach der Beschichtung, um die Verarbeitbarkeit der Masse gerade in Hinblick auf eine lösungsmittelfreie Prozessführung zu gewährleisten. Die Schallenergie wird durch Direktbeschall-Hörner erzeugt. Weitere Schallquellen, die im Sinne dieser Erfindung einsetzbar sind, sind die dem Fachmann geläufigen Schallquellen. Die eigentliche Vernetzung erfolgt nach der Aktivierung mittels Schallenergie erfolgt thermisch. Die thermische Energie für die Vernetzungsreaktion wird dann entweder den vorgeheizten Masseströmen entnommen, durch Einstellung einer Temperatur des Beschichtungsaggregats zur Verfügung gestellt oder über einen Wärmekanal bzw. eine Infrarotstrecke nach der Beschichtung realisiert. Es ist ebenfalls erfindungsgemäß möglich, die in einer oder mehreren exothermen Reaktionen freiwerdende thermische Energie zum Ablauf dieser thermischen Reaktion zu nutzen. Kombinationen dieser Verfahrensmöglichkeiten insbesondere mit den strahlenchemischen Vernetzungsverfahren sind im Sinne dieser Erfindung möglich.

Typischerweise werden Direktbeschall-Hörner eingesetzt, deren Leistung im Bereich zwischen 50 W und 16 kW liegen, vorzugsweise 1 kW und 16 kW. Die angewandten Frequenzen liegen zwischen 20 kHz bis 2 MHz, insbesondere zwischen 20 und 30 kHz.

Im Sinne dieser Erfindung ist es weiterhin besonders bevorzugt, die Vernetzung durch Einwirkung thermischer Energie zu realisieren. Dies kann optional in Kombination mit einem oder mehreren strahlenchemischen Verfahren geschehen. Wird thermische Energie zur Initiierung der Vernetzungsreaktion verwendet, dann ist darauf zu achten, dass der Vernetzungsprozess während der Beschichtung noch nicht zu weit fortgeschritten ist, da sich dadurch das Beschichtungsverhalten der Formulierung ändert. Besonders bevorzugt wird in diesem Fall ein Compound hergestellt, das bereits Füllstoffpartikel der Sorte B und Polymere der Sorte A enthält, die Gruppen X, welche mittels elektrochemischer Strahlung, Partikelstrahlung, Schallenergie oder besonders vorteilhaft thermischer Energie durch eine chemische Reaktion, Dissoziation oder Zersetzung aus der Gruppe Z hervorgeht, und Y jedoch so ausgewählt sind, dass sie direkt nicht miteinander reagieren können sondern nur durch Vermittlung eines Vernetzers oder eines Kopplungsreagenzes. Vernetzer oder Kopplungsreagenz werden dann bevorzugt unmittelbar vor der Beschichtung dem ansonsten fertig homogenisierten Compound zudosiert und mit ihm vermischt. Optional wird ein Zwei- oder Mehrkomponentenprozess durchgeführt, wobei das besonders Vorteilhafte dieser Erfindung aufgrund der Schützung bzw. Blockierung der Gruppe X darin besteht, das bei diesem Prozess alle Rohstoffe nicht auf zumindest zwei Massevorräte aufgeteilt werden müssen, so dass eine räumliche Trennung bis unmittelbar vor der Beschichtung all derjenigen Rohstoffe gewährleistet wird, die zu einer Reaktion miteinander in der Lage sind. Bei einer thermischen Umwandlung bzw. Entschützung der Gruppe Z in die Gruppe X ist es von Vorteil, während der Compoundierung ein Temperaturprofil einzustellen, so dass die zu der Umwandlung bzw. Entschützung benötigte Temperatur, die besonders bevorzugt deutlich höher als die normalen Prozesstemperaturen ist, erst kurz vor der Entnahme der Klebemasse z. B. aus dem Kneter bei einem diskontinuierlichen Verfahren oder bei einem kontinuierlichen Verfahren erst kurz vor Austritt aus dem Compoundieraggregat erreicht wird, um eine zu starke Vernetzung bei der Mischung zu verhindern. Die thermische Energie für die Vernetzungsreaktion wird dann entweder den vorgeheizten Masseströmen entnommen, durch Einstellung einer Temperatur des Beschichtungsaggregats zur Verfügung gestellt oder über einen Wärmekanal bzw. eine Infrarotstrecke nach der Beschichtung realisiert. Es ist ebenfalls erfindungsgemäß möglich, die in einer oder mehreren exothermen Reaktionen freiwerdende thermische Energie zum Ablauf dieser thermischen Reaktion zu nutzen. Kombinationen dieser Verfahrensmöglichkeiten insbesondere mit den strahlenchemischen Vernetzungsverfahren sind im Sinne dieser Erfindung möglich. Erfolgt die Umwandlung bzw. Entschützung der Gruppe Z in die Gruppe X durch elektromagnetische Strahlung, Partikelstrahlung und/oder Schallenergie, so ist es besonders vorteilhaft, sowohl bei einer diskontinuierlichen als auch bei einer kontinuierlichen Prozessführung die Bestrahlung bzw. Beschallung der Klebemasse zwischen der Compoundierung und dem Beschichtungsprozess erfolgen zu lassen, wobei dies mit den schon oben beschriebenen Methoden sowie den Apparaten zur Erzeugung der Strahlung bzw. Ultraschalls geschehen kann. In beiden vorteilhaften Ausführungen der Erfindung wird die thermische Energie für die Vernetzungsreaktion dann entweder den vorgeheizten Masseströmen entnommen, durch Einstellung einer Temperatur des Beschichtungsaggregats zur Verfügung gestellt oder über einen Wärmekanal bzw. eine Infrarotstrecke nach der Beschichtung realisiert. Es ist ebenfalls erfindungsgemäß möglich, die in einer oder mehreren exothermen Reaktionen freiwerdende thermische Energie zum Ablauf dieser thermischen Reaktion zu nutzen.

Sehr bevorzugt im Sinne dieser Erfindung erfolgt die Herstellung erfindungsgemäßer selbstklebender Produkte in einem kontinuierlichen Prozess, bei dem die Verfahrensschritte der Compoundierung, der Beschichtung, der Vernetzung und gegebenenfalls der Trocknung direkt gekoppelt sind und damit ein in-line-Prozess zur Anwendung kommt, wobei einzelne Prozessschritte auch zumindest partiell simultan ablaufen können wie z. B. die Vernetzung und das Trocknen.

### Selbstklebende Produkte

#### Produktaufbauten

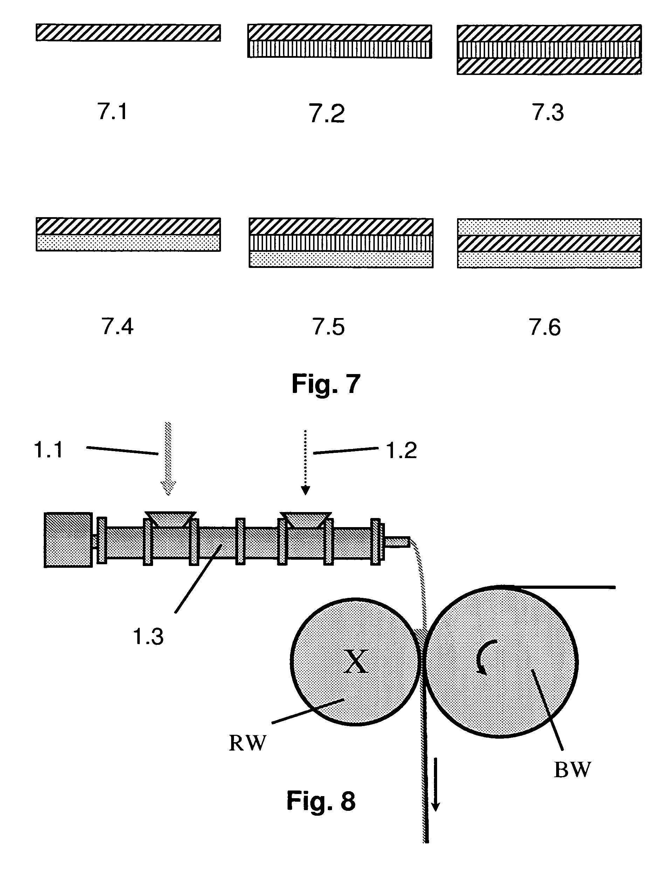

Die durch die erfindungsgemäßen Verfahren hergestellten Haftklebemassen lassen sich zum Aufbau verschiedenartiger selbstklebender Produkte wie beispielsweise Selbstklebebänder oder Selbstklebefolien nutzen. Erfindungsgemäße Aufbauten selbstklebender Produkte sind in Fig. 7 dargestellt. Jede Schicht in den erfindungsgemäßen Selbstklebebandaufbauten kann wahlweise geschäumt sein.

Im einfachsten Fall besteht ein erfindungsgemäßes selbstklebendes Produkt aus der Haftklebemasse in einschichtigem Aufbau (Aufbau in Fig. 7.1). Dieser Aufbau kann optional einseitig oder beidseitig mit einem Trennliner, z. B. einer Trennfolie oder einem Trennpapier eingedeckt werden. Die Schichtdicke der Haftklebemasse beträgt typischerweise zwischen 1 $\mu$m und 2000 $\mu$m, bevorzugt zwischen 5 $\mu$m und 1000 $\mu$m.

Die Haftklebemasse kann sich ferner auf einem Träger, insbesondere einem Folien- oder Papierträger oder einem textilen Flächengebilde befinden (Aufbau in Fig. 7.2). Der Träger kann dabei auf der zur Haftklebemasse zeigenden Seite dem Stand der Technik entsprechend vorbehandelt sein, so dass beispielsweise eine Verbesserung der Haftklebemasseverankerung erzielt wird. Ebenso kann die Seite mit einer funktionalen Schicht ausgerüstet sein, die beispielsweise als Sperrschicht fungieren kann. Die Trägerrückseite kann dem Stand der Technik entsprechend vorbehandelt sein, so dass beispielsweise eine Trennwirkung erreicht wird. Die Trägerrückseite kann ferner bedruckt sein. Die Haftklebemasse kann optional mit einem Trennpapier oder einer Trennfolie eingedeckt werden. Die Haftklebemasse weist eine typische Schichtdicke zwischen 1 $\mu$m und 2000 $\mu$m, bevorzugt zwischen 5 $\mu$m und 1000 $\mu$m auf.

Bei dem Aufbau gemäß Fig. 7.3 handelt es sich um ein doppelseitiges selbstklebendes Produkt, das als Mittelschicht z. B. eine Trägerfolie, ein Trägerpapier, ein textiles Flächengebilde, einen Trägerschaum oder ein viskoelastisches polymeres Trägermaterial enthält. In diesem Aufbau kommen als obere und untere Schicht erfindungsgemäße Haftklebemassen gleicher oder verschiedener Art und/oder gleicher oder verschiedener Schichtdicke zur Anwendung. Der Träger kann dabei auf einer oder beiden Seiten dem Stand der Technik entsprechend vorbehandelt sein, so dass beispielsweise eine Verbesserung der Haftklebemassenverankerung erzielt wird. Ebenso können eine oder beide Seiten mit einer funktionalen Schicht ausgerüstet sein, die beispielsweise als Sperrschicht fungieren kann. Die Haftklebemasseschichten können optional mit Trennpapieren oder Trennfolien eingedeckt werden. Typischerweise weisen die Haftklebemasseschichten unabhängig voneinander Schichtdicken zwischen 1 $\mu$m und 2000 $\mu$m, bevorzugt zwischen 5 $\mu$m und 1000 $\mu$m auf.

Als weiteres doppelseitiges selbstklebendes Produkt ist der Aufbau gemäß Fig. 7.4 eine erfindungsgemäße Variante. Eine erfindungsgemäße Haftklebemasseschicht trägt auf einer Seite eine weitere Haftklebemassenschicht, die aber beliebiger Natur sein kann und daher nicht erfindungsgemäß sein braucht. Der Aufbau dieses selbstklebenden Produkts kann optional mit einem oder zwei Trennfolien oder Trennpapieren eingedeckt sein. Die Haftklebemasseschichten weisen unabhängig voneinander Schichtdicken zwischen typischerweise 1 $\mu$m und 2000 $\mu$m, bevorzugt zwischen 5 $\mu$m und 1000 $\mu$m auf.

Wie beim Aufbau in Fig. 7.4 handelt es sich auch bei dem Aufbau gemäß Fig. 7.5 um ein doppelseitiges selbstklebendes Produkt, das eine erfindungsgemäße Haftklebemasse enthält sowie eine beliebige weitere. Die beiden Haftklebemasseschichten sind in Fig. 7.5 jedoch durch einen Träger, eine Trägerfolie, ein Trägerpapier, ein textiles Flächengebilde, einen Trägerschaum oder ein viskoelastisches polymeres Trägermaterial voneinander getrennt. Der Träger kann dabei auf einer oder beiden Seiten dem Stand der Technik entsprechend vorbehandelt sein, so dass beispielsweise eine Verbesserung der Haftklebemassenverankerung erzielt wird. Ebenso können eine oder beide Seiten mit einer funktionalen Schicht ausgerüstet sein, die beispielsweise als Sperrschicht fungieren kann. Die Haftklebemasseschichten können optional mit Trennpapieren oder Trennfolien eingedeckt werden. Die Haftklebemasseschichten weisen unabhängig voneinander Schichtdicken zwischen typischerweise 1 $\mu$m und 2000 $\mu$m, bevorzugt zwischen 5 $\mu$m und 1000 $\mu$m auf.

Das erfindungsgemäße selbstklebende Produkt nach Fig. 7.6 enthält eine Schicht erfindungsgemäßen Materials als Mittelschicht, die auf beiden Seiten mit beliebigen Haftklebemassen gleicher oder verschiedener Art ausgestattet ist. Eine oder beide Seiten der Mittelschicht können mit einer funktionalen Schicht ausgerüstet sein, die beispielsweise als Sperrschicht fungieren kann. Bei den äußeren Haftklebemasseschichten brauchen keine erfindungsgemäßen Haftklebemassen zum Einsatz kommen. Die äußeren Haftklebemasseschichten können optional mit Trennpapieren oder Trennfolien eingedeckt werden. Die äußeren Haftklebemasseschichten weisen unabhängig voneinander Schichtdicken zwischen typischerweise 1 $\mu$m und 2000 $\mu$m, bevorzugt zwischen 5 $\mu$m und 1000 $\mu$m auf. Die Dicke der Mittelschicht beträgt typischerweise zwischen 1 $\mu$m und 2000 $\mu$m, bevorzugt zwischen 5 $\mu$m und 1000 $\mu$m.

*Prüfmethoden*

In der Beschreibung dieser Erfindung sind Zahlenwerte für erfindungsgemäße Systeme aufgeführt und es wird Bezug genommen auf Prüfmethoden, mittels derer solche Daten ermittelt werden können. Im Folgenden sind diese Prüfmethoden zusammengestellt.

Bestimmung des Gelanteils (Messmethode A)

Beschichtete und vernetzte lösungsmittelfreie Haftklebemassenproben werden in ein Vliestütchen aus Polyethylen eingeschweißt. Lösliche Bestandteile werden mit Toluol über eine Dauer von drei Tagen unter täglichem Lösungsmittelaustausch extrahiert. Aus der Differenz der Probengewichte vor der Extraktion und nach der Extraktion wird der Gelwert als prozentuale Angabe des Gewichtsanteils des Polymers, das nicht mit Toluol extrahierbar ist, bestimmt.

180° Klebkrafttest (Messmethode B1)

Ein 20 mm breiter Streifen einer auf Polyester als Schicht aufgetragenen Acrylathaftklebemasse wurde auf Stahlplatten aufgebracht, die zuvor zweimal mit Aceton und einmal mit Isopropanol gewaschen wurden. Der Haftklebestreifen wurde zweimal mit einem Anpressdruck entsprechend einem Gewicht von 2 kg auf das Substrat aufgedrückt. Das Klebeband wurde anschließend sofort mit einer Geschwindigkeit von 300 mm/min und in einem Winkel von 180 ° vom Substrat abgezogen. Alle Messungen wurden bei Raumtemperatur durchgeführt.

Die Messergebnisse sind in N/cm angegeben und sind gemittelt aus drei Messungen.

90° Klebkraft Stahl - offene und abgedeckte Seite (Messmethode B2 insbesondere für Dreischichtaufbauten)

Die Bestimmung der Klebkraft Stahl erfolgt bei einem Prüfklima von 23 °C +/- 1 °C Temperatur und 50 % +/- 5 % rel. Luftfeuchte. Die Muster wurden auf 20 mm Breite zugeschnitten und auf eine Stahlplatte geklebt. Die Stahlplatte wird vor der Messung gereinigt und konditioniert. Dazu wird die Platte zunächst mit Aceton abgewischt und danach 5 Minuten an der Luft liegen gelassen, damit das Lösungsmittel abdampfen kann. Die dem Prüfuntergrund abgewandte Seite des Dreischichtverbundes wurde dann mit einer 50 $\mu$m Aluminiumfolie abgedeckt, wodurch verhindert wird, dass sich das Muster bei der Messung dehnt. Danach erfolgte das Anrollen des Prüfmusters auf den Stahluntergrund. Hierzu wurde das Tape mit einer 2 kg Rolle 5 mal hin und her, bei einer Aufrollgeschwindigkeit von 10 m/min, überrollt. Unmittelbar nach dem Anrollen wurde die Stahlplatte in eine spezielle Halterung geschoben, die es ermöglicht das Muster in einem Winkel von 90 °C senkrecht nach oben abzuziehen. Die Klebkraftmessung erfolgte mit einer Zwick-Zugprüfmaschine. Beim Applizieren der abgedeckten Seite auf die Stahlplatte wird die offene Seite des Dreischichtverbundes zunächst gegen die 50 $\mu$m Aluminiumfolie kaschiert, das Trennmaterial entfernt und auf die Stahlplatte geklebt, analog angerollt und vermessen.

Die Messergebnisse beider Seiten, offen und abgedeckt, sind in N/cm angegeben und sind gemittelt aus drei Messungen.

Bestimmung der Scherstandzeit (Messmethode C)

Die Prüfung erfolgt in Anlehnung an PSTC-7. Auf eine 25 $\mu$m dicke PET-Folie wird eine 50 $\mu$m dicke Haftklebeschicht aufgebracht. Ein 1,3 cm breiter Streifen dieses Musters wird auf einem polierten Stahlplättchen auf einer Länge von 2 cm mit einer 2 kg-Rolle durch zweimaliges doppeltes Überrollen verklebt. Die Plättchen werden für 30 min unter Testbedingungen (Temperatur und Luftfeuchtigkeit), aber ohne Last äquilibriert. Dann wird das Testgewicht angehängt, so dass eine Scherbeanspruchung parallel zur Verklebungsfläche entsteht, und die Zeit gemessen, bis die Verklebung versagt.

Mikroschertest (Messmethode D)

Dieser Test dient der Schnellprüfung der Scherfestigkeit von Klebebändern unter Temperaturbelastung.

*Messprobenpräparation für Mikroschertest:*

Ein aus dem jeweiligen Probenmuster geschnittenes Klebeband (Länge ca. 50 mm, Breite 10 mm) wird auf eine mit Aceton gereinigte Stahl-Prüfplatte verklebt, so dass die Stahlplatte das Klebeband rechts und links überragt und dass das Klebeband die Prüfplatte am oberen Rand um 2 mm überragt. Die Verklebungsfläche der Probe beträgt Höhe x Breite = 13mm x 10 mm. Die Verklebungsstelle wird anschließend mit einer 2 kg-Stahlrolle und einer Geschwindigkeit von 10 m/min sechsmal überrollt. Das Klebeband wird bündig mit einem stabilen Klebestreifen verstärkt, der als Auflage für den Wegmessfühler dient. Die Probe wird mittels der Prüfplatte senkrecht aufgehängt.

*Mikroschertest:*

Das zu messende Probenmuster wird am unteren Ende mit einem Gewicht von 100 g belastet. Die Prüftemperatur beträgt 40°C, die Prüfdauer 30 Minuten (15 Minuten Belastung und 15 Minuten Entlastung). Die Scherstrecke nach der vorgegebenen Testdauer bei konstanter Temperatur wird als Ergebnis in $\mu$m angegeben, und zwar als Maximalwert ["max"; maximale Scherstrecke durch 15 minütige Belastung]; als Minimalwert ["min"; Scherstrecke ("Restauslenkung") 15 min nach Entlastung; bei Entlastung erfolgt eine Rückbewegung durch Relaxation]. Angegeben wird ebenfalls der elastische Anteil in Prozent ["elast"; elastischer Anteil = (max - min)*100 / max].

SAFT-Shear.Adhesive.Failure Temperaturen (Messmethode E)

Der SAFT-Test ist eine Schnellprüfung der Kurzzeittemperaturbeständigkeit der Klebemassen bzw. Klebebänder. Die Muster wurden mit einer 50 $\mu$m Aluminiumfolie verstärkt und die verbleibende Klebeseite auf eine geschliffene, mit Aceton gereinigte Stahl-Prüfplatte verklebt und anschließend mit einer 2 kg-Stahlrolle und einer Geschwindigkeit von 10 m/min sechsmal überrollt. Die Verklebungsfläche der Probe betrug, Höhe x Breite, 13 mm x 10 mm. Der obere Teil des Musters, der die Prüfplatte um 2 mm überragt, wurde mit einem stabilen Klebestreifen verstärkt. Dort wurde, nachdem die Probe senkrecht aufgehängt wurde, der Wegemessfühler aufgelegt. Die zu messende Probe wurde am unteren Ende mit einem Gewicht von 50 g belastet. Die Stahl-Prüfplatte mit der verklebten Probe wurde dann, beginnend bei 25 °C, mit einer Rate von 9°C pro Minute auf die Endtemperatur von 200°C aufgeheizt. Gemessen wurde der Rutschweg der Probe mittels Wegmessfühler in Abhängigkeit von Temperatur und Zeit. Beendet wurde die Messung bei Erreichen der vorgesehenen Endtemperatur oder bei Erreichen einer Rutschstrecke von > 1000 $\mu$m.

Der SAFT-Test kann zwei Prüfmerkmale liefern: SAFT-Scherweg oder SAFT-Kurzzeittemperaturbeständigkeit. Der SAFT-Scherweg ist die Rutschstrecke in $\mu$m bei Erreichen der Endtemperatur. Die SAFT-Kurzzeittemperaturbeständigkeit ist die Temperatur, bei der eine Rutschstrecke von 1000 $\mu$m erreicht wird. Angegeben ist jeweils der Mittelwert einer Doppelbestimmung.

K-Wert (nach FIKENTSCHER) (Messmethode F)

Der K-Wert ist ein Maß für die durchschnittliche Molekülgröße hochpolymerer Stoffe. Zur Messung wurden einprozentige (1g/100 ml) toluolische Polymerlösungen herstellt und mit Hilfe eines VOGEL-OSSAG-Viskositmeters deren kinematische Viskositäten bestimmt. Nach Normierung auf die Viskosität des Toluols wird die relative Viskosität erhalten, aus der sich nach FIKENTSCHER der K-Wert errechnen lässt (Polymer 8/1967, 381 ff.)

Gelpermeationschromatoaraphie GPC (Messmethode G):

Die Angaben des gewichtsmittleren Molekulargewichtes $M_w$ und der Polydispersität PD in dieser Schrift beziehen sich auf die Bestimmung per Gelpermeationschromatographie. Die Bestimmung erfolgt an 100 $\mu$L klarfiltrierter Probe (Probenkonzentration 4 g/L). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5$\mu$, $10^3$ Å, ID 8,0 mm x 50 mm verwendet. Zur Auftrennung werden die Säulen des Typs PSS-SDV, 5$\mu$, $10^3$ Å sowie $10^5$ Å und $10^6$ Å mit jeweils ID 8,0 mm x 300 mm eingesetzt (Säulen der Firma Polymer Standards Service; Detektion mittels Differentialrefraktometer Shodex RI71). Die Durchflussmenge beträgt 1,0 mL pro Minute. Die Kalibrierung erfolgt gegen PMMA-Standards (Polymethylmethacrylat-Kalibrierung)].

Feststoffgehalt (Messmethode H)

Der Feststoffgehalt ist ein Maß für den Anteil an nicht verdampfbaren Bestandteilen in einer Polymerlösung. Er wird gravimetrisch bestimmt, indem man die Lösung einwiegt, dann für zwei Stunden bei 120 °C, im Trockenschrank die verdampfbaren Anteile abdampft und den Rückstand zurückwiegt.

Wandhakentest (Messmethode I):

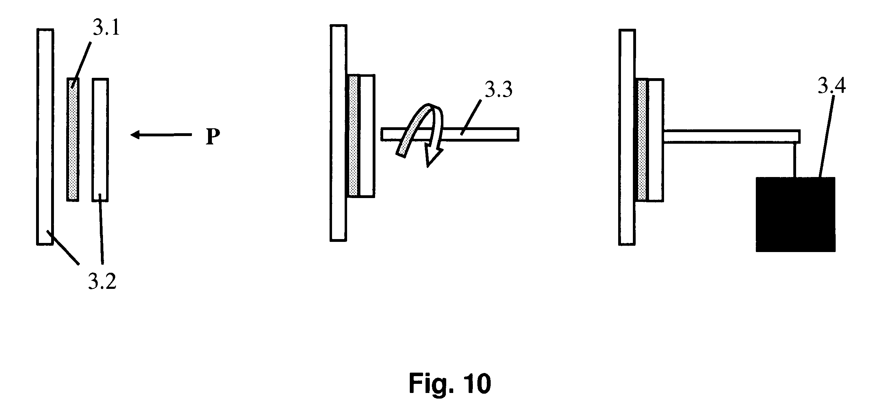

Fig. 10 zeigt die Herstellung der Polyacrylathaftklebeschichten (Schicht A und/oder C). Ein zwischen zwei polierten Stahlplatten (3.2) fixiertes Prüfmuster (3.1) der Größe 30 mm x 30 mm wird 1 Minute lang mit 0,9 kN angedrückt (Kraft P). Danach wird ein 9 cm langer Hebelarm (3.3) in die oberste Stahlplatte eingeschraubt und dieser anschließend mit einem 1000 g Gewicht (3.4) belastet. Es wird darauf acht gegeben, dass die Zeit zwischen Andrücken und Belasten nicht mehr als zwei Minuten beträgt (t $\leq$ 2 min).

Gemessen wird die Haltezeit, d.h. die Zeit zwischen dem Aufhängen und Abfallen des Musters. Als Ergebnis wird die Haltezeit in Minuten als Mittelwert einer Dreifachbestimmung angegeben. Das Prüfklima beträgt 23 °C +/- 1 °C und 50 % r.F. +/- 5 % r.F (r.F. relativer Feuchte).

Es wurde jeweils die offene und die abgedeckte Seite gemessen.

# Tabelle1

| Umwandlung in die Gruppen vom Typ X / Funktionelle Gruppen vom Typ Z | -NCO | -CNR$^a$R$^b$ | -CR$^a$R$^b$-N (Nitren) | -CO$_2$H | R-SH | R-OH | -RHO | -CR$^a$R$^b$• (Radikal) |
|---|---|---|---|---|---|---|---|---|
| –NHCO$_2$R$^1$ | X | X | | | | | | |
| –NH(C=O)NR$^1$R$^2$ | X | X | | | | | | |
| –SO$_2$N$_3$ | | | X | | | | | |
| -CO$_2$C(CH$_3$)$_3$ | | | | X | | | | |
| R-S(C=O)CH$_3$ | | | | | X | | | |
| R-O-C=CH–CH=CH (O) | | | | | | X | | |
| -Oxazolin | | | | X | | | | |
| - O- und S-Acetale | | | | | | | X | |
| -PI | | | | | | | | X |

## Tabelle 2

| Funktionelle Gruppen vom Typ X \ Funktionelle Gruppen vom Typ Y | $-CR^a{=}CR^bR^c$ | $-OC(=O)CR^d{=}CR^aR^b$ | $-OCR^a{=}CR^bR^c$ | Epoxid $-CR^a{-}CR^bR^c$ | $-NCO$ | $-NR^aR^b$ | $-N_3$ | $-OH$ | $-SH$ | $-C(=O)R^a$ | $-CO_2H$ | $-C(=O){-}O{-}C(=O)R^a$ | Zyklisches Säureanhydrid | $-CR^aR^b{\bullet}$ (Radikal) | $-C{\equiv}CR^a$ | $-CR^aR^b{-}N$ (Nitren) | $-CR^eR^fH$ |
|---|---|---|---|---|---|---|---|---|---|---|---|---|---|---|---|---|---|
| $-CR^1{=}CR^2R^3$ | X | X | X | | | X | X | | | X | | | | X | | X | X |
| $-OCR^1{=}CR^2R^3$ | X | X | X | | | X | | | | | | | | X | | X | X |
| Epoxid $-CR^1{-}CR^2R^3$ | | | | X | X | X | | X | X | | X | | | X | | | |
| $-NCO$ | | | | X | X | X | | X | X | | X | | | | | | |
| $-NR^1R^2$ | X | X | | X | X | | | | | X | X | X | X | | | | |
| $-N_3$ | X | X | X | | | | | | | | | | | | X | | |
| $-OH$ | | | | X | X | | | | | X | X | X | | | | | |
| $-SH$ | X | | | X | X | | | | X | X | X | X | | | | | |
| $-C(=O)R^1$ | | | | | | X | | | | X | | | | | | | |
| $-CO_2H$ | | | | X | X | X | | X | | | X | X | | | | | |
| $-C(=O){-}O{-}C(=O)R^1$ | | | | | | X | | X | X | | X | | | | | | |
| Zyklisches Säureanhydrid | | | | | | X | | X | X | | X | | | | | | |
| $-CR^1R^2{\bullet}$ (Radikal) | X | X | X | X | | | | | | | | | | | X | | X |
| $-C{\equiv}CR^1$ | | | | | | | X | | | | | | | X | | X | |
| $-CR^1R^2{-}N$ (Nitren) | X | X | X | | | | | | | | | | | X | | X | |
| $-CR^5R^6H$ | X | X | X | | | | | | | | | | | X | | X | |
| Oxazolin | | | | | | | | | | X | | X | | X | | X | |

**Beispiele**

Verfahren 1: Herstellung der funktionalisierten Polymerpartikel mittels Emulsionspolymerisation

In einem 2-Liter-Glasreaktor werden zu der wässrigen Phase 1 bis 5 Gew.-% Emulgator (bezogen aufs Wasser zugegeben) und fünf bis zehn Minuten gerührt, bis eine klare Lösung sich gebildet und der Schaum sich gesetzt hat. Anschließend wurden 0,1 bis 0,5 Gew.-% Natriumperoxodisulfat (NaPS) als Initiator und 5.0 bis 6.0 ppm Natriumhydrogencarbonat als Puffer zugegeben. Anschließend wurden 15 bis 50 Gew.-% einer Monomerenlösung zugegeben und so lange gerührt, bis keine Phasenseparation mehr feststellbar war. Die Monomerenmischung besteht zu 60 bis 100 Gew.-% aus einem Basismonomer und zu 0 bis 40 Gew.-% aus einem funktionellen Monomer für die Vernetzung sowie 0 bis 40 Gew.-% aus einem Di- oder Triacrylat zur Vernetzung der Partikel. Die Manteltemperatur des Reaktors wird auf 80 °C eingestellt und die Emulsion mit einer Rührergeschwindigkeit von 200 Umdrehungen/min gerührt. Die Polymerisationsdauer beträgt acht Stunden, wonach die Partikel nach Abkühlen ohne weitere Aufarbeitung als Vernetzer verwendet werden können.

Verfahren 2: Herstellung der funktionalisierten Kern-Schale-Partikel

Bei der Herstellung der Kern-Schale-Partikeln handelt es sich um ein zweistufiges Eintopfverfahren, wobei der Kern im batch- und die Schale im semi-batch-Verfahren hergestellt wird. Nach der Darstellung der Saat (Kern) muss die Emulgatorkonzentration [E] kleiner als die CMC (kritische Mizellbildungskonzentration) sein, um eine Zweitpartikelnukleierung zu verhindern, wodurch eine bimodale bzw. polymodale Partikelgrößenverteilung resultieren würde und die Herstellung der Kern-Schale-Partikel nicht gewährleistet wäre. Aus diesem Grund muss die Monomermischung für die Schale langsam zudosiert werden, damit es aufgrund der niedrigen Emulgatorkonzentration und der schon mit Monomeren gequollenen Saatlatexpartikel nicht zu einer Phasentrennung kommt. Weiterhin müssen zusätzlich Initiator, Emulgator und Puffer bei der Herstellung der Schale zudosiert werden, um einen stabilen Prozess zu gewährleisten (keine Zweitpartikelnukleierung, keine Phasentrennung und kein Sedimentieren der Polymerpartikeln). Die Saat wurde nach Verfahren 1 herstellt. Ebenfalls wird nach diesem Verfahren mittels Formel 1 die entsprechende kritische Emulgatormenge [E] ermittelt, bei der eine Zweitpartikelnukleierung ausgeschlossen ist.

$$[E] \leq \frac{6m_s}{N_a a_e \rho_p d_s V_r}\left(\frac{\rho_p vt}{m_s} + 1\right)^{\frac{2}{3}} + CMC \qquad [1]$$

Hierbei sind:

$m_s$:    Masse des dispergierten Polymers
$N_a$:    Avogadro Konstante
$a_e$:    Fläche, die ein Emulgatormolekül bei der Adsorption besetzt
$\rho_s$:    Polymerdichte
$d_s$:    Saatpartikeldurchmesser
$V_r$:    Reaktorvolumen
$v$:    Zulaufgeschwindigkeit
$t$:    Zulaufzeit

Zur Dispersion der Saat-Partikel wurden zum einen Emulgator, Puffer, Initiator und Wasser und zum anderen die Monomermischung separat mit einer definierten Geschwindigkeit zugetropft. Die Zutropfgeschwindigkeit der Emulgatormischung betrug 2 mL/min und die der Monomermischung 1,5 mL/min. Der Grund für die unterschiedliche Tropfgeschwindigkeit ist, dass die Emulgatormischung die Monomermischung mengenmäßig überwiegt und dass immer ausreichend Emulgator vorhanden sein muss, um die wachsenden Partikel zu stabilisieren und dadurch ein Koagulieren zu verhindern. Anhand der Formel zur Berechnung der kritischen Emulgatorkonzentration wird eine Konzentration von [E] ≤ 0,03 mol/L (≈ 2,4 g in 300 mL Reaktionsvolumen) bei einer Zutropfgeschwindigkeit von v = 2 mL/min, einer Zutropfzeit t von 125 min und einer CMC von 10 mmol/L berechnet.

Beispiel organische funktionalisierte Füllstoffpartikel F1-F12

Die Partikel wurden nach Verfahren 1 hergestellt, wobei die genauen Mengenangaben in Tabelle 3 aufgelistet sind. Für die Beispiele F1 bis F12 wurden folgende Chemikalien verwendet: Methylacrylat (MA, FLUKA CHEMIE GMBH), Methylmethacrylat (MMA, FLUKA CHEMIE GMBH), Isobornylacrylat (IBOA, FLUKA CHEMIE GMBH), Dipropylenglykoldiacrylat (DPGDA, UCB-CHEMIE), Trimethylolpropantriacrylat (TMPTA, RÖHM GMBH), Hydroxypropylmethacrylat (HPMA, RÖHM GMBH), Benzoinarylat, Benzophenonacrylat (Ebecryl P36™, UCB-CHEMIE), Natriumperoxodisulfat (NaPS, MERCK), Natriumhydrogencarbonat (MERCK), Natriumdodecylsulfat (SDS, MERCK), Hitenol BC 10 ($\alpha$-Sulfo, $\omega$-[1-[(nonylphenoxy)methyl]-2-(2-propenyloxy)ethoxy]-poly-(oxy-1,2-ethandiyl)-ammoniumsulfat, DAI-ICHI KOGYO SEIYAKU CO., LTD.).

## Tabelle 3:

| Rezeptur | F1 | F2 | F3 | F4 | F5 | F6 |
|---|---|---|---|---|---|---|
| | Masse [g] | Masse [g] | Masse [g] | Masse [g] | Masse [g] | Masse [g] |
| MA | 0 | 40,00 | 35,00 | 0 | 0 | 0 |
| MMA | 50 | 0 | 0 | 47,50 | 45,00 | 40,00 |
| TMPTA | 0 | 5,00 | 5,00 | 0 | 0 | 0 |
| Benzophenonacrylat | 0 | 5,00 | 10,00 | 2,50 | 5,00 | 10,00 |
| NaPS | 0,44 | 0,46 | 0,46 | 0,46 | 0,46 | 0,46 |
| NaHCO$_3$ | 0,14 | 0,14 | 0,14 | 0,14 | 0,14 | 0,14 |
| SDS | 5,00 | 5,00 | 5,00 | 5,00 | 5,00 | 5,00 |
| H$_2$O | 250,00 | 250,00 | 250,00 | 250,00 | 250,00 | 250,00 |

| Rezeptur | F7 | F8 | F9 | F10 | F11 | F12 |
|---|---|---|---|---|---|---|
| | Masse [g] | Masse [g] | Masse [g] | Masse [g] | Masse [g] | Masse [g] |
| MMA | 48,00 | 20,00 | 40,00 | 37,50 | 40,00 | 37,50 |
| IBOA | 3,00 | 1,25 | 0 | 0 | 0 | 0 |
| DPGDA | 6,00 | 1,25 | 0 | 0 | 0 | 0 |
| Benzoinacrylat | 3,00 | 2,00 | 0 | 0 | 0 | 0 |
| HPMA | 0 | 0 | 10,00 | 12,50 | 10,00 | 12,50 |
| NaPS | 0,06 | 0,3 | 0,46 | 0,46 | 0,46 | 0,46 |
| NaHCO$_3$ | 0,07 | 0,07 | 0,14 | 0,14 | 0,14 | 0,14 |
| SDS | 7,50 | 2,50 | 5,00 | 5,00 | 0 | 0 |
| Hitenol BC 10 | 0 | 0 | 0 | 0 | 9,3 | 9,3 |
| H$_2$O | 250,00 | 250,00 | 250,00 | 250,00 | 250,00 | 250,00 |

Es wurden stabile Dispersionen erhalten und die Partikeldurchmesser lagen bei allen Füllstoffen im Bereich zwischen 30 und 55 nm, was mittels dynamischer Lichtstreuung ermittelt wurde.

Beispiel F13-F14: Darstellung von Kern-Schale-Partikel

Die Kern-Schale-Partikel wurden nach Verfahren 2 hergestellt, wobei die genauen Mengenangaben in Tabelle 4 aufgelistet sind.

**Tabelle 4:**

|  | F13 | | F14 | |
|---|---|---|---|---|
|  | **Kern1** | **Schale1** | **Kern2** | **Schale2** |
|  | **Masse [g]** | **Masse [g]** | **Masse [g]** | **Masse [g]** |
| MMA | 50,00 | 30,00 | 20,00 | 18,00 |
| IBOA | 0 | 0 | 1,25 | 0 |
| DPGDA | 0 | 0 | 1,25 | 0 |
| Benzophenonacrylat | 0 | 3,30 | 0 | 0 |
| Benzoinacrylat | 0 | 0 | 0 | 2,00 |
| NaPS | 0,46 | 0,46 | 0,23 | 0,23 |
| NaHCO$_3$ | 0,14 | 0,14 | 0,07 | 0,07 |
| SDS | 5,00 | 2,20 | 2,50 | 2,50 |
| H$_2$O | 250,00 | 250,00 | 250,00 | 250,00 |

Durch die Bestimmung der Partikelgröße mittels dynamischer Lichtstreuung lässt sich anhand des Durchmessers der Kern-Partikel und der Kern-Schale-Partikel der reale Volumenzuwachs bestimmen, der bei der Darstellung der Kern-Schale-Partikel entsteht. Der theoretische Volumenzuwachs kann mit Hilfe der Molmassen der Monomere, deren Dichte und der Anzahl an Latexpartikeln ermittelt werden.

**Tabelle 5:**

| **Strukur** | **d (gemessen) [nm]** | **d (berechnet) [nm]** |
|---|---|---|
| Kern 1 | 31,0 | - |
| Kern-Schale 1 | 35,9 | 35,5 |
| Kern 2 | 37,0 | - |
| Kern-Schale 2 | 42,9 | 43,2 |

Verfahren 3: Herstellung der modifizierten Haftkleber in Lösung und Labormuster

Zu einer Polymerdispersion mit einem Feststoffgehalt zwischen 40 und 60 Gew.-% wurden die jeweiligen Mengen an Harzdispersion, Alterungsmitteln, funktionalisierten organischen Füllstoffen (vorliegend als Dispersion) und falls erforderlich zusätzlichen Vernetzungsreagenzien gegeben und das Gemisch mit einem Propellerrührer homogenisiert. Teilweise wurden auch weitere Mengen an Wasser zugegeben um eine für die Ausstriche geeignete Viskosität einzustellen. Anschließend wurde das Gemisch mit einer Rakel auf einem Träger (Folie, Papier) mit einem definierten Masseauftrag (Flächengewicht) ausgestrichen und das Labormuster bei erhöhter Temperatur im Trockenschrank getrocknet.

Beispiele Dispersionsklebemasse D1-D10

Zu der Dispersionsklebemasse Primal 83-B von ROHM & HAAS wurden nach Verfahren 3 die funktionalisierten organischen Nanopartikel als Vernetzer zugegeben, wobei die Konzentration der Füllstoffe 1, 5, und 10 Gew.-% betrug. Der Feststoffgehalt liegt bei 50% und es wurden Labormuster mit einem Masseauftrag von 50 g/m$^2$ auf einer 25 $\mu$m dicken PET-Folie (LAUFENBERG GMBH) hergestellt. Die Labormuster wurden anschließend mittels UV-Strahlung mit einer Leistung von 50 mJ/cm$^2$ (Quecksilberniederdruckstrahler, ELTOSCH GMBH) vernetzt und die klebtechnischen Eigenschaften wie Scherstandszeiten und Klebkraft auf Stahl nach Meßmethode B1 und C gemessen (siehe Tabelle 6).

**Tabelle 6: KK: Klebkraft auf Stahl in [N/cm], SSZ: Scherstandszeit in [Min]**

| Partikelkonzentration [Gew.-%] | Messung | keine Partikel | F1 / D1 | F2 / D2 | F3 / D3 | F4 / D4 | F5 / D5 | F6 / D6 | F7 / D7 | F8 / D8 | F13 / D9 | F14 / D10 |
|---|---|---|---|---|---|---|---|---|---|---|---|---|
| | | | **Partikeltyp/Klebemasse** | | | | | | | | | | |
| 0 | KK | 1,56 | - | - | - | - | - | - | - | - | - | - |
| 0 | SSZ | 316 | - | - | - | - | - | - | - | - | - | - |
| 1 | KK | - | 1,50 | 1,55 | 1,42 | 1,38 | 1,39 | 1,66 | 1,32 | 1,24 | 1,49 | 1,51 |
| 1 | SSZ | - | 384 | 560 | 574 | 9079 | 6281 | >10000 | 996 | 1058 | 640 | 2832 |
| 5 | KK | - | 1,33 | 1,44 | 1,41 | 1,10 | 1,15 | 1,21 | 1,16 | 1,12 | 1,49 | 1,48 |
| 5 | SSZ | - | 401 | 1230 | 1309 | 5482 | >10000 | >10000 | 1699 | 1954 | 2004 | 4905 |
| 10 | KK | - | 1,18 | 1,02 | 1,15 | 0,46 | 0,12 | 0,09 | 1,01 | 0,96 | 1,11 | 1,15 |
| 10 | SSZ | - | 408 | 5601 | 5021 | 4146 | 5071 | >10000 | 2110 | 2356 | 3985 | 3675 |

**Tabelle 7: KK: Klebkraft auf Stahl in [N/cm], MSW: Mikroscherweg in [$\mu$m]**

| Partikelkonzentration [Gew.-%] | | Partikeltyp / Klebemasse; | | | | | | | |
|---|---|---|---|---|---|---|---|---|---|
| | Messung | Vergleich 1 IcapLink X 5 | Vergleich 2 Epocros WS-700 | F9 / D11 | F10 / D12 | F11 / D13 | F12 / D14 | Epocros K2020 / D15 | Epocros K2030 / D16 |
| 1 | KK | 3,3 | 3,5 | 3,7 | 3,4 | 3,6 | 3,3 | 4,1 | 3,4 |
| 1 | MSW | 80 | 500 | 66 | 60 | 72 | 58 | 81 | 88 |
| 2,5 | KK | - | - | 3,2 | 2,9 | 3,2 | 2,9 | 3,6 | 3,2 |
| 2,5 | MSW | - | - | 54 | 44 | 56 | 42 | 52 | 45 |

Beispiele Dispersionsklebemasse D11-D16

Zu der Dispersionsklebemassen Robond PS-8120 (ROHM & HAAS) mit 30 Gew.-% Klebharz Snowtack SE 780 G (ROHM & HAAS wurden nach Verfahren 3 die funktionalisierten organischen Nanopartikel als Vernetzer (F9 bis F12 sowie Epocros K2020 E und Epocros K2030 E (NIPPON SHOKUBAI) zugegeben, wobei die Konzentration der Füllstoffe 1 und 2,5 Gew.-% betrug. Bei den Vernetzern F9 bis F12 wurde als Brückenbildner zwischen dem Polymer und den organischen Nanopartikeln noch 0,8 Gew.-% des blockierte Isocyanat IcapLink X5 (ICAP-SIRA) zugegeben. Als Vergleichsprobe wurden die jeweiligen Dispersionsklebemassen auch nur mit IcapLink X5 versetzt, welches an sich auch zu einer Vernetzung führen kann sowie der Vernetzer Epocros WS-700, welches eine wasserlösliche Form des Epocross K2020 E ist und keine Partikelmorphologie aufweist. Der Feststoffgehalt liegt bei 50% und es wurden Labormuster mit einem Masseauftrag von 50 g/m$^2$ auf einer 25 μm dicken PET-Folie (LAUFENBERG GMBH) hergestellt und anschließend 5 Minuten bei 105°C getrocknet. Die klebtechnischen Eigenschaften wie Mikroscherweg und Klebkraft auf Stahl nach Meßmethode C und D gemessen (siehe Tabelle 7).

Herstellung der Ausgangspolymere für die Beispiele PSA B1 bis B10

Im Folgenden wird die Präparation der Ausgangspolymere beschrieben. Die untersuchten Polymere werden konventionell über eine freie radikalische Polymerisation in Lösung hergestellt.

Basispolymer P1

Ein für radikalische Polymerisationen konventioneller Reaktor wurde mit 45 kg 2-Ethylhexylacrylat, 45 kg n-Butylacrylat, 5 kg Methylacrylat, 5 kg Acrylsäure und 66 kg Aceton/Isopropanol (92,5:7,5) befüllt. Nach 45minütiger Durchleitung von Stickstoffgas unter Rühren wurde der Reaktor auf 58 °C hochgeheizt und 50 g AIBN (2,2'-Azobis(2-methylpropionitril), Vazo® 64, DUPONT) hinzu gegeben. Anschließend wurde das äußere Heizbad auf 75 °C erwärmt und die Reaktion konstant bei dieser Außentemperatur durchgeführt. Nach 1 h wurden erneut 50 g AIBN zugegeben und nach 4 h wurde mit 20 kg Aceton/Isopropanol Gemisch verdünnt.

Nach 5 sowie nach 7 h wurde jeweils mit 150 g Bis-(4-*tert*-butylcyclohexyl)-peroxydicarbonat (Perkadox® 16, AKZO NOBEL) nachinitiiert. Nach 22 h Reaktionszeit wurde die Polymerisation abgebrochen und auf Raumtemperatur abgekühlt. Das Polyacrylat hat einen Umsatz von 99,6 %, einen K-Wert von 59, einen Feststoffgehalt von 54 %, ein mittleres Molekulargewicht von Mw = 557.000 g/mol, Polydispersität PD (Mw/Mn) = 7,6.

Basispolymer P2

Ein für radikalische Polymerisationen konventioneller Reaktor wurde mit 47,5 kg 2-Ethylhexylacrylat, 47,5 kg n-Butylacrylat, 5 kg Acrylsäure, 150 g Dibenzoyltrithiocarbonat und 66 kg Aceton befüllt. Nach 45minütiger Durchleitung von Stickstoffgas unter Rühren wurde der Reaktor auf 58 °C hochgeheizt und 50 g AIBN (Vazo® 64, DUPONT) hinzugegeben. Anschließend wurde das äußere Heizbad auf 75 °C erwärmt und die Reaktion konstant bei dieser Außentemperatur durchgeführt. Nach 1 h wurden erneut 50 g AIBN zugegeben. Nach 4 h verdünnte man mit 10 kg Aceton. Nach 5 und nach 7 h erfolgte eine Zugabe von jeweils 150 g Bis-(4-tert-butylcyclohexyl)peroxydicarbonat. Nach 22 h Reaktionszeit wurde die Polymerisation abgebrochen und auf Raumtemperatur abgekühlt.
Das Polyacrylat hat einen Umsatz von 99,5 %, einen K-Wert von 41,9, einen Feststoffgehalt von 56,5 %, ein mittleres Molekulargewicht von Mw = 367.000 g/mol, Polydispersität PD (Mw/Mn) = 2,8.

Basispolymer P3

Analog Beispiel P1 wurden 68 kg 2-Ethylhexylacrylat, 25 kg Methylacrylat und 7 kg Acrylsäure in 66 kg Aceton/Isopropanol (92,5:7,5) polymerisiert.
Das Polyacrylat hat einen Umsatz von 99,7 %, einen K-Wert von 51, einen Feststoffgehalt von 55,0 %, ein mittleres Molekulargewicht von Mw = 657.000 g/mol, Polydispersität PD (Mw/Mn) = 8,2.

Verfahren 4: Aufkonzentration / Herstellung der Schmelzhaftkleber

Die Acrylatcopolymere (Basispolymere P1 bis P3) werden mittels Einschneckenextruder (Aufkonzentrationsextruder, Berstorff GmbH, Deutschland) weitestgehend vom Lösemittel befreit (Restlösemittelgehalt ≤ 0,3 Gew.-%; vgl. bei den einzelnen Beispielen). Exemplarisch sind hier die Parameter der Aufkonzentration des Basispolymeren P1 dargestellt. Die Drehzahl der Schnecke betrug 150 U/min, der Motorstrom 15 A, es wurde ein Durchsatz von 58,0 kg flüssig/h realisiert. Zur Aufkonzentration wurde an 3 verschiedenen Domen ein Vakuum angelegt. Die Unterdrücke betrugen jeweils zwischen 20 mbar und 300 mbar. Die Austrittstemperatur des aufkonzentrierten Hotmelts liegt bei ca. 115 °C. Der Feststoffgehalt betrug nach diesem Aufkonzentrationsschritt 99,8%.

Verfahren 5: Herstellung der modifizierten Schmelzhaftkleber und viskoelastischen Träger

Die nach dem oben erläuterten Verfahren 1 hergestellten Acrylatschmelzhaftkleber wurden direkt in einen nachgeschalteten WELDING-Doppelschneckenextruder (WELDING Engineers, Orlando, USA; Model 30 MM DWD; Schneckendurchmesser 30mm, Länge Schnecke 1 = 1258 mm; Länge Schnecke 2 = 1081 mm; 3 Zonen) gefördert. Über ein Feststoffdosiersystem wurde das Harz Dertophene® T110 (DRT RESINS) in Zone 1 zudosiert und homogen eingemischt. Bei der Masse für die Beispiele MT 1 bis MT 7 wurde kein Harz zudosiert. Bei den Beispielen MT 3, MT 4 und MT 5 wurde über das Feststoffdosiersystem die entsprechenden Zuschlagstoffe zudosiert und homogen eingemischt. Exemplarisch sind hier für die Harzcompoundierung mit dem Basispolymer P1 die Parameter dargelegt. Drehzahl betrug 451 U/min, der Motorstrom 42 A, es wurde ein Durchsatz von 30,1 kg/h realisiert. Die Temperaturen der Zonen 1 und 2 betrugen jeweils 105 °C, die Schmelzetemperatur in Zone 1 betrug 117 °C und die Massetemperatur bei Austritt (Zone 3) bei 100 °C.

Verfahren 6: Herstellung der erfindungsgemäßen Klebebänder, Abmischung mit den als Vernetzer dienenden funktionalisierten Partikeln (als Dispersion) und Beschichtung

Die nach den Verfahren 4 - 5 hergestellten Acrylatschmelzhaftkleber wurden in einem Fütterextruder (Einschneckenförderextruder der Firma TROESTER GmbH & Co KG, Deutschland) aufgeschmolzen und mit diesem als Polymerschmelze in einen Doppelschneckenextruder gefördert (Fa. LEISTRITZ, Deutschland, Bez. LSM 30/34. Das Aggregat wird von außen elektrisch beheizt und über verschiedene Gebläse luftgekühlt und ist so konzipiert, dass bei guter Verteilung des Vernetzer-Beschleuniger-Systems in der Polymermatrix gleichzeitig eine kurze Verweilzeit der Klebmasse im Extruder gewährleistet ist. Dazu wurden die Mischwellen des Doppelschneckenextruders so angeordnet, dass sich fördernde und mischende Elemente abwechseln. Die Zugabe der jeweiligen Vernetzer erfolgt mit geeignetem Dosierequipment gegebenenfalls an mehreren Stellen (Fig. 8: Dosierstellen 1.1 und 1.2; weiterhin bedeuten: 1.3 = Doppelschneckenextruder, BW = Bahnwalze; RW = Rakelwalze eines Zweiwalzenauftragswerkes; letzteres hier nur beispielhaft und nicht einschränkend dargestellt) und gegebenenfalls unter Verwendung von Dosierhilfsmitteln in die druckfreien Förderzonen des Doppelschneckenextruders.
Nach Austritt der fertig compoundierten, d.h. mit dem Vernetzer-System abgemischten Klebmasse aus dem Doppelschneckenextruder (Austritt: Runddüse, 5 mm Durchmesser), erfolgt die Beschichtung nach Fig 8 auf ein bahnförmiges Trägermaterial. Die Zeit zwischen Zudosierung des Vernetzer-Systems bis zum Ausformen bzw. Beschichten wird als Verarbeitungszeit bezeichnet. Die Verarbeitungszeit gibt den Zeitraum an, in welcher die mit dem Vernetzer-System abgemischte Klebmasse bzw. die viskoelastische Trägerschicht mit optisch gutem Strichbild (gelfrei, stippenfrei) beschichtet werden kann. Die Beschichtung erfolgt mit Bahngeschwindigkeiten zwischen 1 m/min und 20 m/min, die Rakelwalze (RW) des 2-Walzenauftragswerks wird nicht angetrieben.
In den nachfolgenden Beispielen und in den Tabellen 8 bis 10 werden die eingesetzten Formulierungen, die Herstellparameter und die erzielten Eigenschaften jeweils näher beschrieben.

Beispiele B1 bis B3

Das Basispolymer P1 wird gemäß dem beschriebenen Polymersationsverfahren polymerisiert, gemäß Verfahren 4 aufkonzentriert (Feststoffgehalt 99,8 %) und anschließend gemäß Verfahren 5 mit Harz Dertophene® T110 (DRT RESINS) abgemischt. Diese harzmodifizierte Acrylat-Hotmeltmasse wurde dann gemäß Verfahren 6 kontinuierlich mit der Füllstoffdispersionen F4 bis F6 compoundiert.
Detaillierte Beschreibung: In dem in Verfahren 6 beschriebenen Doppelschneckenextruder wurde ein Gesamtmassestrom bestehend aus 70 Teilen Polymer P1 und 30 Teilen Harz Dertophene® T110 von 533,3 g/min (das entspricht 373 Gramm des reinen Polymers pro Minute) mit 3,73 g/min der Füllstoffdispersionen (entspricht 1 Gew.-% auf Polymer) abgemischt. Die Prozessparameter sind in Tab. 8 zusammengefasst.
Die Verarbeitungszeit des fertigen Compounds war größer 7 min bei einer durchschnittlichen Massetemperatur von 125 °C nach dem Verlassen des LEISTRITZ-Doppelschneckenextruders. Die Beschichtung erfolgt an einem 2-Walzenauftragswerk gemäß Fig. 8 bei Walzenoberflächentemperaturen von jeweils 100 °C und einem Masseauftrag von 86 g/m$^2$ auf 23 $\mu$m PET-Folie. Alle Muster wurden, da sie einen UVaktivierbaren Füllstoff enthalten (Latexpartikel mit Benzophenonacrylat), noch mit einem nachgeschalteten Quecksilber-Mitteldruck-UV-Strahler (Leistung 30 - 160 W/cm, $N_2$-Inertisierung, ADPHOS-ELTOSCH) bestrahlt. In diesen Beispielen wurde mit 50 W/cm bestrahlt.
Die klebtechnischen Daten der Beispiele B1 bis B3 sind in Tabelle 9 zusammengefasst. Mit diesem Beispiel wird gezeigt, dass sehr leistungsfähige Klebebänder hergestellt werden können, die sich unter anderem durch gute Klebkräfte auf polaren und unpolaren Substraten (Stahl und Polyethlyen) und gute kohäsive Eigenschaften auch unter Temperatureinfluss auszeichnen.

Beispiele B4 bis B6

Das gemäß Verfahren 4 aufkonzentrierte und gemäß Verfahren 5 mit Harz Dertophene® T110 abgemischte Basispolymer P2 (Restlösemittelanteil: 0,1 Gew.-%) wurde analog Beispiel B1 nach Verfahren 6 im Doppelschneckenextruder mit den Füllstoffdispersionen F4 bis F6 compoundiert und beschichtet. Abweichend wurde in Verfahren 2 zusätzlich der Füllstoff Kreide Mikrosöhl® 40 eingearbeitet, dazu wurden die Mischschneckengeometrien des verwendeten Doppelschneckenextruders entsprechend angepasst.

Analog der Beispiele B1 bis B3 wurden 1,5 Gew.% der multifunktionellen Latexpartikel F4 bis F6 (bezogen auf das Acrylatcopolymer) gemäß Verfahren 6 zugesetzt. Die Extruderdrehzahl des LEISTRITZ-Doppelschneckenextruders betrug 125 Umdrehungen pro Minute, der Massedurchsatz 16,4 kg/h. Die Verarbeitungszeit betrug mehr als 7 min bei einer effektiven Massetemperatur von ca. 110 °C nach dem Verlassen des Extruders. Durch den Zusatz der Kreide als Füllstoff stieg die mittlere Massetemperatur auf 117 °C an. Mittels Walzenauftragswerk gemäß Fig. 1 wurden mit einem Masseauftrag von 101 g/m$^2$ auf 23 $\mu$m PET-Folie beschichtet. Die Klebemasse wurde anschließend mit einer UV-Dosis von 100 W/cm bestrahlt.

Die klebtechnischen Daten sind in Tabelle 9 aufgelistet.

Beispiele B7 bis B9

Die Polymerisation des verwendeten Polymers P3, die Aufkonzentration, die Harzabmischung und das Einarbeiten des Vernetzer-Beschleuniger-Systems und die Beschichtung erfolgt im Wesentlichen wie in Beispiel 1 beschrieben. Zugesetzt wurden 0,5 Gew.-% der multifunktionellen Latexpartikel F4 bis F6 (bezogen auf das Acrylatcopolymer).

Die mittlere Massetemperatur nach Austritt aus dem Compoundierextruder lag bei einer Temperatur von ungefähr von 110 °C. Die Klebemasse wurde mit einer UV-Dosis von 50 W/cm bestrahlt.

Weitere Details zu eingestellten Prozessparametern finden sich in Tabelle 8 und zu klebtechnischen Ergebnisse in Tabelle 9.

Beispiel B10 (Vergleichsbeispiel)

Die Polymerisation des verwendeten Polymers P1, die Aufkonzentration, die Harzabmischung, das Einarbeiten der Vernetzerkomponente (Latexpartikel) und die Beschichtung erfolgt im Wesentlichen wie in Beispiel 1 beschrieben, aber mit folgender Variation:

Der hier verwendete Füllstoff F1 besitzt keine funktionellen Gruppen, die zur Vernetzung mit der Acrylsäure in Polymer P1 befähigt sind.

Zugesetzt wurden 1 Gew.% der Füllstoffpartikel und die Klebemasse wurde anschließend ebenfalls mit einer UV-Dosis von 50 W/cm bestrahlt..

Die gemessenen Scherwege gemäß Messmethode D "Mikroscherweg" werden nach 25 Tagen Lagerung bei Raumtemperatur zu größer als 2000 $\mu$m gemessen, der elastische Anteil beträgt 0%, was bedeutet, dass keine oder keine nennenswerte Vernetzung stattgefunden hat.

*Wiederholung der Messungen nach Temperaturlagerung:*

Dieses Klebebandmuster vernetzt weder nach 3-monatiger Lagerung bei 70 °C, noch nach einstündiger Lagerung bei 140 °C, in einem Wärmeschrank. Gemessen wurde nach diesen Lagerungen wiederum mit der Messmethode D "Mikroscherweg", die Scherstrecken zu größer 2000 $\mu$m bestimmt. Aufgrund nicht vorhandener Vernetzung werden keine weiteren klebtechnischen Ausprüfungen vorgenommen.

Weitere Details zu den eingestellten Prozessparametern in Tabelle 8 jeweils in Zeile B10.

Bei Verwendung der erfindungsgemäßen funktionellen organischen Nanopartikel läuft die Vernetzungsreaktion über die funktionellen Gruppen des Polyacrylates erst nach Umwandlung der funktionellen Gruppen der Partikel mittels UV-Strahlung ab, wobei diese dann auch ohne Wärmezufuhr bei Normalbedingungen (Raumtemperatur) abläuft. In der Regel ist nach einer Lagerzeit von 5 Tagen bis 14 Tagen die Vernetzungsreaktion so weit abgeschlossen, dass ein funktionsfähiges Klebeband bzw. eine funktionsfähige Trägerschicht vorliegt. Der Endvernetzungszustand und damit die endgültige Kohäsion der Masse wird je nach Wahl der UV-Dosis nach einer Lagerung von Minuten bis 100 Tagen, in vorteilhafter Form nach Minuten bis 14 Tagen Lagerungszeit bei Raumtemperatur erreicht; bei höherer Lagertemperatur erwartungsgemäß früher.

Durch die Vernetzung erhöhen sich die Kohäsion der Klebemasse und damit auch die Scherfestigkeit. Diese Gruppen sind bekanntermaßen sehr stabil. Dies ermöglicht sehr alterungsstabile und wärmebeständige Selbstklebebänder.

Hingegen zeigt sich bei Betrachtung des Vergleichsbeispiels B10, dass die Vernetzung nicht zum Erfolg führt, wenn man statt der erfindungsgemäßen funktionalisierten organischen Nanopartikel unfunktionalisierte Nanopartikel und ansonsten keine weiteren Vernetzer verwendet und die Masse anschließend mit UV-Strahlung bestrahlt.

**Tabelle** 8: Prozessparameter

| Beispiel /Füllstoff | Basispolymer | | Compoundierung gemäß Verfahren 2 | Prozessparameter | | | | | | | |
|---|---|---|---|---|---|---|---|---|---|---|---|
| | Polymer | K-Wert | Anteil Zuschlagstoffe | Durchsatz Gesamtmasse DSE [kg/h] | Drehzahl DSE [l/min] | Sollstrom-aufnahme DSE [A] | Druck Ausgang DSE [bar] | Masse-temp. nach DSE [°C] | Rakel-walze RW | Beschichtungs-walze BW | Verarbeitungs-zeit [min] |
| [ ] | [ ] | [ ] | | | | | | | | | |
| B1/F4 | P1 | 59 | 70 Teile Polymer P1 + 30 Teile Harz DT 110 | 32,0 | 110 | 15 | 10 | 125 | 100 | 100 | größer 7 |
| B2/F5 | P1 | 59 | 70 Teile Polymer P1 + 30 Teile Harz DT 110 | 32,0 | 110 | 15 | 10 | 120 | 100 | 100 | größer 7 |
| B3/F6 | P1 | 59 | 70 Teile Polymer P1 + 30 Teile Harz DT 110 | 32,0 | 110 | 15 | 10 | 118 | 100 | 100 | größer 7 |
| B4/F4 | P2 | 41,9 | 49 Teile Polymer P2 + 21 Teile Harz DT 110 + 30 Teile Kreide Mikrosöhl® 40 | 16,0 | 125 | 10 | 9 | 115 | 100 | 100 | größer 7 |
| B5/F4 | P2 | 41,9 | 70 Teile Polymer P2 + 30 Teile Harz DT 110 | 16,4 | 125 | 7 | 5 | 108 | 100 | 100 | größer 7 |
| B6/F6 | P2 | 41,9 | 70 Teile Polymer P2 + 30 Teile Harz DT 110 | 16,4 | 125 | 7 | 6 | 109 | 100 | 100 | größer 7 |
| B7/F4 | P3 | 69,5 | 70 Teile Polymer P1 + 30 Teile Harz DT 110 | 12,0 | 110 | 8 | 10 | 110 | 100 | 100 | größer 7 |

| Beispiel /Füllstoff | Basispolymer | | Compoundierung gemäß Verfahren 2 | Prozessparameter | | | | | | | |
|---|---|---|---|---|---|---|---|---|---|---|---|
| | Polymer | K-Wert | Anteil Zuschlagstoffe | Durchsatz Gesamtmasse DSE [kg/h] | Drehzahl DSE [l/min] | Sollstrom-aufnahme DSE [A] | Druck Ausgang DSE [bar] | Masse-temp. nach DSE [°C] | Rakel-walze RW | Beschichtungs-walze BW | Verarbeitungs-zeit [min] |
| [ ] | [ ] | [ ] | | | | | | | | | |
| B8/F5 | P3 | 69,5 | 70 Teile Polymer P1 + 30 Teile Harz DT 110 | 12,0 | 110 | 8 | 10 | 111 | 100 | 100 | größer 7 |
| B9/F6 | P3 | 69,5 | 70 Teile Polymer P1 + 30 Teile Harz DT 110 | 12,0 | 110 | 8 | 10 | 113 | 100 | 100 | größer 7 |
| B10/F1 | P1 | 59 | 70 Teile Polymer P1 + 30 Teile Harz DT 110 | 32,0 | 110 | 15 | 10 | 125 | 100 | 100 | größer 7 |

**Tabelle 9**: Klebtechnische Ergebnisse

| Beispiel /Füllstoff | Basispolymer | | Compoundierverfahren 2 | Klebtechnische Eigenschaften nach einer Lagerung der Muster von 25 Tagen bei Raumtemperatur | | | | | | |
|---|---|---|---|---|---|---|---|---|---|---|
| | Polymer | K-Wert | Anteil Zuschlagstoffe | Trägerfolie | Masseauftrag | Klebkraft Stahl | Klebkraft PE | Scherstandzeit 10N, 23°C | Scherstandzeit 10N, 70°C | MSW 40°C / elast. Anteil |
| [ ] | [ ] | [ ] | | [ ] | [g/m$^2$] | [N/cm] | [N/cm] | [min] | [min] | [$\mu$m]/[%] |
| B1/F4 | P1 | 59 | 70 Teile Polymer P1 + 30 Teile Harz DT 110 | 23$\mu$m PET-Folie | 86 | 9,8 | 4,6 | 1600 | 15 | 512 / 67 |
| B2/F5 | P1 | 59 | 70 Teile Polymer P1 + 30 Teile Harz DT 110 | 23$\mu$m PET-Folie | 85 | 8,5 | 3,4 | > 10000 | 80 | 160 / 75 |
| B3/F6 | P1 | 59 | 70 Teile Polymer P1 + 30 Teile Harz DT 110 | 23$\mu$m PET-Folie | 86 | 8,1 | 2,5 | > 10000 | 560 | 70 / 90 |
| B4/F4 | P2 | 41,9 | 49 Teile Polymer P3 + 21 Teile Harz DT 110 + 30 Teile Kreide Mikrosöhl® 40 | 23$\mu$m PET-Folge | 98 | 8,5 | 2,9 | 3800 | 280 | 230 / 73 |
| B5/F4 | P2 | 41,9 | 70 Teile Polymer P1 + 30 Teile Harz DT 110 | 23$\mu$m PET-Folie | 100 | 9,8 | 3,1 | 1700 | 200 | 350 / 70 |
| B6/F6 | P2 | 41,9 | 70 Teile Polymer P1 + 30 Teile Harz DT 110 | 23$\mu$m PET-Folie | 101 | 7,3 | 1,2 | > 10000 | 4200 | 50/92 |
| B7/F4 | P3 | 69,5 | 70 Teile Polymer P1 + 30 Teile Harz DT 110 | 23$\mu$m PET-Folie | 101 | Prüfungen nicht möglich, Formulierung ist nicht vernetzt | | | | größer 2000/0 |
| B8/F5 | P3 | 69,5 | 70 Teile Polymer P1 + 30 Teile Harz DT 110 | 23$\mu$m PET-Folie | 105 | 9,5 | 2,2 | 1200 | 12 | 960/72 |
| B9/F6 | P3 | 69,5 | 70 Teile Polymer P1 + 30 Teile Harz DT 110 | 23$\mu$m PET-Folie | 102 | 8,6 | 2,1 | > 10.000 | 5670 | 220/88 |
| B10/F1 | P1 | 59 | 70 Teile Polymer P1 + 30 Teile Harz DT 110 | 23$\mu$m PET-Folie | 85 | Prüfungen nicht möglich, Formulierung ist nicht vernetzt | | | | größer 2000/0 |
| Klebkraft Stahl/PE = Messmethode B1, Scherstandzeit = Messmethode C, MSW = Mikroscherweg = Messmethode D, DT 110 = Dertophene® T110 | | | | | | | | | | |

Beispiele Viskoelastische Träger und Dreischichtaufbauten

<u>I. Herstellung der Haftklebemasse</u>

<u>Polyacrylathaftkleber 1 (PA1):</u>

Ein für radikalische Polymerisationen konventioneller 100 L-Glasreaktor wurde mit 2,8 kg Acrylsäure, 8,0 kg Methylacrylat, 29,2 kg 2-Ethylhexylacrylat und 20,0 kg Aceton/ Isopropanol (95:5) befüllt. Nach 45minütiger Durchleitung von Stickstoffgas unter Rühren wurde der Reaktor auf 58 °C hochgeheizt und 20 g AIBN (Vazo® 64, DUPONT) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 20 g AIBN hinzugegeben. Nach 4 und 8 h wurde mit jeweils 10,0 kg Aceton/Isopropanol (95:5) Gemisch verdünnt. Zur Reduktion der Restinitiatoren wurden nach 8 und nach 10 h jeweils 60 g Bis-(4-*tert*-butylcyclohexyl)peroxydicarbonat hinzugegeben. Die Reaktion wurde nach 24 h Reaktionszeit abgebrochen und auf Raumtemperatur abgekühlt. Anschließend wurde das Polyacrylat mit 0,4 Gew.-% Aluminium-(III)-acetylacetonat (3 %ige Lösung in Isopropanol) abgemischt, auf einen Feststoffgehalt von 30 % mit Isopropanol verdünnt und dann aus Lösung auf eine silikonisierte Trennfolie (50 μm Polyester) beschichtet. (Beschichtungsgeschwindigkeit 2,5 m/min, Trockenkanal 15 m, Temperaturen Zone 1: 40 °C, Zone 2: 70 °C, Zone 3: 95 °C, Zone 4: 105 °C) betrug der Masseauftrag 50 g/m$^2$.

<u>II. Herstellung der viskoelastischen Träger</u>

<u>Herstellung der Ausgangspolymere für die viskoelastischen Träger der Beispiele VT 1 bis 5</u>

Im Folgenden wird die Präparation der Ausgangspolymere beschrieben. Die untersuchten Polymere werden konventionell über eine freie radikalische Polymerisation in Lösung hergestellt.

<u>Basispolymer HPT 1</u>

Ein für radikalische Polymerisationen konventioneller Reaktor wurde mit 40 kg 2-Ethylhexylacrylat, 40 kg n-Butylacrylat, 15 kg Methylacrylat, 5 kg Acrylsäure und 67 kg Aceton/ Isopropanol (95:5) befüllt. Nach 45minütiger Durchleitung von Stickstoffgas unter Rühren wurde der Reaktor auf 58 °C hochgeheizt und 40 g AIBN (Vazo® 64, DUPONT) hinzugegeben. Anschließend wurde das äußere Heizbad auf 75 °C erwärmt und die Reaktion konstant bei dieser Außentemperatur durchgeführt. Nach 1 h wurden erneut 60 g AIBN zugegeben und nach 4 h wurde mit 14 kg Aceton/ Isopropanol Gemisch verdünnt. Nach 5 sowie nach 7 h wurde jeweils mit 150 g Bis-(4-*tert*-butylcyclohexyl)-peroxydicarbonat (Perkadox® 16, AKZO NOBEL) nachinitiiert. Nach 22 h Reaktionszeit wurde die Polymerisation abgebrochen und auf Raumtemperatur abgekühlt. Das Polyacrylat hat einen K-Wert von 57, einen Feststoffgehalt von 54,6 %, ein mittleres Molekulargewicht von Mw = 714.000 g/mol, Polydispersität PD (Mw/Mn) = 7,6.

<u>Basispolymer HPT 2</u>

Ein für radikalische Polymerisationen konventioneller Reaktor wurde mit 65 kg 2-Ethylhexylacrylat, 30 kg *tert*-Butylacrylat, 5 kg Acrylsäure, 100 g Dithiobenzoesäurebenzylester und 67 kg Aceton befüllt. Nach 45minütiger Durchleitung von Stickstoffgas unter Rühren wurde der Reaktor auf 58 °C hochgeheizt und 50 g AIBN (Vazo® 64, DUPONT) hinzugegeben. Anschließend wurde das äußere Heizbad auf 75 °C erwärmt und die Reaktion konstant bei dieser Außentemperatur durchgeführt. Nach 1 h wurden erneut 50 g AIBN zugegeben. Nach 4 h verdünnte man mit 10 kg Aceton. Nach 5 und nach 7 h erfolgte eine Zugabe von jeweils 150 g Bis-(4-*tert*-butylcyclohexyl)peroxydicarbonat (Perkadox® 16, AKZO NOBEL). Nach 22 h Reaktionszeit wurde die Polymerisation abgebrochen und auf Raumtemperatur abgekühlt.
Das Polyacrylat hat einen K-Wert von 49,2, einen Feststoffgehalt von 59,2 %, ein mittleres Molekulargewicht von Mw = 379.000 g/mol, Polydispersität PD (Mw/Mn) = 3,1.

<u>Basispolymer HPT 3</u>

Ein für radikalische Polymerisationen konventioneller Reaktor wurde mit 68 kg 2-Ethylhexylacrylat, 25 kg Methylacrylat, 7 kg Acrylsäure und 66 kg Aceton/Isopropanol (95:5) befüllt. Nach 45minütiger Durchleitung von Stickstoffgas unter Rühren wurde der Reaktor auf 58 °C hochgeheizt und 40 g AIBN (Vazo® 64, DUPONT) hinzugegeben. Anschließend wurde das äußere Heizbad auf 75 °C erwärmt und die Reaktion konstant bei dieser Außentemperatur durchgeführt. Nach 1 h wurden erneut 60 g AIBN zugegeben. Nach 4 h verdünnte man mit 20 kg Aceton/Isopropanol (95:5). Nach 5 und nach 7 h erfolgte eine Zugabe von jeweils 150 g Bis-(4-*tert*-butylcyclohexyl)peroxydicarbonat (Perkadox® 16, AKZO NOBEL). Nach 22 h Reaktionszeit wurde die Polymerisation abgebrochen und auf Raumtemperatur abgekühlt.

Das Polyacrylat hat einen K-Wert von 55, einen Feststoffgehalt von 55 %, ein mittleres Molekulargewicht von Mw = 579.000 g/mol, Polydispersität PD (Mw/Mn) = 7,9.

Aufkonzentration und Compoundierung der Basispolymere HPT 1 bis HPT 3 für die viskoelastischen Träger:

Die Acrylatcopolymere HPT 1 bis HPT 3 werden analog Verfahren 4 von den Lösemitteln befreit und ggf. anschließend analog Verfahren 5 mit Zusatzstoffen versetzt, vgl. die einzelnen Beispiele.

Verfahren 7: Herstellung der 3-Schichtaufbauten mittels 2-Walzenkalander

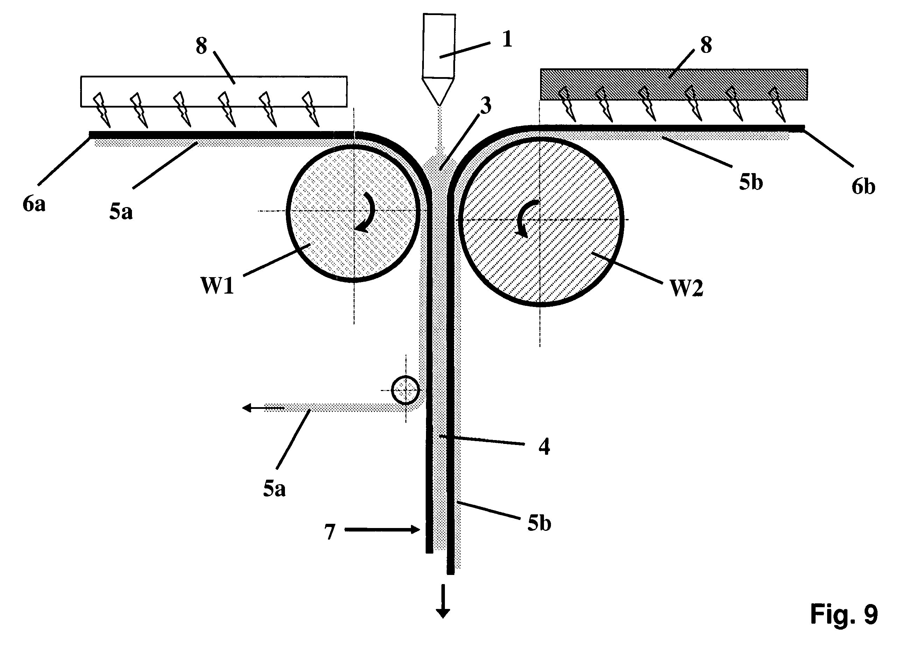

Das Verfahren wurde wie in Fig. 9 beschrieben durchgeführt. Mittels Verteilerdüse (1) wird die mit den funktionalisierten organischen Nanopartikeln und ggf. weiteren Füllstoffen fertig compoundierte viskoelastische Masse (3) dem Walzenspalt zugeführt. Die Ausformung der viskoelastischen Masse zu einem viskoelastischen Film erfolgt zwischen den Kalanderwalzen (W1) und (W2) im Walzenspalt zwischen zwei Selbstklebemassen (6a, 6b), die ihrerseits auf anti-adhäsiv ausgerüsteten Trägermaterialien (5a, 5b) beschichtet zugeführt werden. Dabei kommt es gleichzeitig zur Ausformung der viskoelastischen Masse auf die eingestellte Schichtdicke und zur Beschichtung mit den beiden zugeführten Selbstklebemassen. Um die Verankerung der Selbstklebemassen (6a, 6b) auf der ausgeformten, viskoelastischen Trägerschicht (4) zu verbessern, werden die Selbstklebemassen vor der Zuführung in den Walzenspalt mittels Corona-Station (8) coroniert (Corona-Anlage der Firma VITAPHONE, Dänemark, 100 W·min/m$^2$). Diese Behandlung führt nach der Herstellung des Dreischichtverbundes zu einer verbesserten chemischen Anbindung an die viskoelastische Trägerschicht.

Die Bahngeschwindigkeit bei Durchlaufen der Beschichtungsanlage beträgt 30 m/min. Nach Verlassen des Walzenspaltes wird ggf. ein anti-adhäsiver Träger (5a) ausgedeckt und das fertige Dreischichtprodukt (7) mit dem verbleibenden zweiten anti-adhäsiven Träger (5b) aufgewickelt.

Im Folgenden werden konkrete Beispiele zur Herstellung der Selbstklebemassen und Beschichtung der erfindungsgemäßen Klebebänder vorgestellt, ohne dass durch die Wahl der angegebenen Formulierungen, Konfigurationen und Prozessparamter die Erfindung unnötig eingeschränkt werden soll.

Beispiele MT 1 und MT 2

Das Basispolymer HPT1 wurde gemäß Verfahren 4 aufkonzentriert (Feststoffgehalt 99,7%) und anschließend gemäß Verfahren 5 im Doppelschneckenextruder kontinuierlich mit den Latexpartikeln F9 und F10 (2,0 Gew.-% bezogen auf das Polyacrylat) compoundiert. Zu den modifizierten Füllstoffpartikeln F9 und F10 wurden noch zusätzlich 0,8 Gew.-% des aliphatischen Polyisocyanats Desmodur XP 2410 (BAYER MATERIAL SCIENCE) als vernetzende Komponente gegeben.

Die Beschichtung zur Erzeugung der viskoelastischen Trägers VT1 und VT2 aus dem Basispolymer HPT1 zwischen die zuvor auf silikonisierte Polyesterfolien beschichtete Masseschichten PA 1 erfolgt am 2-Walzenauftragswerk bei Walzentemperaturen von 100 °C gemäß Verfahren 7. Die Schichtdicke der viskoelastischen Träger VT1 und VT2 betrug 800 μm. Die Coronaleistung betrug 100 W·min/m$^2$. Nach 7 Tagen Raumtemperaturlagerung wurden die klebtechnischen Daten jeweils von der offenen und abgedeckten Seite gemessen. Die Daten der Beispiele MT 1 und MT 2 sind in Tabelle 10 zusammengefasst.

Beispiel MT 3 und MT 4

Das Basispolymer HPT2 wurde gemäß Verfahren 4 aufkonzentriert (Feststoffgehalt 99,8%) und anschließend gemäß Verfahren 5 im Doppelschneckenextruder kontinuierlich mit den Latexpartikeln F9 und F10 (2,0 Gew.-% bezogen auf das Polyacrylat) compoundiert. Zu den modifizierten Füllstoffpartikeln F9 und F10 wurden noch zusätzlich 0,8 Gew.-% des aliphatischen Polyisocyanats Desmodur XP 2410 (BAYER MATERIAL SCIENCE) als vernetzende Komponente gegeben.

Anschließend wurde analog Beispiel MT 1 und MT 2 zwischen jeweils zuvor auf silikonisierte Polyesterfolien beschichtete Masseschichten PA 1 am 2-Walzenauftragswerk gemäß Verfahren 7 beschichtet. Die Schichtdicke der viskoelastischen Träger VT3 und VT4 betrug 850 μm. Die Coronaleistung betrug 100 W·min/m$^2$. Nach 7 Tagen Raumtemperaturlagerung wurden die klebtechnischen Daten jeweils der offenen und abgedeckten Seite gemessen. Die Daten der Beispiele MT 3 und MT 4sind in Tabelle 10 zusammengefasst.

Beispiele MT 5 und MT 6

Das Basispolymer HPT2 wurde gemäß Verfahren 4 aufkonzentriert (Feststoffgehalt 99,7%) und anschließend gemäß Verfahren 5 mit 6,5 Gew.-% Hohlglaskugeln Q-CEL® 5028 (Fa. POTTERS INDUSTRIES) compoundiert und gemäß Verfahren 6 im Doppelschneckenextruder kontinuierlich mit den organischen Füllstoffpartikeln F10 (funktionalisiert) und F1 (unfunktionalisiert) (2,5 Gew.-% bezogen auf das Polyacrylat) und Diethylentriamin (Epikure® 3223; 0,80 Gew.-% bezogen auf das Polyacrylat) compoundiert. Zu den Füllstoffpartikeln F1 und F10 wurden noch zusätzlich 1,0 Gew.-% des aliphatischen Polyisocyanats Desmodur XP 2410 (BAYER MATERIAL SCIENCE) als vernetzende Komponente gegeben.

Die Beschichtung zur Erzeugung der viskoelastischen Träger VT5 und VT6 zwischen die zuvor auf silikonisierte Polyesterfolien beschichtete Masseschichten PA 1 erfolgt am 2-Walzenauftragswerk bei Walzentemperaturen von 100 °C gemäß Verfahren 7. Die Schichtdicke der viskoelastischen Träger VT5 und VT6 betrug 800 $\mu$m. Die Coronaleistung betrug 100 W·min/m$^2$. Nach 7 Tagen Raumtemperaturlagerung wurden die klebtechnischen Daten jeweils der offenen und abgedeckten Seite gemessen. Die Daten der Beispiele MT 5 und MT 6 sind in Tabelle 10 zusammengefasst.

Beispiel MT 7

Das Basispolymer HPT 3 wurde gemäß Verfahren 4 aufkonzentriert (Feststoffgehalt 99,8%), anschließend gemäß Verfahren 5 mit 3 Gew.-% nicht expandierten Mikrohohlkugeln Expancel® 092 DU 40 (Fa. AKZO NOBEL, Deutschland) abgemischt und gemäß Verfahren 6 im Doppelschneckenextruder kontinuierlich mit den funktionalisierten organischen Nanopartikeln F10 (2,5 Gew.-% bezogen auf das Polyacrylat) compoundiert. Zu den Füllstoffpartikeln F10 wurden noch zusätzlich 1,0 Gew.-% des aliphatischen Polyisocyanats Desmodur XP 2410 (BAYER MATERIAL SCIENCE) als vernetzende Komponente gegeben.

Durch Einbringen von Wärme wurde die Mischung im Extruder expandiert und anschließend zwischen die zuvor auf silikonisierte Polyesterfolien beschichtete Masseschichten PA 1 gemäß Verfahren 7 bei Walzentemperaturen von 130 °C beschichtet. Die Schichtdicke des expandierten viskoelastischen Trägers VT7 betrug 1000 $\mu$m. Die Coronaleistung zur Vorbehandlung der Haftklebeschichten betrug 100 W·min/m$^2$. Nach 7 Tagen Raumtemperaturlagerung wurden die klebtechnischen Daten jeweils der offenen und abgedeckten Seite gemessen. Die Daten des Beispiels MT 7 sind in Tabelle 10 zusammengefasst.

Wie den Daten der Tabelle 4 zu entnehmen ist, haben die erfinderisch doppelseitig klebenden Montageklebebänder sehr gute klebtechnische Daten. Besonders positiv ist das ausgewogene Klebprofil der jeweiligen Seiten. Bei gleicher Klebmassenschicht auf beiden Seiten des Klebebandes zeigen diese nahezu gleiche klebtechnische Daten. Dies zeigt die homogene Vernetzung durch die Schicht hindurch. Dies ist für den Fachmann überraschend. Zudem zeigen diese dreischichtigen Klebebänder keine Delaminierung. Die Verankerung der Schichten untereinander ist durch die Coronabehandlung der Haftklebeschichten und der Nachvernetzung der angrenzenden viskoelastische Trägerschicht sehr gut.

**Tabelle 10:** Produktaufbau und klebtechnische Daten der Dreischichtaufbauten

| Beispiel | Dreischichtprodukt | | | | Trägerdicke [$\mu$m] | Klebkraft Stahl, [N/cm] | | Scherstandzeit 10 N 23°C [min] | | Wandhakentest [min] | | MSW 40°C/ elast. Anteil [$\mu$m] / [%] |
|---|---|---|---|---|---|---|---|---|---|---|---|---|
| | Haftkleber 1 | Füllstoff | Viskoelastische Trägerschicht | Haftkleber 2 | | offene Seite | abgedeckte Seite | offene Seite | abgedeckte Seite | offene Seite | abgedeckte Seite | |
| **MT1** | 50 g/m$^2$ PA 1 | F9 | VT 1 | 50 g/m$^2$ PA 1 | 800 | 14,2 | 13,7 | > 10000 | > 10000 | 2580 | 2795 | 950 / 76 |
| **MT2** | 50 g/m$^2$ PA 1 | F10 | VT 2 | 50 g/m$^2$ PA 1 | 800 | 14,0 | 13,6 | > 10000 | > 10000 | 3754 | 3900 | 720 / 85 |
| **MT3** | 50 g/m$^2$ PA 1 | F9 | VT 3 | 50 g/m$^2$ PA 1 | 850 | 11,8 | 11,6 | 7850 | 6970 | 4876 | 4456 | 877 / 78 |
| **MT4** | 50 g/m$^2$ PA 1 | F10 | VT 4 | 50 g/m$^2$ PA 1 | 850 | 11,5 | 11,4 | > 10000 | > 10000 | 5362 | 5512 | 645 / 84 |
| **MT5** | 50 g/m$^2$ PA 1 | F10 | VT 5 | 50 g/m$^2$ PA 1 | 800 | 13,7 | 14,2 | > 10000 | > 10000 | 9320 | 9360 | 546 / 78 |
| **MT6** | 50 g/m$^2$ PA 1 | F1 | VT 6 | 50 g/m$^2$ PA 1 | 800 | 10,7 | 10,6 | 2456 | 2345 | 1540 | 1468 | 1067 / 69 |
| **MT7** | 50 g/m$^2$ PA 1 | F10 | VT 7 | 50 g/m$^2$ PA 1 | 1000 | 13,5 | 13,6 | > 10000 | > 10000 | > 10000 | > 10000 | 745 / 78 |
| Klebkraft Stahl = Messmethode B2 Scherstandzeit = Messmethode C Wandhakentest = Messmethode D | | | | | | | | | | | | |

**Patentansprüche**

1. Verfahren zur Herstellung einer Dispersions- oder Hotmelt-Haftklebemasse umfassend das Vernetzungsprodukt aus zumindest einem Polymer und zumindest einer Sorte funktionalisierter Partikeln,

   - wobei das Polymer reaktive Zentren aufweist,
   - wobei die funktionalisierten Partikeln zumindest eine polymere Basiseinheit aufweisen, die polymere Basiseinheit basierend auf Monomeren umfassend zumindest eine Monomersorte, deren Monomere zumindest eine Sorte funktioneller Gruppen Z aufweisen, die unter den Bedingungen bei der Herstellung und Verarbeitung des Polymers und/oder der unvernetzten Haftklebemasse keine Reaktion mit den reaktiven Zentren des Polymers eingehen,
   **dadurch gekennzeichnet, dass** das Verfahren die folgenden Verfahrensschritte umfasst:
   - Umwandlung zumindest eines Teils der funktionellen Gruppen Z der Partikeln durch Energiezufuhr in funktionelle Gruppen X, die in der Lage sind, unter geeigneten Verfahrensbedingungen eine Reaktion mit den reaktiven Zentren des Polymers einzugehen,
   - Bildung des Vernetzungsproduktes, umfassend die Reaktion der funktionellen Gruppen X der Partikeln mit den reaktiven Zentren des Polymers unter den geeigneten Verfahrensbedingungen.

2. Verfahren nach Anspruch 1, **dadurch gekennzeichnet, dass**
   die funktionalisierten Partikeln weiterhin funktionelle Gruppen $X_a$ aufweisen,
   wobei in dem Verfahren bereits vor der Umwandlung der Gruppen Z in die Gruppen X ein Vernetzungsschritt stattfindet, der die Reaktion der funktionellen Gruppen $X_a$ mit den reaktiven Zentren des Polymers umfasst.

3. Verfahren nach Anspruch 1 oder 2, **dadurch gekennzeichnet, dass** die zugeführte Energie thermische Energie, elektromagnetische Strahlung, Partikelstrahlung und/oder Schallenergie ist.

4. Verfahren nach einem der Ansprüche 1 bis 3, **dadurch gekennzeichnet, dass** die reaktiven Zentren des Polymers funktionelle Gruppen Y sind.

5. Verfahren nach einem der vorangehenden Ansprüche, **dadurch gekennzeichnet, dass** die funktionalisierten Partikeln als Dispersion eingesetzt werden; insbesondere dispergiert in Wasser.

6. Verfahren nach einem der vorangehenden Ansprüche, **dadurch gekennzeichnet, dass** die funktionalisierten Partikeln zumindest teilweise aus denselben Monomeren aufgebaut sind wie das Polymer.

7. Verfahren nach einem der vorangehenden Ansprüche, **dadurch gekennzeichnet, dass** die funktionalisierten Partikeln mittels Emulsionspolymerisation, insbesondere durch herkömmliche Emulsionspolymerisation, Miniemulsionspolymerisation oder Mikroemulsionspolymerisation, oder durch Dispersionspolymerisation hergestellt werden.

8. Verfahren nach einem der vorangehenden Ansprüche, **dadurch gekennzeichnet, dass** die Glasübergangstemperatur $T_G$ der funktionalisierten Partikeln größer ist als die Verarbeitungstemperatur bei der Herstellung der vernetzten Haftklebemassen, insbesondere höher als die Temperatur der Compoundierung, der Beschichtung und ggf. der Trocknung der Haftklebemassen nach der Beschichtung.

9. Verfahren nach einem der vorangehenden Ansprüche, **dadurch gekennzeichnet, dass** die funktionalisierten Partikeln sphärisch, insbesondere kugelförmig sind.

10. Verfahren nach einem der vorangehenden Ansprüche, **dadurch gekennzeichnet, dass** die funktionalisierten Partikeln zumindest zum Teil als Hohlpartikeln und/oder als Kern-Schale-Partikeln eingesetzt werden.

11. Verfahren nach einem der vorangehenden Ansprüche, **dadurch gekennzeichnet, dass** alle drei Raumdimensionen der funktionalisierten Partikeln jeweils eine Ausdehnung von nicht mehr als 100 nm, besser nicht mehr als 90 nm einnehmen.

12. Verfahren nach einem der vorangehenden Ansprüche, **dadurch gekennzeichnet, dass** die funktionalisierten Partikeln in einem Konzentrationsbereich von 0,1 bis 15 Gew.-%, insbesondere von 0,1 bis 5 Gew.-%, besonders bevorzugt von 0,1 bis 1,5 Gew.-%, bezogen auf das Polymer, eingesetzt werden.

**13.** Verfahren nach einem der vorangehenden Ansprüche, **gekennzeichnet dadurch, dass** die Umwandlung der funktionellen Gruppen Z in die funktionellen Gruppen Y und die Reaktion mit den funktionellen Gruppen X gleichzeitig ablaufen.

**14.** Verfahren nach einem der vorangehenden Ansprüche, **dadurch gekennzeichnet, dass** es sich bei der Umwandlung der Gruppen Z in die Gruppen X um eine Entfernung von Schutzgruppen oder eine Deblockierung handelt.

**15.** Polymermischung umfassend zumindest ein Polymer und zumindest eine Sorte funktionalisierter Partikeln,

- wobei das Polymer reaktive Zentren, insbesondere funktionelle Gruppen Y, aufweist,
- wobei die funktionalisierten Partikeln zumindest eine polymere Basiseinheit aufweisen, die polymere Basiseinheit basierend auf Monomeren umfassend zumindest eine Monomersorte, deren Monomere zumindest eine Sorte funktioneller Gruppen Z aufweisen, die unter den Bedingungen bei der Herstellung und Verarbeitung des Polymers und/oder der unvernetzten Haftklebemasse keine Reaktion mit den reaktiven Zentren des Polymers eingehen, wobei die funktionellen Gruppen Z durch Energiezufuhr in funktionelle Gruppen X umwandelbar sind, die in der Lage sind, unter geeigneten Verfahrensbedingungen eine Reaktion mit den reaktiven Zentren des Polymers einzugehen.

**Claims**

**1.** Process for preparing a dispersion-based or hotmelt pressure-sensitive adhesive comprising the crosslinking product of at least one polymer and at least one kind of functionalized particles,

- the polymer having reactive centers,
- the functionalized particles having at least one polymeric base unit, the polymeric base unit based on monomers comprising at least one monomer kind whose monomers have at least one kind of functional groups Z which, under the conditions of the preparation and processing of the polymer and/or of the noncrosslinked pressure-sensitive adhesive, do not enter into any reaction with the reactive centers of the polymer,
**characterized in that** the process comprises the following steps:
- converting at least some of the functional groups Z of the particles, by supply of energy, into functional groups X which are capable, under appropriate process conditions, of entering into a reaction with the reactive centers of the polymer,
- forming the crosslinking product, comprising reacting the functional groups X of the particles with the reactive centers of the polymer under the appropriate process conditions.

**2.** Process according to Claim 1, **characterized in that** the functionalized particles additionally have functional groups $X_a$,
where, in the process, even before the conversion of the groups Z into the groups X, a crosslinking step takes place which comprises reacting the functional groups $X_a$ with the reactive centers of the polymer.

**3.** Process according to Claim 1 or 2, **characterized in that** the energy supplied is thermal energy, electromagnetic radiation, particulate radiation and/or sound energy.

**4.** Process according to any one of Claims 1 to 3, **characterized in that** the reactive centers of the polymer are functional groups Y.

**5.** Process according to any one of the preceding claims, **characterized in that** the functionalized particles are used as a dispersion; more particularly in dispersion in water.

**6.** Process according to any one of the preceding claims, **characterized in that** the functionalized particles are composed at least partly of the same monomers as the polymer.

**7.** Process according to any one of the preceding claims, **characterized in that** the functionalized particles are prepared by means of emulsion polymerization, more particularly by conventional emulsion polymerization, miniemulsion polymerization or microemulsion polymerization, or by dispersion polymerization.

**8.** Process according to any one of the preceding claims, **characterized in that** the glass transition temperature Tg of the functionalized particles is greater than the processing temperature for the preparation of the crosslinked pressure-sensitive adhesives, more particularly higher than the temperature of compounding, of coating and, where appropriate, of drying of the pressure-sensitive adhesives after coating.

9. Process according to any one of the preceding claims, **characterized in that** the functionalized particles are spherical, more particularly ball-shaped.

10. Process according to any one of the preceding claims, **characterized in that** the functionalized particles are used at least in part as hollow particles and/or as core-shell particles.

11. Process according to any one of the preceding claims, **characterized in that** all three spatial dimensions of the functionalized particles each occupy an extent of not more than 100 nm, more preferably not more than 90 nm.

12. Process according to any one of the preceding claims, **characterized in that** the functionalized particles are used in a concentration range of 0.1% to 15%, more particularly of 0.1% to 5%, more preferably of 0.1% to 1.5%, by weight, based on the polymer.

13. Process according to any one of the preceding claims, **characterized in that** the conversion of the functional groups Z into the functional groups Y and the reaction with the functional groups X proceed simultaneously.

14. Process according to any one of the preceding claims, **characterized in that** the conversion of the groups Z into the groups X comprises removal of protective groups or deblocking.

15. Polymer mixture comprising at least one polymer and at least one kind of functionalized particles,

> - the polymer having reactive centers, more particularly functional groups Y,
> - the functionalized particles having at least one polymeric base unit, the polymeric base unit based on monomers comprising at least one monomer kind whose monomers have at least one kind of functional groups Z which, under the conditions of the preparation and processing of the polymer and/or of the noncrosslinked pressure-sensitive adhesive, do not enter into any reaction with the reactive centers of the polymer, the functional groups Z being convertible by supply of energy into functional groups X which are capable, under appropriate process conditions, of entering into a reaction with the reactive centers of the polymer.

**Revendications**

1. Procédé pour la préparation d'une masse autoadhésive en dispersion ou thermofusible, comprenant le produit de réticulation d'au moins un polymère et d'au moins un type de particules fonctionnalisées,

> - où le polymère présente des centres réactifs,
> - où les particules fonctionnalisées présentent au moins une unité de base polymère, l'unité de base polymère à base de monomères comprenant au moins un type de monomères, dont les monomères présentent au moins un type de groupes fonctionnels Z, qui n'entrent pas en réaction avec les centres réactifs du polymère dans les conditions de préparation et de transformation du polymère et/ou de la masse autoadhésive non réticulée,
> **caractérisé en ce que** le procédé comprend les étapes de procédé suivantes :
> - transformation d'au moins une partie des groupes fonctionnels Z des particules, par alimentation d'énergie, en groupes fonctionnels X, qui sont en mesure d'entrer en réaction avec les centres réactifs du polymère dans des conditions de procédé appropriées,
> - formation du produit réticulé, comprenant la réaction des groupes fonctionnels X des particules avec les centres réactifs du polymère dans les conditions de procédé appropriées.

2. Procédé selon la revendication 1, **caractérisé en ce que** les particules fonctionnalisées présentent en outre des groupes fonctionnels $X_a$,
une étape de réticulation, qui comprend la réaction des groupes fonctionnels $X_a$ avec les centres réactifs du polymère, ayant lieu lors du procédé, déjà avant la transformation des groupes Z en groupes X.

3. Procédé selon la revendication 1 ou 2, **caractérisé en ce que** l'énergie alimentée est de l'énergie thermique, un rayonnement électromagnétique, un rayonnement particulaire et/ou une énergie sonore.

4. Procédé selon l'une quelconque des revendications 1 à 3, **caractérisé en ce que** les centres réactifs du polymère sont des groupes fonctionnels Y.

5. Procédé selon l'une quelconque des revendications précédentes, **caractérisé en ce que** les particules fonctionnalisées sont utilisées sous forme de dispersion, en particulier dispersées dans l'eau.

6. Procédé selon l'une quelconque des revendications précédentes, **caractérisé en ce que** les particules fonctionnalisées sont constituées au moins en partie par les mêmes monomères que le polymère.

7. Procédé selon l'une quelconque des revendications précédentes, **caractérisé en ce que** les particules fonctionnalisées sont préparées par une polymérisation en émulsion, en particulier par une polymérisation usuelle en émulsion, en mini-émulsion ou en microémulsion, ou par une polymérisation en dispersion.

8. Procédé selon l'une quelconque des revendications précédentes, **caractérisé en ce que** la température de transition vitreuse $T_G$ des particules fonctionnalisées est supérieure à la température de transformation lors de la préparation des masses autoadhésives réticulées, en particulier supérieure à la température de compoundage, de revêtement et le cas échéant de séchage des masses autoadhésives après le revêtement.

9. Procédé selon l'une quelconque des revendications précédentes, **caractérisé en ce que** les particules fonctionnalisées sont sphériques, en particulier en forme de billes.

10. Procédé selon l'une quelconque des revendications précédentes, **caractérisé en ce que** les particules fonctionnalisées sont au moins en partie utilisées sous forme de particules creuses et/ou de particules à noyau-coquille.

11. Procédé selon l'une quelconque des revendications précédentes, **caractérisé en ce que** les trois dimensions spatiales des particules fonctionnalisées présentent à chaque fois une extension qui n'est pas supérieure à 100 nm, plus particulièrement pas supérieure à 90 nm.

12. Procédé selon l'une quelconque des revendications précédentes, **caractérisé en ce que** les particules fonctionnalisées sont utilisées dans une plage de concentration de 0,1 à 15% en poids, en particulier de 0,1 à 5% en poids, de manière particulièrement préférée de 0,1 à 1,5% en poids, par rapport au polymère.

13. Procédé selon l'une quelconque des revendications précédentes, **caractérisé en ce que** la transformation des groupes fonctionnels Z en groupes fonctionnels X et la réaction avec les groupes fonctionnels Y se déroulent simultanément.

14. Procédé selon l'une quelconque des revendications précédentes, **caractérisé en ce qu'**il s'agit, pour la transformation des groupes Z en groupes X, d'une élimination de groupes de protection ou d'un déblocage.

15. Mélange de polymères comprenant au moins un polymère et au moins un type de particules fonctionnalisées,

- où le polymère présente des centres réactifs, en particulier des groupes fonctionnels Y,
- où les particules fonctionnalisées présentent au moins une unité de base polymère, l'unité de base polymère à base de monomères comprenant au moins un type de monomères, dont les monomères présentent au moins un type de groupes fonctionnels Z, qui n'entrent pas en réaction avec les centres réactifs du polymère dans les conditions de préparation et de transformation du polymère et/ou de la masse autoadhésive non réticulée,
- où les groupes fonctionnels Z peuvent être transformés par alimentation d'énergie en groupes fonctionnels X, qui sont en mesure d'entrer en réaction avec les centres réactifs du polymère dans des conditions de procédé appropriées.

**1. Compounding**
**2. Beschichten**
**3. Vernetzen**

Haftklebemassenformulierung          mod. Füllstoff

vernetzte
Haftklebemasse

## Fig. 1

**Deblockierung**

)–Z                  )–X

## Fig. 2

**Vernetzen**

)–X    Y–{              )–X—Y—{

## Fig. 3

$\blacksquare = -R^{\#}R^{\#\#}R^{\#\#\#}C-X^{\#}$

$\blacktriangleright = -R^{\sim}R^{\sim\sim}R^{\sim\sim\sim}C-Y^{\sim}$

$\blacktriangleleft\blacktriangleright = Y^{\sim}-R^{b^{\cdot}}-Y^{\sim}$

"Schloss"    "Schlüssel"

"Schlüssel"    "Schloss"

"Schloss"    "Schlüssel"

**Fig. 4**

"Schloss"    "Schlüssel"

$\blacktriangleleft = -R^{\S}R^{\S\S}R^{\S\S\S}C-X^{\S}$

$\langle M \rangle$ = Metall (elementar, Metallsalz oder Metallkomplex)

**Fig. 5**

**Fig. 6**

7.1

7.2

7.3

7.4

7.5

7.6

## Fig. 7

1.1

1.2

1.3

RW

X

BW

## Fig. 8

Fig. 9

**Fig. 10**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060205835 A
- US 4710536 A
- EP 1083204 B1
- US 20070267133 A1
- DE 10015981 A1
- US 6417267 B1
- JP 8053596 A
- WO 2006029407 A2
- US 20050129936 A1
- EP 1532182 A1
- EP 1676870 A1
- US 20060035087 A1
- US 20060204528 A1
- WO 2007024838 A
- DE 102005022782 A1
- US 6168913 B
- US 6147159 A
- US 6114493 A
- DE 10148731 A1
- DE 102005022782 A
- US 5510443 A

**In der Beschreibung aufgeführte Nicht-Patentliteratur**

- **G. Heinrich ; M. Klüppel.** *Adv. Polym. Sci.,* 2002, vol. 160, 1-44
- **M. Pahl ; W. Gleißle ; H.-M. Laun.** Praktische Rheologie der Kunststoffe und Elastomere. VDI Verlag, 1995, 191f
- **R. I. Tanner.** Engineering Rheology. Oxford University Press, 2000, 523f
- **S. Kirsch ; M. Kutschera ; N.-Y. Choi ; T. Frechen.** *J. Appl. Pol. Sci.,* 2006, vol. 101, 1444-1455
- **V. D. McGinniss.** Encyclopedia of Polymer Science and Engineering. Wiley, 1986, vol. 4, 418ff
- **E. B. Flint ; K. S. Suslick.** *Science,* 1991, vol. 253, 1397ff
- **W. Gleißle.** Rheol. Acta. 1982, vol. 21, 484-487
- **M. Pahl ; W. Gleißle ; H.-M. Laun.** Praktische Rheologie der Kunststoffe und Elastomere. VDI Verlag, 1995, 320ff
- **P. A. Lovell ; M. S. El-Aasser.** Emulsion Polymerization and Emulsion Polymers. John Wiley & Sons, 1997
- **T.W. Greene ; P.G.M. Wuts.** Protective Groups in Organic Synthesis. John Wiley & Sons, Inc, 1999
- **D. Philp ; J. F. Stoddard.** *Angew. Chem.,* 1996, vol. 108, 1242-1286
- **C. Schmuck ; W. Wienand.** *Angew. Chem.,* 2001, vol. 113, 4493-4499
- **M. Rehahn.** *Acta Polym.,* 1998, vol. 49, 201-224
- **B. G. G. Lohmeijer ; U. S. Schubert.** *J. Polym. Sci. A Polym. Chem.,* 2003, vol. 41, 1413-1427